(19) Europäisches Patentamt
European Patent Office
Office européen des brevets

(11) **EP 4 050 066 A1**

(12) **EUROPEAN PATENT APPLICATION**
published in accordance with Art. 153(4) EPC

(43) Date of publication:
**31.08.2022 Bulletin 2022/35**

(21) Application number: **20879479.2**

(22) Date of filing: **23.10.2020**

(51) International Patent Classification (IPC):
***C08L 1/00*** (2006.01) ***C08L 1/02*** (2006.01)
***C08L 1/12*** (2006.01) ***C08L 23/08*** (2006.01)
***C08L 29/04*** (2006.01) ***C08L 53/02*** (2006.01)
***C08L 77/00*** (2006.01) ***C08L 77/02*** (2006.01)
***C08L 77/06*** (2006.01) ***C08L 71/12*** (2006.01)
***C08K 3/04*** (2006.01)

(52) Cooperative Patent Classification (CPC):
**C08K 3/04; C08L 1/00; C08L 1/02; C08L 1/12; C08L 23/08; C08L 29/04; C08L 53/02; C08L 71/12; C08L 77/00; C08L 77/02; C08L 77/06**

(86) International application number:
**PCT/JP2020/039985**

(87) International publication number:
**WO 2021/080010 (29.04.2021 Gazette 2021/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.10.2019 JP 2019193283**
**20.02.2020 JP 2020027298**
**10.06.2020 JP 2020100889**
**13.07.2020 JP 2020119904**

(71) Applicant: **Asahi Kasei Kabushiki Kaisha**
**Tokyo 1000006 (JP)**

(72) Inventors:
- **TANIMOTO, Kazuhiro**
**Tokyo 100-0006 (JP)**
- **MIYOSHI, Takaaki**
**Tokyo 100-0006 (JP)**

(74) Representative: **D Young & Co LLP**
**120 Holborn**
**London EC1N 2DY (GB)**

# (54) POLYAMIDE-CELLULOSE RESIN COMPOSITION

(57) Provided are a resin composition in which there is a particularly good achievement of low specific gravity, high rigidity, and a low coefficient of linear expansion, a resin composition in which low specific gravity, high rigidity, a low coefficient of thermal expansion, and low water absorbency are all achieved, are a resin composition which has low specific gravity and in which there is a good achievement of the contradictory properties of high toughness and low thermal expansion. Provided in an embodiment is a resin composition containing a first polymer forming a continuous phase, a second polymer forming a dispersed phase, and cellulose, wherein the first polymer is a polyamide and the second polymer is at least one polymer selected from the group consisting of crystalline resins having a melting point of at least 60 °C and non-crystalline resins having a glass transition temperature of at least 60 °C.

FIG. 1

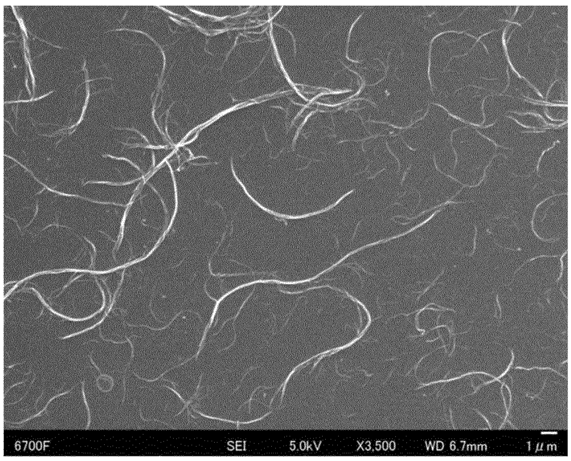


EP 4 050 066 A1

## Description

FIELD

The present invention relates to a resin composition comprising polyamide and cellulose.

BACKGROUND

Thermoplastic resins are light and have excellent processing characteristics, and are therefore widely used for a variety of purposes including automobile members, electrical and electronic parts, business machine housings, precision parts and the like. In the automobile industry in particular, metal members are increasingly being replaced by resin members in order to improve fuel efficiency. Development of electric vehicles has begun to increase in recent years with the rapid and accelerating shift toward electric vehicles primarily in regions such as China and Europe. Weight reduction of vehicles is becoming an urgent issue in order to extend the cruising distance for electric vehicles. Replacing metal members with resin members is an effective strategy for reducing automobile weight, and since significant reduction in weight can be achieved when large-volume exterior parts in particular are converted to resins, this is being increasingly implemented by automobile manufacturers.

Polypropylene-based materials are commonly employed as resin exterior parts primarily for bumpers. The use of polyamide/polyphenylene ether-based alloy materials such as described in PTL 1 for fender parts is being investigated from the viewpoint of rigidity and heat resistance. In order to further improve dimensional precision, PTLs 2 and 3 propose adding an inorganic filler, for example.

[CITATION LIST]

[PATENT LITERATURE]

[PTL 1] International Patent Publication No. WO2002/094936
[PTL 2] International Patent Publication No. WO2006/077818
[PTL 3] Japanese Unexamined Patent Publication No. 2006-199748

SUMMARY

[TECHNICAL PROBLEM]

Because polypropylene-based materials have insufficient room temperature rigidity and high temperature rigidity, they are unsuited for laminar vertical parts (such as door panels or fenders). In addition, while polyamide/polyphenylene ether-based alloy materials have rigidity allowing them to be used as fenders, the high thermal expansion coefficients of the alloy materials (generally about 90 ppm/K) are an issue.

Automobiles are designed to travel in a wide variety of traveling environments. For example, the difference in surface temperature of parts may differ by about 100°C between extreme cold regions and deserts. In terms of the coefficient of thermal expansion of the aforementioned alloy materials, a part with a length of 70 cm, for example. may be calculated to undergo dimension fluctuation of even up to about 6 mm. In order to avoid contact between adjacent parts due to thermal expansion in such cases, a gap of several mm must be provided in advance. This is a major issue for passenger vehicles in terms of design.

Addition of an inorganic filler has been considered as a technique for lowering the coefficient of thermal expansion. When an inorganic filler with a high specific gravity is added, however, materials obtained by this technique exhibit less of the effect of weight reduction by using resin members as parts, while also exhibiting lower impact strength and generating warping or anisotropy in the product, and also introduce the new problem of impaired stability of the physical properties, for which reasons this method is not widely employed at the current time.

Horizontal automobile parts (such as bonnets or roofs), on the other hand, are larger and require further improved thermal expansion and anisotropy, and therefore in practice there has been little progress in substituting these metal members with resin members.

The use of resins reinforced using cellulose such as cellulose nanofibers (CNF) as fillers has also been investigated in recent years. Cellulose-reinforced polyamides, and particularly cellulose nanofiber-reinforced polyamides, have the advantage of low specific gravity, high rigidity (particularly high rigidity at high temperature) and low coefficient of thermal expansion, but further improvement in their performance is desired. Cellulose nanofiber-reinforced polyamides

are also problematic because of their high water absorption, despite their low specific gravity, high rigidity and low coefficient of thermal expansion. High water absorption of a cellulose-reinforced resin can lead to reduced physical properties and deformation of the molded body as dimensional change takes place due to water absorption. In other words, no material has yet been obtained at the current time that simultaneously exhibits low specific gravity, high rigidity, low coefficient of thermal expansion and low water absorption. For replacement of metal members with resin members, there is a need for resin compositions having low specific gravity and also satisfactory levels of both of the conflicting properties of high toughness and low thermal expansion, but such a resin composition has not yet been obtained at the current time.

It is an object of one aspect of the invention to solve this problem by providing a resin composition having low specific gravity and very satisfactory levels of high rigidity and low linear expansion coefficient. It is an object of another aspect of the invention to provide a resin composition simultaneously exhibiting low specific gravity, high rigidity, a low coefficient of thermal expansion and low water absorption. It is an object of yet another aspect of the invention to provide a resin composition that has low specific gravity, or low specific gravity and low anisotropy of physical properties, while also having high levels of both of the conflicting properties of high toughness and low thermal expansion.

[SOLUTION TO PROBLEM]

Specifically, the present disclosure encompasses the following aspects.

<First embodiment>

[1] A resin composition comprising a first polymer that forms a continuous phase, a second polymer that forms a dispersed phase and cellulose, wherein:

the first polymer is a polyamide, and
the second polymer is at least one polymer selected from the group consisting of crystalline resins with a melting point of 60°C or higher and amorphous resins with a glass transition point of 60°C or higher.

[2] A resin composition comprising a polyamide, a polyphenylene ether, and cellulose nanofibers, wherein:

the polyamide forms a continuous phase and
the polyphenylene ether forms a dispersed phase.

[3] The resin composition according to aspect 2, wherein the amount of the polyphenylene ether is 30 parts by mass to 150 parts by mass with respect to 100 parts by mass of the polyamide.
[4] The resin composition according to aspect 2 or 3, wherein at least a portion of the polymer in the dispersed phase has an acidic functional group.
[5] The resin composition according to any one of aspects 2 to 4, wherein the polyphenylene ether is present as dispersed particles having a number-mean particle size of 3 $\mu$m or smaller in the continuous phase of the polyamide.
[6] The resin composition according to any one of aspects 2 to 5, wherein:

the polyphenylene ether is present as dispersed particles in the continuous phase of the polyamide, and
the dispersed particles have a volume ratio of no greater than 30 vol% for particles with particle diameters of 1 $\mu$m or larger.

[7] The resin composition according to any one of aspects 2 to 6, which further comprises an elastomer.
[8] The resin composition according to aspect 7, wherein the polyphenylene ether forms a continuous phase and the elastomer forms a dispersed phase, inside the dispersed phase of the polyphenylene ether.
[9] The resin composition according to aspect 7 or 8, wherein the elastomer is one or more selected from the group consisting of ethylene-$\alpha$-olefin copolymers, block copolymers of aromatic vinyl compounds and conjugated diene compounds, and hydrogenated block copolymers of aromatic vinyl compounds and conjugated diene compounds.
[10] The resin composition according to any one of aspects 7 to 9, wherein the elastomer is an acid anhydride-modified elastomer.
[11] The resin composition according to any one of aspects 7 to 10, wherein the elastomer is a mixture of an elastomer with an acidic functional group and an elastomer without an acidic functional group.
[12] The resin composition according to any one of aspects 2 to 11, wherein greater than 50 mass% of the cellulose

nanofibers are present in the polyamide phase.

[13] The resin composition according to any one of aspects 2 to 12, wherein at the center section of a multipurpose test piece of the resin composition molded according to ISO294-1, the degree of orientation of the cellulose nanofibers as determined by the small angle X-ray scattering method is 0.45 or lower.

[14] The resin composition according to any one of aspects 2 to 13, wherein the amount of the cellulose nanofibers is 0.1 to 30 mass% with respect to 100 mass% of the resin composition.

[15] The resin composition according to any one of aspects 2 to 14, wherein the cellulose nanofibers are hydrophobized cellulose nanofibers.

[16] The resin composition according to aspect 15, wherein the hydrophobized cellulose nanofibers are acetylated cellulose nanofibers.

[17] The resin composition according to any one of aspects 2 to 16, wherein the cellulose nanofibers have a weight-average molecular weight (Mw) of 100,000 or greater, and a ratio (Mw/Mn) between the weight-average molecular weight (Mw) and number-average molecular weight (Mn) of 6 or lower.

[18] The resin composition according to any one of aspects 2 to 17, wherein the cellulose nanofibers have an alkali-soluble polysaccharide average content of 12 mass% or lower and a degree of crystallinity of 60% or greater.

[19] The resin composition according to any one of aspects 1 to 18, wherein the polyamide is at least one selected from the group consisting of polyamide 6, polyamide 10, polyamide 11, polyamide 12, polyamide 66, polyamide 610, polyamide 612, polyamide 6/61, polyamide 66/61 and polyamide 61, and their mixtures.

[20] The resin composition according to any one of aspects 1 to 19, wherein the viscosity number ($V_N$) of the polyamide is 200 or lower, as measured in 96 mass% sulfuric acid according to ISO307.

[21] The resin composition according to any one of aspects 1 to 20, which further comprises a saponified ethylene-vinyl ester-based copolymer.

[22] The resin composition according to any one of aspects 1 to 21, which further comprises an antioxidant.

[23] The resin composition according to any one of aspects 1 to 22, which further comprises a coloring agent.

[24] The resin composition according to any one of aspects 1 to 23, wherein the coefficient of thermal expansion at 20°C to 100°C is 50 ppm/K or lower.

[25] A molded body comprising a resin composition according to any one of aspects 1 to 24.

[26] An automobile exterior part comprising a resin composition according to any one of aspects 1 to 24.

<Second embodiment>

[1] A resin composition comprising:

a polyamide,
one or more elastomers selected from the group consisting of aromatic vinyl compound-conjugated diene compound block copolymers and their derivatives, and
cellulose,
wherein the polyamide and the elastomer are in phase separation, and
greater than 50 mass% of the cellulose is present in the polyamide phase.

[2] The resin composition according to aspect 1, wherein the polyamide forms a continuous phase, and the elastomer forms a dispersed phase.

[3] The resin composition according to aspect 1 or 2, wherein the polyamide is at least one selected from the group consisting of polyamide 6, polyamide 10, polyamide 11, polyamide 12, polyamide 66, polyamide 610, polyamide 612, polyamide 6/61, polyamide 66/61 and polyamide 61, and their mixtures.

[4] The resin composition according to any one of aspects 1 to 3, wherein the viscosity number ($V_N$) of the polyamide is 200 or lower, as measured in 96 mass% sulfuric acid according to ISO307.

[5] The resin composition according to any one of aspects 1 to 4, wherein the amount of elastomer is 1 to 50 parts by mass with respect to 100 parts by mass of the polyamide.

[6] The resin composition according to any one of aspects 1 to 5, wherein the derivative includes an acid-modified aromatic vinyl compound-conjugated diene compound block copolymer.

[7] The resin composition according to aspect 6, wherein the elastomer is a mixture of a polymer with an acidic functional group and a polymer without an acidic functional group.

[8] The resin composition according to any one of aspects 1 to 7, wherein:

the elastomer is present as dispersed particles in the polyamide continuous phase, and

the dispersed particles have a number-mean particle size of 3 μm or smaller.

[9] The resin composition according to any one of aspects 1 to 8, wherein:

the elastomer is present as dispersed particles in the polyamide continuous phase, and
the dispersed particles have a volume ratio of no greater than 30 vol% for particles with particle diameters of 1 μm or larger.

[10] The resin composition according to any one of aspects 1 to 9, wherein the amount of cellulose is 0.1 to 30 mass% with respect to 100 mass% of the resin composition.
[11] The resin composition according to any one of aspects 1 to 10, wherein the cellulose is cellulose nanofibers with diameters of 50 to 1000 nm and a length (L)/diameter (D) ratio of 30 or greater, cellulose nanocrystals with diameters of 100 nm or smaller and a length (L)/diameter (D) ratio of less than 30, or cellulose microfibers with diameters of greater than 1 μm and up to 50 μm, or a mixture of two or more of the same.
[12] The resin composition according to aspect 11, wherein the amount of the cellulose microfibers is 0.1 to 20 mass% with respect to 100 mass% of the resin composition.
[13] The resin composition according to any one of aspects 1 to 12, wherein the cellulose is hydrophobized cellulose.
[14] The resin composition according to any one of aspects 1 to 13, wherein the hydrophobized cellulose is acetylated cellulose.
[15] The resin composition according to any one of aspects 1 to 14, which further comprises a conductive carbon-based filler.
[16] The resin composition according to any one of aspects 1 to 15, which further comprises an antioxidant.
[17] The resin composition according to any one of aspects 1 to 16, which further comprises a coloring agent.
[18] The resin composition according to any one of aspects 1 to 17, wherein the coefficient of thermal expansion at 20°C to 100°C is 60 ppm/K or lower.
[19] A molded body comprising a resin composition according to any one of aspects 1 to 18.
[20] An automobile exterior part comprising a resin composition according to any one of aspects 1 to 18.

<Third embodiment>

[1] A resin composition comprising:

a polyamide,
a saponified ethylene-vinyl ester-based copolymer, and
cellulose.

[2] The resin composition according to aspect 1, wherein the amount of the saponified ethylene-vinyl ester-based copolymer is 1 to 100 parts by mass with respect to 100 parts by mass of the polyamide.
[3] The resin composition according to aspect 1 or 2, wherein the amount of the saponified ethylene-vinyl ester-based copolymer is 50 to 5000 parts by mass with respect to 100 parts by mass of the cellulose.
[4] The resin composition according to any one of aspects 1 to 3, wherein the amount of cellulose is 0.1 to 30 mass% with respect to 100 mass% of the resin composition.
[5] The resin composition according to any one of aspects 1 to 4, wherein the polyamide forms a continuous phase.
[6] The resin composition according to any one of aspects 1 to 5, wherein the polyamide is at least one selected from the group consisting of polyamide 6, polyamide 10, polyamide 11, polyamide 12, polyamide 66, polyamide 610, polyamide 612, polyamide 6/61, polyamide 66/61 and polyamide 61, and their mixtures.
[7] The resin composition according to any one of aspects 1 to 6, wherein the viscosity number ($V_N$) of the polyamide is 200 or lower, as measured in 96 mass% sulfuric acid according to ISO307.
[8] The resin composition according to any one of aspects 1 to 7, which further comprises an elastomer.
[9] The resin composition according to aspect 8, wherein the elastomer is one or more selected from the group consisting of ethylene-α-olefin copolymers, block copolymers of aromatic vinyl compounds and conjugated diene compounds, and hydrogenated block copolymers of aromatic vinyl compounds and conjugated diene compounds.
[10] The resin composition according to aspect 8 or 9, wherein the amount of elastomer is 1 to 50 parts by mass with respect to 100 parts by mass of the polyamide.
[11] The resin composition according to any one of aspects 8 to 10, wherein the elastomer is an acid anhydride-modified elastomer.

[12] The resin composition according to any one of aspects 8 to 11, wherein the elastomer is a mixture of a polymer with an acidic functional group and a polymer without an acidic functional group.

[13] The resin composition according to any one of aspects 1 to 12, wherein the proportion of vinyl alcohol units is 60 mol% or greater with respect to 100 mol% of the total monomer units composing the saponified ethylene-vinyl ester-based copolymer.

[14] The resin composition according to any one of aspects 1 to 13, wherein the cellulose is cellulose nanofibers with diameters of 50 to 1000 nm and a length (L)/diameter (D) ratio of 30 or greater, cellulose nanocrystals with diameters of 100 nm or smaller and a length (L)/diameter (D) ratio of less than 30, or cellulose microfibers with diameters of greater than 1 μm and up to 50 μm, or a mixture of two or more of the same.

[15] The resin composition according to aspect 14, wherein the amount of the cellulose microfibers is 0.1 to 20 mass% with respect to 100 mass% of the resin composition.

[16] The resin composition according to any one of aspects 1 to 15, wherein the cellulose is hydrophobized cellulose.

[17] The resin composition according to aspect 16, wherein the hydrophobized cellulose is acetylated cellulose.

[18] The resin composition according to any one of aspects 1 to 17, which further comprises polyphenylene ether.

[19] The resin composition according to any one of aspects 1 to 18, which further comprises an antioxidant.

[20] The resin composition according to any one of aspects 1 to 19, which further comprises a coloring agent.

[21] The resin composition according to any one of aspects 1 to 20, wherein the coefficient of linear thermal expansion at 20°C to 100°C is 70 ppm/K or lower.

[22] The resin composition according to any one of aspects 1 to 21, wherein the tensile fracture strain is 10% or greater.

[23] A molded body comprising a resin composition according to any one of aspects 1 to 22.

[24] An automobile exterior part comprising a resin composition according to any one of aspects 1 to 22.

[ADVANTAGEOUS EFFECTS OF INVENTION]

According to one aspect of the invention it is possible to provide a resin composition with very satisfactory levels of low specific gravity, high rigidity and low coefficient of linear expansion, according to another aspect of the invention it is possible to provide a resin composition simultaneously exhibiting low specific gravity, high rigidity, a low coefficient of thermal expansion and low water absorption, and according to yet another aspect of the invention it is possible to provide a resin composition that has low specific gravity, or low specific gravity and low anisotropy of physical properties, while also having high levels of both of the conflicting properties of high toughness and low thermal expansion.

BRIEF DESCRIPTION OF DRAWINGS

Fig. 1 is a microscope image showing an example of cellulose nanofibers.

Fig. 2 is a microscope image showing an example of cellulose nanocrystals.

Fig. 3 is a microscope image showing an example of cellulose microfibers.

Fig. 4 is an illustration of a method for calculating the IR index 1730 and IR index 1030.

Fig. 5 is an illustration of a method for calculating the average degree of substitution of hydroxyl groups in the cellulose.

Fig. 6 is a schematic diagram showing the shape of a fender fabricated for fender evaluation in the Examples and Comparative Examples.

Fig. 7 is a diagram showing the location where a test piece was taken out for fender evaluation in the Examples and Comparative Examples.

DESCRIPTION OF EMBODIMENTS

An embodiment of the invention (hereunder referred to as "the embodiment") will now be explained as an example, with the understanding that the invention is not in any way limited to this embodiment. Unless otherwise specified, the property values mentioned throughout the present disclosure are values measured by the methods described herein under "Examples" or methods known to be equivalent to them by those skilled in the art.

<Resin composition>

The embodiment encompasses the following first to third embodiments.

The first embodiment comprises a first polymer that forms a continuous phase, a second polymer that forms a dispersed phase (and is therefore a different polymer from the first polymer), and cellulose. According to one aspect, the first polymer is a polyamide, and the second polymer is at least one polymer selected from the group consisting of

crystalline resins with a melting point of 60°C or higher and amorphous resins with a glass transition point of 60°C or higher. This resin composition allows very satisfactory levels of low specific gravity, high rigidity and low coefficient of thermal expansion to all be obtained.

Throughout the disclosure, according to one aspect, a crystalline resin is a resin that has an endothermic peak in crystal melting with temperature increase from 23°C at a temperature-elevating rate of 10°C/min, using a differential scanning calorimeter (DSC).

Also throughout the disclosure, according to one aspect, an amorphous resin is a resin that does not have an endothermic peak in crystal melting with temperature increase from 23°C at a temperature-elevating rate of 10°C/min, using a differential scanning calorimeter (DSC).

Throughout the disclosure, according to one aspect, "elastomer" means a substance (specifically, a natural or synthetic polymer substance) that is an elastic solid at room temperature (23°C). According to one aspect, "elastic solid" means that the storage modulus at 23°C, 10 Hz, measured based on dynamic viscoelasticity, is 1 MPa to 100 MPa.

According to one aspect of the first embodiment, the resin composition comprises a polyamide, polyphenylene ether and cellulose nanofibers. The polyamide and polyphenylene ether are in phase separation in the resin composition, with the polyamide forming a continuous phase and the polyphenylene ether forming a dispersed phase. Such a phase structure counteracts the effect of reducing water absorption by the high-water-absorbing polyphenylene ether, which is a disadvantage of cellulose nanofiber-reinforced polyamides, but without impairing the original properties of the polyamide (particularly high heat resistance and low coefficient of linear expansion), and can also satisfactorily exhibit the advantage of the high rigidity (especially high rigidity in the high temperature range) and low specific gravity of the polyphenylene ether. The resin composition therefore has low specific gravity, high rigidity, a low coefficient of thermal expansion and low water absorption.

According to one aspect, at least a portion of the polymer in the dispersed phase (for example, polyphenylene ether) has an acidic functional group. With the dispersed phase, the acidic modified groups of the polyphenylene ether react with the amino ends of the polyamide, moderately improving compatibility between the continuous phase and dispersed phase, thus reducing the dispersion size of the dispersed phase while inhibiting interfacial separation between the continuous phase and dispersed phase. This is advantageous from the viewpoint of even more satisfactorily exhibiting the aforementioned advantage provided by the copresence of the continuous phase and dispersed phase. Since cellulose (such as cellulose nanofibers) naturally has higher affinity with polyamides than polyphenylene ether, for example, it is present primarily in the polyamide phase. This is thought to be a result of hydrogen bonding between the cellulose and polyamide. Cellulose (especially cellulose nanofibers) also contributes to the low coefficient of linear expansion and high rigidity (especially high rigidity in the high temperature range) of the resin composition. With the resin composition of the first embodiment, therefore, it is possible to provide a resin composition that uses cellulose (especially cellulose nanofibers), while still simultaneously having high rigidity, a low coefficient of thermal expansion, low specific gravity and low water absorption.

The second embodiment provides a resin composition comprising a polyamide, one or more elastomers selected from the group consisting of aromatic vinyl compound-conjugated diene compound block copolymers and their derivatives (also referred to hereunder as "elastomer of the second embodiment"), and cellulose. According to one aspect, the polyamide and elastomer are in phase separation. According to one aspect, greater than 50 mass% of the cellulose is present in the polyamide phase. According to a typical aspect, the resin composition has a two-phase structure of a polyamide phase and an elastomer phase. While this does not exclude the resin composition of the second embodiment from having three or more phases, the present disclosure will primarily deal with a resin composition having a two-phase structure with a polyamide phase and elastomer phase, as a typical aspect of the second embodiment. The resin composition of the second embodiment can exhibit high toughness and low linear expansibility. According to one aspect, the resin composition can exhibit a high flow property to also allow production of large molded bodies, and can provide a molded body having substantially no partial strength defects.

The phase morphology of the resin composition of the second embodiment may be a form in which the polyamide forms a continuous phase and the elastomer forms a dispersed phase, a form in which the polyamide forms a dispersed phase and the elastomer forms a continuous phase, or a form in which both the polyamide and elastomer form a continuous phase (i.e. a co-continuous phase structure), but a form in which the polyamide forms a continuous phase and the elastomer forms a dispersed phase is preferred from the standpoint of exhibiting satisfactory heat resistance as a composition, and obtaining both high rigidity and low linear expansion.

Since cellulose is generally hydrophilic, it has high affinity with polyamides and can even exhibit affinity for polymers that are at least partially acid-modified (that is, at least a portion has an acidic functional group). Micronized cellulose can potentially become entangled with high-viscosity elastomer components in some cases. Hydrophobically-treated cellulose such as described below, which has reduced hydrophilicity, is known to differ in its location in a resin composition depending on the kneading conditions.

In regard to the proportion of cellulose (cellulose nanofibers, according to one specific aspect) present in the polyamide phase among the cellulose in the resin composition (cellulose nanofibers, according to one specific aspect)

of the first embodiment, and the proportion of cellulose in the polyamide phase among the cellulose in the resin composition of the second embodiment, the lower limit for the proportion is preferably greater than 50 mass%, more preferably 60 mass%, even more preferably 70 mass%, yet more preferably 75 mass%, even yet more preferably 80 mass% and most preferably 100 mass% (that is, essentially all of the cellulose is present in the polyamide phase). If the proportion is within this range, then it will be possible to obtain more satisfactory levels for both low thermal expansion and high rigidity according to the first embodiment, or to obtain all of the conflicting properties of low thermal expansion, low anisotropy and high toughness according to the second embodiment. The upper limit for the proportion may be 99 mass% or 98 mass%, for example, from the viewpoint of facilitating production of the resin composition.

An example of a method of confirming that the cellulose (cellulose nanofibers, according to one specific aspect) in the resin composition according to the first embodiment and the cellulose in the resin composition according to the second embodiment is present at greater than 50 mass% in the polyamide phase, is confirmation by photographing the resin composition with a transmission electron microscope and confirming the area of cellulose in the polyamide phase and the area of cellulose present in the other phase (for example, the phase of the polyphenylene ether of the first embodiment or the elastomer of the second embodiment). This method is useful when the abundance ratio of cellulose in the polyamide phase and the other phase differs significantly and quantification is unnecessary. When quantification is necessary, on the other hand, the resin composition may be sliced to a thickness of about 0.1 to 2 μm to obtain a film-like sample. The sample is immersed in a solvent that dissolves the other phase components (such as the polyphenylene ether component or elastomer component) but does not dissolve the polyamide (for example, a solvent such as chloroform or toluene), to elute out the other phase, after which the eluate is concentrated and then subjected to ultracentrifugation, the cellulose is separated from the other phase and subsequently rinsed with the solvent repeatedly at least 3 times and dried, and then the amount of cellulose in the other phase is measured.

The third embodiment provides a resin composition comprising a polyamide, a saponified ethylene-vinyl ester-based copolymer and cellulose. Since the resin composition of the third embodiment has cellulose stably microdispersed in the polyamide phase, it can exhibit a low coefficient of linear thermal expansion even when molded into a large compact, for example. The resin composition can exhibit high tensile fracture strain (high toughness) due to the contribution of the saponified ethylene-vinyl ester-based copolymer.

Since the resin composition of the embodiment has such excellent properties it can be suitably used for various types of molded bodies and especially large-sized parts (such as automobile exterior parts).

The components to be used for the embodiment will now be described in detail.

<First polymer (polyamide)>

The polyamide to be used for the first to third embodiments may be a polycondensate of a dibasic acid and a diamine, a cyclic lactam ring-opening polymer, an aminocarboxylic acid polycondensate or any copolymer or blend of the same. More specifically, aliphatic polyamides such as polyamide 6, polyamide 10, polyamide 11, polyamide 12, polyamide 46, polyamide 66, polyamide 610 and polyamide 612, aromatic polyamide resins such as polymetaxylene adipamide (polyamide MXD6), polyhexamethylene terephthalamide (polyamide 6T) and polyhexamethylene isophthalamide (polyamide 61), and copolymers and blends such as polyamide 6/61, polyamide 66/61, polyamide 6/6T, polyamide 66/6T, polyamide 6/66/6T, polyamide 6/66/61, polyamide 9T and polyamide 10T, may be used. Particularly preferred for use among these are polyamide 6, polyamide 10, polyamide 11, polyamide 12, polyamide 66, polyamide 610, polyamide 612, polyamide 6/61, polyamide 66/61, polyamide 61, and their mixtures. More preferred are polyamide 6, polyamide 66, polyamide 610, polyamide 612, polyamide 6I and their mixtures.

The terminal carboxyl group concentration of the polyamide for the first to third embodiments is not particularly restricted, but the lower limit is preferably 5 μmol/g, 10 μmol/g, 20 μmol/g, 25 μmol/g or 30 μmol/g. The upper limit for the terminal carboxyl group concentration is preferably 150 μmol/g, 100 μmol/g or 80 μmol/g.

The terminal amino group concentration of the polyamide for the first to third embodiments is not particularly restricted, but the lower limit is preferably 20 μmol/g or 30 μmol/g, and the upper limit is preferably 150 μmol/g, 100 μmol/g or 80 μmol/g.

The ratio of carboxy-terminal groups to total terminal groups ([COOH]/[total terminal groups]) for the polyamide of the first to third embodiments is preferably 0.20 to 0.95. The lower limit for the carboxy-terminal group ratio is more preferably 0.3, even more preferably 0.35, yet more preferably 0.40 and most preferably 0.45. The upper limit for the carboxy-terminal group ratio is more preferably 0.90, even more preferably 0.85 and most preferably 0.80. The carboxy-terminal group ratio is preferably 0.20 or greater from the viewpoint of dispersibility of the cellulose in the resin composition, and it is preferably no greater than 0.95 from the viewpoint of the color tone of the obtained resin composition.

The method used to adjust the terminal group concentration of the polyamide may be a publicly known method. For example, the method may be addition of a terminal group adjuster that reacts with the terminal groups, such as a diamine compound, monoamine compound, dicarboxylic acid compound, monocarboxylic acid compound, acid anhydride, monoisocyanate, monoacid halide, monoester or monoalcohol, to the polymerization solution, so as to result in

the prescribed terminal group concentration during polymerization of the polyamide.

Examples of terminal group adjusters that react with terminal amino groups include aliphatic monocarboxylic acids such as acetic acid, propionic acid, butyric acid, valeric acid, caproic acid, caprylic acid, lauric acid, tridecanoic acid, myristic acid, palmitic acid, stearic acid, pivalic acid and isobutyric acid; alicyclic monocarboxylic acids such as cyclohexanecarboxylic acid; aromatic monocarboxylic acids such as benzoic acid, toluic acid, $\alpha$-naphthalenecarboxylic acid, $\beta$-naphthalenecarboxylic acid, methylnaphthalenecarboxylic acid and phenylacetic acid; and mixtures of any selected from among the foregoing. Among these, from the viewpoint of reactivity, stability of capped ends and cost, one or more terminal group adjusters selected from among acetic acid, propionic acid, butyric acid, valeric acid, caproic acid, caprylic acid, lauric acid, tridecanoic acid, myristic acid, palmitic acid, stearic acid and benzoic acid are preferred, with acetic acid being most preferred.

Examples of terminal group adjusters that react with terminal carboxyl groups include aliphatic monoamines such as methylamine, ethylamine, propylamine, butylamine, hexylamine, octylamine, decylamine, stearylamine, dimethylamine, diethylamine, dipropylamine and dibutylamine; alicyclic monoamines such as cyclohexylamine and dicyclohexylamine; aromatic monoamines such as aniline, toluidine, diphenylamine and naphthylamine; and any mixtures of the foregoing. Among these, from the viewpoint of reactivity, boiling point, capped end stability and cost, it is preferred to use one or more terminal group adjusters selected from the group consisting of butylamine, hexylamine, octylamine, decylamine, stearylamine, cyclohexylamine and aniline.

The concentration of the amino-terminal groups and carboxy-terminal groups is preferably determined from the integral of the characteristic signal corresponding to each terminal group, according to $^1$H-NMR, from the viewpoint of precision and convenience. The recommended method for determining the terminal group concentration is, specifically, the method described in Japanese Unexamined Patent Publication HEI No. 7-228775. When this method is used, heavy trifluoroacetic acid is useful as the measuring solvent. The number of scans in $^1$H-NMR must be at least 300, even with measurement using a device having sufficient resolving power. Alternatively, the terminal group concentration can be measured by a titration method such as described in Japanese Unexamined Patent Publication No. 2003-055549. In order to minimize the effects of the mixed additives and lubricant, however, quantitation is preferably by $^1$H-NMR.

The polymerization degree of the polyamide is not particularly restricted, but from the viewpoint of injection moldability, the viscosity number ($V_N$) of the polyamide measured in 96 mass% sulfuric acid according to ISO307 is generally preferred to be 200 or lower. The upper limit is more preferably 180, even more preferably 150, yet more preferably 140 and most preferably 130. If it is within this range, the flow property during molding of the molded body will be adequately maintained and molding strain will be reduced, allowing anisotropy to be lowered in the practical molded article. The lower limit for the viscosity number is not particularly restricted but is preferably 50, more preferably 60, even more preferably 65 and most preferably 70, from the viewpoint of obtaining satisfactory impact resistance.

The polyamide of the embodiment may also be a mixture of several different polyamides. In the case of a mixture of several different polyamides, the property value of the polyamide is the average value for the different types.

The polymerization method for the polyamide is not particularly restricted and may be melt polymerization, interfacial polymerization, solution polymerization, bulk polymerization or solid-phase polymerization, or a combination of any of these methods. Melt polymerization is more preferred among these from the viewpoint of polymerization control.

In order to improve the heat stability of the polyamide resin, a publicly known metal stabilizer such as described in Japanese Unexamined Patent Publication HEI No. 1-163262 may be used. Particularly preferred examples of metal stabilizers include CuI, $CuCl_2$, copper acetate and cerium stearate. An alkali metal halide salt such as potassium iodide or potassium bromide may also be used. These may of course also be added in combination. The preferred content for a metal stabilizer and/or alkali metal halide salt is 0.001 to 5 parts by mass as the total with respect to 100 parts by mass of the polyamide. From the viewpoint of heat aging resistance, it is preferably above the lower limit mentioned above, while from the viewpoint of maintaining high toughness it is preferably below the upper limit.

Publicly known additives may also be added to the polyamide, in a total amount of less than 10 parts by mass with respect to 100 parts by mass of the polyamide, for example.

For the first to third embodiments, the ratio of polyamide with respect to 100 mass% of the resin composition is preferably 30 mass% or greater, 35 mass% or greater or 40 mass% or greater, from the viewpoint of satisfactorily obtaining advantages such as high heat resistance and low coefficient of linear expansion due to the polyamide phase, and preferably 90 mass% or lower, 80 mass% or lower, 70 mass% or lower or 60 mass% or lower, from the viewpoint of satisfactorily obtaining advantages due to the other components in the resin composition.

<Second polymer>

According to one aspect, the resin composition comprises a second polymer in addition to the polyamide used as the first polymer. The second polymer is a different polymer from the first polymer. According to one aspect, the second polymer is at least one polymer selected from the group consisting of crystalline resins with a melting point of 60°C or higher and amorphous resins with a glass transition point of 60°C or higher.

The crystalline resin may be a crystalline polyolefin-based resin such as polyethylene or polypropylene, a crystalline polyester-based resin such as polyethylene terephthalate, polybutylene terephthalate, polyethylene naphthalate, polylactic acid or polybutylene succinate, a crystalline polyacetal resin such as polyoxymethylene, or a saponified ethylene-vinyl ester-based copolymer. A saponified ethylene-vinyl ester-based copolymer is preferred among these from the viewpoint of obtaining high toughness. The crystalline resin may also be a saponified ethylene-vinyl ester-based copolymer of the third embodiment, for example.

According to one aspect, the melting point of the crystalline resin is 60°C or higher, preferably 100°C or higher, 150°C or higher or 180°C or higher, and preferably 350°C or lower, 300°C or lower or 280°C or lower. According to the disclosure, the melting point is the peak top temperature of the endothermic peak appearing when the temperature is increased from 23°C at a temperature-elevating rate of 10°C/min using a differential scanning calorimeter (DSC). When two or more endothermic peaks appear, it represents the peak top temperature of the peak that is furthest at the low-temperature end.

Amorphous resins include amorphous polyolefin-based resins such as polymethylenepentene and cyclic polyolefins, amorphous polyvinyl-based resins such as polystyrene and polyvinyl chloride, and polycarbonate-based resins, polyacryl-based resins, polyallylate-based resins, polysulfone-based resins, polyphenylene ether-based resins, polyphenylene sulfide-based resins, polyethersulfone-based resins, polyketone-based resins, polyphenylene ether ketone-based resins and polyimide-based resins. Polyphenylene ether-based resins are preferred among these from the viewpoint of obtaining low specific gravity and high rigidity. The amorphous resin may also be a polyphenylene ether of the first embodiment, for example.

According to one aspect, the glass transition point of the amorphous resin is 60°C or higher, preferably 100°C or higher, 150°C or higher or 180°C or higher, and preferably 350°C or lower, 300°C or lower or 280°C or lower. For the present disclosure, the glass transition point is the peak top temperature of the peak with high reduction in storage modulus and maximum loss modulus, during measurement with an applied frequency of 10 Hz while increasing the temperature from -100°C at a temperature-elevating rate of 2°C/min, using a dynamic viscoelasticity measuring apparatus. When two or more loss modulus peaks appear, it represents the peak top temperature of the peak that is furthest at the low-temperature end.

According to one aspect, the amount of the second polymer with respect to 100 parts by mass of the polyamide as the first polymer is preferably 1 parts by mass or greater, 5 parts by mass or greater or 10 parts by mass or greater, from the viewpoint of satisfactorily obtaining the advantage of the resin other than the polyamide, and according to one aspect it is 100 parts by mass or lower, preferably 80 parts by mass or lower, 60 parts by mass or lower or 40 parts by mass or lower, from the viewpoint of satisfactorily obtaining the original advantage of the polyamide.

<Polyphenylene ether of first embodiment>

According to one aspect of the first embodiment, the resin composition comprises a polyphenylene ether. According to the second and third embodiments, the resin composition may further comprise a polyphenylene ether. A polyphenylene ether has the structure represented by the following general formula (1):

[Chemical Formula 1]

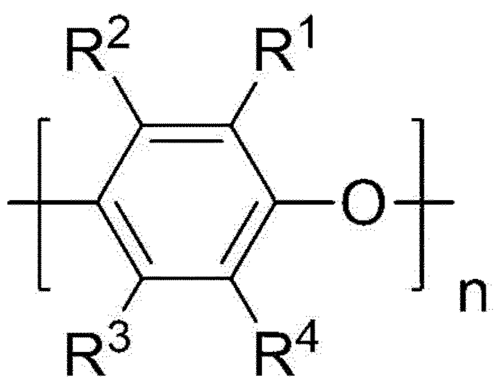

(1)

(where $R^1$, $R^2$, $R^3$ and $R^4$ each independently represent a monovalent group selected from the group consisting of hydrogen atoms, halogen atoms, alkyl groups of 1 to 7 carbon atoms, phenyl, haloalkyl, aminoalkyl and hydrocarbon oxy groups, and halohydrocarbon oxy groups with at least 2 carbon atoms separated by a halogen atom and oxygen atom, and n is an integer of 20 or greater).

In formula (1), halogen atoms represented by $R^1$, $R^2$, $R^3$ and $R^4$ may be fluorine atoms, chlorine atoms or bromine atoms, with chlorine atoms and bromine atoms being preferred.

In formula (1), an "alkyl group" represented by $R^1$, $R^2$, $R^3$ and $R^4$ is a straight-chain or branched-chain alkyl group of preferably 1 to 6 and more preferably 1 to 3 carbon atoms, examples of which include methyl, ethyl, propyl, isopropyl, butyl, isobutyl, sec-butyl, *tert*-butyl, pentyl and hexyl. Methyl and ethyl are preferred, with methyl being more preferred.

In formula (1), alkyl groups represented by $R^1$, $R^2$, $R^3$ and $R^4$ may be optionally substituted with one or more substituents at substitutable positions. Such substituents include halogen atoms (for example, fluorine atom, chlorine atom or bromine atom), alkyl groups of 1 to 6 carbon atoms (for example, methyl, ethyl, propyl, isopropyl, butyl, isobutyl, sec-butyl, *tert*-butyl, pentyl or hexyl), aryl groups (for example, phenyl or naphthyl), alkenyl groups (for example, ethenyl, 1-propenyl or 2-propenyl), alkynyl groups (for example, ethynyl, 1-propynyl or 2-propynyl), aralkyl groups (for example, benzyl or phenethyl) and alkoxy groups (for example, methoxy or ethoxy).

The symbol n in formula (1) may be 20 or greater, 100 or greater or 200 or greater, and 2000 or less, 1000 or less or 400 or less.

The polyphenylene ether is not particularly restricted and any publicly known one may be used. Examples include poly(2,6-dimethyl-1,4-phenylene ether), poly(2-methyl-6-ethyl-1,4-phenylene ether), poly(2-methyl-6-phenyl-1,4-phenylene ether) and poly(2,6-dichloro-1,4-phenylene ether), as well as polyphenylene ether copolymers of 2,6-dimethylphenol and other phenols (such as 2,3,6-trimethylphenol or 2-methyl-6-butylphenol). Preferred among these are poly(2,6-dimethyl-1,4-phenylene ether) and copolymers of 2,6-dimethylphenol and 2,3,6-trimethylphenol, with poly(2,6-dimethyl-1,4-phenylene ether) being more preferred.

These polyphenylene ethers may be used alone, or two or more may be used in combination.

The limiting viscosity [η] of the polyphenylene ether is preferably 0.1 dl/g or greater, 0.2 dl/g or greater or 0.3 dl/g or greater, from the viewpoint of obtaining a resin composition with high rigidity, and preferably 1.0 dl/g or lower, 0.7 dl/g or lower, 0.6 dl/g or lower or 0.5 dl/g or lower, from the viewpoint of imparting a satisfactory flow property to the resin composition. The limiting viscosity is the value measured in chloroform at 25°C.

According to one aspect, the polyphenylene ether may be in the dispersed phase and may be at least partially acid-modified. The acid modification may be by reacting a modifying agent (such as an α,β-unsaturated carboxylic acid or its derivative) with the polyphenylene ether.

The α,β-unsaturated carboxylic acid may be, for example, a monobasic acid such as (meth)acrylic acid, crotonic acid, isocrotonic acid, furanic acid, pentenoic acid, vinylacetic acid or angelic acid, a dibasic acid such as maleic acid, chloromaleic acid, fumaric acid, tetrahydrophthalic acid, itaconic acid, citraconic acid or endo-cis-bicyclo[2,2,1]hept-5-ene-2,3-dicarboxylic acid (nadic acid), or a tribasic acid such as citric acid or aconitic acid.

Examples of derivatives of a,β-unsaturated carboxylic acids include acid halides, amides, imides, acid anhydrides and esters of the aforementioned α,β-unsaturated carboxylic acids. Examples include malenyl chloride, acrylamide, maleimide, N-phenyl maleimide, N-methyl maleimide, N-ethyl maleimide, maleic anhydride, itaconic anhydride, glutaconic anhydride, citraconic anhydride, nadic anhydride, aconic anhydride, methyl (meth)acrylate, monomethyl maleate, dimethyl maleate, diethyl itaconate, dibutyl citraconate, glycidyl (meth)acrylate and diglycidyl maleate. Examples of preferred modifying agents include maleic acid, citric acid, itaconic acid, itaconic anhydride and maleic anhydride, with citric acid and maleic anhydride being more preferred.

The degree of acid modification of the polyphenylene ether is preferably 0.01% or greater, 0.1% or greater, 0.2% or greater or 0.25% or greater, from the viewpoint of dispersing the polyphenylene ether in the polyamide phase with a relatively small dispersion size to satisfactorily obtain the advantage of combining use of the polyamide and polyphenylene ether, and preferably 10% or lower, 5% or lower, 2% or lower, 1% or lower, 0.7% or lower or 0.6% or lower, from the viewpoint of satisfactorily obtaining the advantages of high rigidity and low water absorption by using the polyphenylene ether. The polyphenylene ether of the disclosure may also be a mixture of two or more different polymers with different degrees of acid modification. In this case it is preferred for the degree of the acid modification of the polyphenylene ether in the resin composition as a whole to be in the range specified above. The degree of acid modification is the rate of addition calculated from infrared spectroscopy measurement. When the acidic functional groups are from maleic anhydride, a mixture of polyphenylene ether and maleic anhydride is used to draw a calibration curve for the peak at 1790 $cm^{-1}$ attributed to maleic acid, and then the rate of addition is calculated from the peak intensity at 1790 $cm^{-1}$ for the maleic anhydride-modified polyphenylene ether.

The acid modification method for the polyphenylene ether may be a method of reacting a modifying agent with the polyphenylene ether in a fluid state (for example, a melt, or a dispersion or solution in a solvent), or a method of reacting a modifying agent with the powdered polyphenylene ether at a temperature below the glass transition point of the polyphenylene ether, in the co-presence of the modifying agent. Examples of methods of reacting a modifying agent with the polyphenylene ether in a fluid state include a method of melt kneading the polyphenylene ether and modifying agent in a roll mill, Banbury mixer or extruder at 250°C to 350°C for 5 seconds to 30 minutes, and a method of dissolving the polyphenylene ether in an organic solvent (such as toluene, xylene, decalin or tetralin) and then adding the modifying

agent and heating the mixture. An example of a method of reacting a modifying agent with the powdered polyphenylene ether is a method of loading predetermined amounts of the polyphenylene ether and modifying agent into a high-speed stirrer, and using the shear heat release from high-speed stirring and/or heat transfer from the jacket to maintain an internal temperature at 160°C to 200°C for at least 30 seconds.

The reaction may also be carried out in the presence of a radical initiator. The radical initiator may be an organic peroxide (such as benzoyl peroxide, dicumyl peroxide, di-*tert*-butyl peroxide, tert-butylcumyl peroxide, cumene hydroperoxide, 2,5-dimethyl-2,5-di-(*tert*-butylperoxy)hexane or 2,5-dimethyl-2,5-di-(*tert*-butylperoxy)hexyne-3), or an azo compound (such as azobisisobutyronitrile or dimethylazoisobutyrate). The amount of radical initiator used may be 0.01 parts by mass to 10 parts by mass, for example, with respect to 100 parts by mass of the polyphenylene ether.

According to one aspect, the polyphenylene ether may be a mixture of a polyphenylene ether with an acidic functional group and a polyphenylene ether without an acidic functional group. The mixing ratio of the polyphenylene ether with an acidic functional group and the polyphenylene ether without an acidic functional group is preferably 10 mass% or greater, more preferably 20 mass% or greater, even more preferably 30 mass% or greater and most preferably 40 mass% or greater, with the total of both as 100 mass%, from the viewpoint of satisfactorily obtaining the advantage of high rigidity and low water absorption of the resin composition by the polyphenylene ether with an acidic functional group, and the viewpoint of increasing affinity with the cellulose nanofibers. The upper limit is not particularly restricted, and essentially all of the polyphenylene ether may be polyphenylene ether with an acidic functional group, but from the viewpoint of avoiding problems with the flow property during melting, it is preferably 80 mass% or lower.

The phase containing the polyphenylene ether may also form a particulate dispersed phase (dispersed particles) in the resin composition. In this case, the dispersed particle size is preferably 3 μm or smaller, more preferably 2 μm or smaller and most preferably 1 μm or smaller, as the number-mean particle size. There is no particular restriction on the lower limit, and it may be 0.01 μm, for example. This range is preferred from the viewpoint of high toughness and physical property stability.

The phase containing the polyphenylene ether preferably has high uniformity of the dispersed particle size. From the same viewpoint, the volume ratio of dispersed particles with particle diameters of 1 μm or larger among the total dispersed particles of the polyphenylene ether is preferably 30 vol% or lower. The upper limit is more preferably 25 vol%, even more preferably 20 vol%, yet more preferably 15 vol% and most preferably 10 vol%. If coarse particles are present even in very small amounts in the dispersed particle size distribution based on volume, then the volume ratio of dispersed particles with particle diameters of 1 μm or larger increases drastically. The volume ratio is preferably within this range for high uniformity of the dispersed particle size. The volume ratio may be 2 vol% or higher or 5 vol% or higher, for example, from the viewpoint of facilitating production of the resin composition.

The method for increasing the uniformity of dispersed particle size in the phase containing the polyphenylene ether may be a method of producing a resin composition by extrusion kneading of the compounding ingredients for the resin composition, and increasing the screw rotational speed during extrusion kneading to form high shear strain in the compounding ingredients, for microdispersion of the polyphenylene ether, such as a method of setting screw parts known as seal rings at even narrow clearances, to produce stretch flow strain in the compounding ingredients, or a method of passing a special narrow slit through the molten polymer to produce a stretch flow strain at the slit, and although any of these methods may be used, methods using stretch flow strain are preferred because methods that introduce high shear also notably increase the polymer temperature during processing.

The method for observing the dispersed state may be a method of cutting the resin composition which is in a form such as a molded body or pellets into ultrathin sections and dyeing the polyamide phase using phosphotungstic acid or the like, and then observing it with a transmission electron microscope, or a method of uniformly exposing the surface of the resin composition in a form such as a molded body or pellets and then dipping it in a solvent that selectively dissolves only the polyphenylene ether, extracting the polyphenylene ether, and observing it with a scanning electron microscope. The obtained image may be binarized with an image analyzer, the diameters of dispersed particles (at least 500 randomly selected particles) in the dispersed phase may be converted to circle equivalent diameters, and each of the particle diameters may be counted, thereby allowing calculation of the number-mean particle size of the dispersed particles and the volume ratio of particles with predetermined particle diameters (for example, particle diameters of 1 μm or larger).

For the first embodiment, the ratio of polyphenylene ether with respect to 100 mass% of the resin composition is preferably 10 mass% or greater, 20 mass% or greater or 30 mass% or greater, from the viewpoint of satisfactorily obtaining advantages such as high rigidity, low specific gravity and low water absorption due to the polyphenylene ether phase, and preferably 60 mass% or lower, 50 mass% or lower or 40 mass% or lower, from the viewpoint of satisfactorily obtaining advantages due to the other components in the resin composition.

The amount of polyphenylene ether with respect to 100 parts by mass of the polyamide is preferably 30 parts by mass or greater, 40 parts by mass or greater or 50 parts by mass or greater, from the viewpoint of satisfactorily obtaining the aforementioned advantages of the polyphenylene ether phase, and preferably 150 parts by mass or lower, 120 parts by mass or lower or 100 parts by mass or lower, from the viewpoint of facilitating formation of the polyphenylene

ether phase as a dispersed phase in the polyamide phase.

<Elastomer of first embodiment>

According to the first embodiment, the resin composition may have an elastomer phase in addition to the first and second polymers, and according to one aspect it may have an elastomer phase in addition to the polyamide phase and polyphenylene ether phase. The elastomer composing the elastomer phase is a substance (specifically, a natural or synthetic polymer substance) that is an elastic solid at room temperature (23°C). An elastomer phase is also preferably present since the resin composition will have satisfactory toughness and elongation (especially elongation in low temperature environments).

According to one aspect of the first embodiment, when the resin composition has a polyamide phase (continuous phase) and a polyphenylene ether phase (dispersed phase) while also using an elastomer, since the elastomer originally has higher affinity for the polyphenylene ether than for the polyamide, the elastomer phase can be dispersed so that the elastomer phase is present in the polyphenylene ether phase (that is, so that the polyphenylene ether phase is a continuous phase and the elastomer phase is a dispersed phase). That is, in a resin composition further comprising an elastomer, the polyphenylene phase is dispersed with relatively small sizes in the polyamide phase, while the elastomer phase is further dispersed in the polyphenylene phase. In order to obtain such a dispersed state, a polyamide, a polyphenylene ether with an acidic functional group and an elastomer without an acidic functional group, for example, may be used.

The elastomer phase may also be dispersed in the polyamide phase with a first polymer phase or polyphenylene ether phase further dispersed in the elastomer phase. In order to obtain such a dispersed state, a polyamide, a polyphenylene ether without an acidic functional group and an elastomer with an acidic functional group, for example, may be used.

A second polymer phase or polyphenylene ether phase, and an elastomer phase, may also be dispersed independently in the polyamide phase. In order to obtain such a dispersed state, a polyamide, a second polymer ether with an acidic functional group or a polyphenylene ether with an acidic functional group, and an elastomer with an acidic functional group, for example, may be used.

The preferred dispersion sizes for the polyphenylene ether phase also apply even when an elastomer phase is also present. The elastomer phase may be present as dispersed particles in the polyphenylene ether phase or present as dispersed particles in the polyamide phase. In this case the dispersed particle size is preferably 3 μm or smaller, more preferably 2 μm or smaller and most preferably 1 μm or smaller, as the number-mean particle size. There is no particular restriction on the lower limit, and it may be 0.01 μm, for example. These ranges are preferred from the viewpoint of exhibiting satisfactory toughness and elongation.

The elastomer preferably has a highly uniform dispersed particle size. From the same viewpoint, the volume ratio of dispersed particles with particle diameters of 3 μm or larger among the total dispersed particles of the elastomer is preferably 30 vol% or lower. The upper limit is more preferably 25 vol%, even more preferably 20 vol%, yet more preferably 15 vol% and most preferably 10 vol%. The volume ratio may be 2 vol% or higher or 5 vol% or higher, for example, from the viewpoint of facilitating production of the resin composition. The method of increasing the uniformity of dispersed particle size of the elastomer may be a method of producing the resin composition by extrusion kneading of the compounding ingredients for the resin composition, and increasing the screw rotational speed during extrusion kneading to apply high shear strain to the compounding ingredients, thereby causing microdispersion of the elastomer.

Specific examples of elastomers include natural rubber, conjugated diene compound polymers, aromatic compound-conjugated diene copolymers, hydrogenated aromatic compound-conjugated diene copolymers, polyolefins, polyester-based elastomers, polyurethane-based elastomers, polyamide-based elastomers and elastomers with core-shell structures. According to one aspect, the elastomer is a different type of polymer from the polyamide (it is not a polyamide elastomer). From the viewpoint of facilitating modification reaction of the acidic functional groups described below, an aromatic compound-conjugated diene copolymer or its hydrogenated form, a polyolefin, or an elastomer with a core-shell structure is preferred. An aromatic compound-conjugated diene copolymer or its hydrogenated form is preferably an aromatic compound-conjugated diene block copolymer or its hydrogenated form, and the polyolefin is preferably a copolymer of ethylene and an α-olefin.

According to one aspect, the elastomer is one or more selected from the group consisting of ethylene-α-olefin copolymers, block copolymers of aromatic vinyl compounds and conjugated diene compounds, and hydrogenated block copolymers of aromatic vinyl compounds and conjugated diene compounds.

The aromatic compound-conjugated diene block copolymer referred to herein is a block copolymer composed of a polymer block (A) of which an aromatic vinyl compound is the major component, and a polymer block (B) of which a conjugated diene compound is the major component. Block copolymers in which the bonding form of each block is an AB type, ABA type or ABAB type are preferred from the viewpoint of exhibiting impact strength, with ABA and ABAB types being more preferred.

The mass ratio of the aromatic vinyl compound units and conjugated diene compound units in the block copolymer is preferably 10/90 to 70/30. It is more preferably 15/85 to 55/45, and most preferably 20/80 to 45/55. Two or more

copolymers with different mass ratios between the aromatic vinyl compound and conjugated diene compound may also be used as a blend. Specific examples of aromatic vinyl compounds include styrene, α-methylstyrene and vinyltoluene, any one or more of which may be selected for use, with styrene being especially preferred.

Specific examples of conjugated diene compounds include butadiene, isoprene, piperylene and 1,3-pentadiene, any one or more of which may be selected for use, with butadiene, isoprene and their combinations being preferred, and butadiene being especially preferred. When butadiene is used as the conjugated diene compound of the block copolymer, the microstructure of the polybutadiene block portion has a total for the 1,2-vinyl content, 1,2-vinyl content and 3,4-vinyl content of preferably 5 to 80%, more preferably 10 to 50% and most preferably 15 to 40%, based on molar content, from the viewpoint of inhibiting crystallization of the soft segments.

The aromatic compound-conjugated diene block copolymer referred to here is a block copolymer composed of a polymer block of which an aromatic vinyl compound is the major component, and a polymer block of which a conjugated diene compound is the major component, and it is a block copolymer that is essentially free of hydrogenation. A hydrogenated block copolymer of an aromatic vinyl compound and conjugated diene compound is one wherein the aliphatic double bonds in the polymer blocks consisting mainly of the diene compound are controlled to the range of greater than 0% and up to 100%, by hydrogenation of a block copolymer of an aromatic vinyl compound and a conjugated diene compound. The addition rate of hydrogen in a hydrogenated block copolymer is preferably 50% or greater, more preferably 80% or greater and most preferably 98% or greater, from the viewpoint of inhibiting heat degradation during processing, and is preferably 50% or lower, more preferably 20% or lower and most preferably 0% (that is, a block copolymer of an aromatic vinyl compound and a conjugated diene compound), from the viewpoint of low-temperature toughness.

The molecular weights of the block copolymer of the aromatic vinyl compound and conjugated diene compound and its hydrogenated form are each a number-average molecular weight (Mn) of 10,000 to 500,000 and most preferably 40,000 to 250,000, from the viewpoint of both impact strength and flow property. Unless otherwise specified, the number-average molecular weight referred to herein is the value measured in terms of standard polystyrene, using a gel permeation chromatography apparatus, with a chloroform solvent at a measuring temperature of 40°C.

The aromatic vinyl compound-conjugated diene compound block copolymers may also be used in combinations of two or more having different bonding forms, different molecular weights, different aromatic vinyl compound types, different conjugated diene compound types, different totals for the 1,2-vinyl content, 1,2-vinyl content and 3,4-vinyl content, different aromatic vinyl compound component contents and different hydrogenation rates. The preferred hydrogenation rate for a mixture with different hydrogenation rates is as mentioned above.

An ethylene-α-olefin copolymer is preferred for use as the polyolefin from the viewpoint of exhibiting impact resistance. Monomers to be copolymerized with the ethylene unit include aliphatic-substituted vinyl monomers such as propylene, butene-1, pentene-1,4-methylpentene-1, hexene-1, heptene-1, octene-1, nonene-1, decene-1, undecene-1, dodecene-1, tridecene-1, tetradecene-1, pentadecene-1, hexadecene-1, heptadecene-1, octadecene-1, nonadecene-1 and eicosene-1, isobutylene, aromatic vinyl monomers such as styrene and substituted styrene, esteric vinyl monomers such as vinyl acetate, acrylic acid ester, methacrylic acid ester, glycidyl acrylic acid ester, glycidyl methacrylic acid ester and hydroxyethyl methacrylic acid ester, nitrogen-containing vinyl monomers such as acrylamide, allylamine, vinyl-p-aminobenzene and acrylonitrile, and dienes such as butadiene, cyclopentadiene, 1,4-hexadiene and isoprene.

The copolymer is preferably a copolymer of ethylene and one or more α-olefins of 3 to 20 carbon atoms, more preferably a copolymer of ethylene and one or more α-olefins of 3 to 16 carbon atoms, and most preferably a copolymer of ethylene and one or more α-olefins of 3 to 12 carbon atoms. From the viewpoint of exhibiting impact resistance, the molecular weight of the ethylene-α-olefin copolymer is a number-average molecular weight (Mn) of preferably 10,000 or higher, more preferably 10,000 to 100,000 and even more preferably 20,000 to 60,000, measured with a gel permeation chromatography apparatus using 1,2,4-trichlorobenzene as the solvent, at 140°C in terms of standard polystyrene. From the viewpoint of both flow property and impact resistance, the molecular weight distribution (weight-average molecular weight/number-average molecular weight: Mw/Mn) is preferably 3 or lower, and more preferably 1.8 to 2.7.

From the viewpoint of handleability during processing, the preferred ethylene unit content for the ethylene-α-olefin copolymer is 30 to 95 mass% with respect to the total amount of the ethylene-α-olefin copolymer.

These preferred ethylene-α-olefin copolymers can be produced by the methods described in Japanese Examined Patent Publication HEI No. 4-12283, Japanese Unexamined Patent Publication SHO No. 60-35006, Japanese Unexamined Patent Publication SHO No. 60-35007, Japanese Unexamined Patent Publication SHO No. 60-35008, Japanese Unexamined Patent Publication HEI No. 5-155930, Japanese Unexamined Patent Publication HEI No. 3-163088 or US Patent No. 5272236, for example.

For the purpose of the disclosure, elastomers having a core-shell structure include core-shell type elastomers having a core of particulate rubber and a shell of a glassy graft layer formed around the exterior of the core. The component of the rubber core is preferably butadiene-based rubber, acrylic rubber or silicone-acrylic composite rubber. A vitreous polymer such as styrene resin, acrylonitrile-styrene copolymer or acrylic resin is suitable for the shell. It is preferred to use an elastomer having a core-shell structure with a butadiene rubber core and an acrylic-based resin shell, from the

viewpoint of compatibility with the polyamide.

According to one aspect, the elastomer has an acidic functional group as at least a portion of the elastomer. That the elastomer has an acidic functional group, for the purpose of the disclosure, means that an acidic functional group has been added via chemical bonding into the molecular skeleton of the elastomer. An "acidic functional group", for the purpose of the disclosure, means a functional group that can react with a basic functional group, and specific examples include hydroxyl, carboxyl, carboxylate, sulfo, and acid anhydride groups.

The amount of the acidic functional group added to the elastomer is preferably 0.01 mass% or greater, more preferably 0.1 mass% or greater and even more preferably 0.2 mass% or greater, and preferably 5 mass% or lower, more preferably 3 mass% or lower and even more preferably 2 mass% or lower, based on 100 mass% of the elastomer, from the viewpoint of compatibility between the second polymer with an acidic functional group and the polyphenylene ether with an acidic functional group. The number of acidic functional groups is the value obtained by measuring the sample against a calibration curve drawn using the characteristic absorption band for the acid, after measuring a calibration sample premixed with the acidic substance using an infrared absorption spectrometer.

Elastomers with acidic functional groups include elastomers having a core-shell structure wherein the shell is a layer formed using a copolymerizing component such as acrylic acid, and elastomers which are modified by grafting $\alpha,\beta$-unsaturated dicarboxylic acids or their derivatives onto ethylene-$\alpha$-olefin copolymers, polyolefins, aromatic compound-conjugated diene copolymers or hydrogenated aromatic compound-conjugated diene copolymers that include acrylic acid as a monomer, either in the presence or in the absence of a peroxide.

According to a preferred aspect, the elastomer is an acid anhydride-modified elastomer.

More preferred among these are modified forms with $\alpha,\beta$-unsaturated dicarboxylic acids or their derivatives grafted onto polyolefins, aromatic compound-conjugated diene copolymers or hydrogenated aromatic compound-conjugated diene copolymers, either in the presence or in the absence of a peroxide, and particularly preferred are modified forms with $\alpha,\beta$-unsaturated dicarboxylic acids or their derivatives grafted onto ethylene-$\alpha$-olefin copolymers or hydrogenated aromatic compound-conjugated diene block copolymers, either in the presence or in the absence of a peroxide.

Specific examples of $\alpha,\beta$-unsaturated dicarboxylic acids and their derivatives include maleic acid, fumaric acid, maleic anhydride and fumaric anhydride, with maleic anhydride being particularly preferred.

According to one aspect, the elastomer may be a mixture of an elastomer with an acidic functional group and an elastomer without an acidic functional group. The mixing ratio of the elastomer with an acidic functional group and the elastomer without an acidic functional group is preferably 10 mass% or greater, more preferably 20 mass% or greater, even more preferably 30 mass% or greater and most preferably 40 mass% or greater, where 100 mass% is the total of both, from the viewpoint of satisfactorily maintaining high toughness and stable physical properties for the resin composition by the elastomer with an acidic functional group. There is no particular upper limit, and essentially all of the elastomer may be an elastomer with an acidic functional group, but from the viewpoint of avoiding flow property issues it is preferably 80 mass% or lower.

According to the first embodiment, when an elastomer phase is also present, the proportion of elastomer with respect to 100 mass% of the resin composition is preferably 3 mass% or greater, 5 mass% or greater or 8 mass% or greater, from the viewpoint of satisfactorily increasing the toughness and elongation of the resin composition, and it is preferably 40 mass% or lower, 30 mass% or lower or 10 mass% or lower, from the viewpoint of increasing the rigidity of the resin composition while also lowering the coefficient of thermal expansion.

When the elastomer phase is also present, the amount of the elastomer with respect to 100 parts by mass as the total amount of the polyamide and second polymer or polyphenylene ether is preferably 1 part by mass or greater, 2 parts by mass or greater, 3 parts by mass or greater, 4 parts by mass or greater or 5 parts by mass or greater, from the viewpoint of satisfactorily increasing the toughness and elongation of the resin composition, and is preferably 50 parts by mass or lower, 40 parts by mass or lower, 35 parts by mass or lower, 30 parts by mass or lower or 25 parts by mass or lower, from the viewpoint of increasing the rigidity of the resin composition while also lowering the coefficient of thermal expansion.

When the elastomer phase is also present, the amount of the elastomer with respect to 100 parts by mass as the total amount of the second polymer or polyphenylene ether is preferably 10 parts by mass or greater, 15 parts by mass or greater or 20 parts by mass or greater, from the viewpoint of satisfactorily increasing the toughness and elongation of the resin composition, and is preferably 100 parts by mass or lower, 80 parts by mass or lower, 70 parts by mass or lower, 50 parts by mass or lower or 40 parts by mass or lower, from the viewpoint of facilitating the presence of the elastomer phase as a dispersed phase in the second polymer phase or polyphenylene ether phase.

<Elastomer of second embodiment>

According to the second embodiment, the resin composition comprises an elastomer that is an aromatic compound-conjugated diene compound block copolymer (a block copolymer composed of a polymer block (A) composed mainly of an aromatic vinyl compound, and a polymer block (B) composed mainly of a conjugated diene compound),

and/or its derivative (in other words, a substance (specifically, a natural or synthetic polymer substance) that is an elastic solid at room temperature (23°C)). Block copolymers in which the bonding form of each block is an AB type, ABA type or ABAB type are preferred from the viewpoint of exhibiting impact strength, with ABA and ABAB types being more preferred. A derivative of an aromatic compound-conjugated diene compound block copolymer is a polymer that maintains the primary block copolymer structure while having differences in structure due to modification or hydrogenation, and according to one aspect it is a modified (for example, acid-modified) and/or hydrogenated aromatic compound-conjugated diene compound block copolymer.

Preferred examples of block copolymer structures and structures of aromatic vinyl compound units and conjugated diene compound units in block copolymers, and their mass ratios, are the same as explained for the block copolymer of the first embodiment.

With the resin composition of the second embodiment, it was found unexpectedly that an elastomer that is an aromatic vinyl compound-conjugated diene compound block copolymer and/or a derivative thereof imparts high toughness and a low coefficient of thermal expansion to the resin composition. With no intention to be limited to any particular theory, it is believed that with aromatic vinyl compound-conjugated diene compound block copolymers and their derivatives, the potential for crosslinking between the molecules by double bonds in the molecules lowers the molecular mobility. In a resin composition that includes a combination of a polyamide and an elastomer, the elastomer contributes to increased toughness by forming domains, while the greater tendency for thermal expansion compared to polyamides increases the thermal expansion of the resin composition. With the elastomer of the second embodiment, however, thermal expansion of the resin composition can be kept low presumably due to the crosslinking between elastomer molecules. Thus, a resin composition comprising an elastomer of the second embodiment can unexpectedly provide a high level of the conflicting properties of high toughness and low thermal expansion.

When the elastomer includes an acid-modified form, such crosslinking between molecules also helps to inhibit reaction between cellulose and the acidic functional groups. This also provides an advantage of helping to prevent increase in the coefficient of thermal expansion of the resin composition by adhesion of the elastomer to cellulose (that is, reduction in the effect of lowering the coefficient of thermal expansion by preventing cellulose from being present mainly in the polyamide phase).

The number-average molecular weights (Mn) of each of the aromatic vinyl compound-conjugated diene compound block copolymers and their derivatives are preferably 10,000 to 500,000 and most preferably 40,000 to 250,000, from the viewpoint of both impact strength and flow property.

According to one aspect, derivatives of an aromatic vinyl compound-conjugated diene compound block copolymer include the acid-modified block copolymer. According to one aspect, an acidic functional group of the disclosure is added to the molecular skeleton of the block copolymer by chemical bonding.

An acid-modified form may be obtained by grafting an $\alpha,\beta$-unsaturated dicarboxylic acid or its derivative onto an aromatic vinyl compound-conjugated diene compound block copolymer or its hydrogenated form, in the presence or in the absence of a peroxide. According to a preferred aspect, the acid-modified form is an acid anhydride-modified form. Specific examples of $\alpha,\beta$-unsaturated dicarboxylic acids and their derivatives include maleic acid, fumaric acid, maleic anhydride and fumaric anhydride, with maleic anhydride being particularly preferred.

The elastomer may be a blend of a polymer with an acidic functional group and a polymer without an acidic functional group, or it may be composed entirely of a polymer with an acidic functional group. From the viewpoint of satisfactorily obtaining an effect of increased toughness by the elastomer of the second embodiment, the proportion of the acid-modified form is preferably 10 mass% or greater, more preferably 20 mass% or greater, even more preferably 30 mass% or greater and most preferably 40 mass% or greater, where 100 mass% is the total of both the polymer with an acidic functional group (acid-modified) and the polymer without an acidic functional group (non-acid-modified). There is no particular upper limit for the proportion of the acid-modified form, and the elastomer of the second embodiment may even be essentially composed only of the acid-modified form, but it is preferably 80 mass% or lower from the viewpoint of avoiding problems with the flow property of the resin composition.

From the viewpoint of compatibility with the polyamide, the amount of acidic functional groups in the acid-modified form is preferably 0.01 mass% or greater, more preferably 0.1 mass% or greater, and even more preferably 0.2 mass% or greater, and preferably 5 mass% or lower, more preferably 3 mass% or lower and even more preferably 2 mass% or lower. The number of acidic functional groups is the value obtained by measuring the sample against a calibration curve drawn using the characteristic absorption band for the acid, after measuring a calibration sample premixed with the acidic substance using an infrared absorption spectrometer.

According to one aspect, the amount of acidic functional groups with respect to 100 mass% as the total amount of the elastomer of the second embodiment is preferably in the range specified above for the amount of acidic functional groups in the acid-modified form.

The amount of elastomer in the resin composition is preferably in the range of 1 to 50 parts by mass with respect to 100 parts by mass of the polyamide. The upper limit is more preferably 40 parts by mass, even more preferably 35 parts by mass, yet more preferably 30 parts by mass and most preferably 25 parts by mass. It is preferred to be below

this upper limit in order to satisfactorily maintain the rigidity and heat resistance of the resin composition. The lower limit is preferably 2 parts by mass, more preferably 3 parts by mass, even more preferably 4 parts by mass and most preferably 5 parts by mass. It is preferred to be above this lower limit in order to increase the toughness and physical property stability of the resin composition.

When the elastomer phase forms a particulate dispersed phase (dispersed particles) in the resin composition, the dispersed particle size is preferably in the same range as for the elastomer phase of the first embodiment, from the viewpoint of high toughness and stability of the physical properties.

The elastomer preferably has a highly uniform dispersed particle size. From the same viewpoint, the volume ratio of dispersed particles with particle diameters of 1 μm or larger among the total dispersed particles of the elastomer is preferably 30 vol% or lower. The upper limit is more preferably 25 vol%, even more preferably 20 vol%, yet more preferably 15 vol% and most preferably 10 vol%. If coarse particles are present even in very small amounts in the dispersed particle size distribution based on volume, then the volume ratio of dispersed particles with particle diameters of 1 μm or larger increases drastically. The volume ratio is preferably within this range for high uniformity of the dispersed particle size. The volume ratio may be 2 vol% or higher or 5 vol% or higher, for example, from the viewpoint of facilitating production of the resin composition.

The method of increasing the uniformity of dispersed particle size of the elastomer may be a method of producing the resin composition by extrusion kneading of the compounding ingredients for the resin composition, and increasing the screw rotational speed during extrusion kneading to apply high shear strain to the compounding ingredients, thereby creating a microdispersion of the elastomer.

The method for observing the dispersed state may be a method of cutting the resin composition which is in a form such as a molded body or pellets into ultrathin sections and dyeing the polyamide phase using phosphotungstic acid or the like, and then observing it with a transmission electron microscope, or a method of uniformly exposing the surface of the resin composition in a form such as a molded body or pellets and then dipping it in a solvent that selectively dissolves only the elastomer, extracting the elastomer, and observing it with a scanning electron microscope. The obtained image may be binarized with an image analyzer, the diameters of dispersed particles (at least 500 randomly selected particles) in the dispersed phase may be converted to circle equivalent diameters, and each of the particle diameters may be counted, thereby allowing calculation of the number-mean particle size of the dispersed particles and the volume ratio of particles with predetermined particle diameters (for example, particle diameters of 1 μm or larger).

According to the second embodiment, the resin composition may also comprise an elastomer component other than an aromatic vinyl compound-conjugated diene compound block copolymer and/or its derivative, in a range that does not reduce the advantages of the invention.

<Saponified ethylene-vinyl ester-based copolymer of third embodiment>

According to the third embodiment, the resin composition comprises a saponified ethylene-vinyl ester-based copolymer. According to the first and second embodiments, as well, the resin composition may further comprise a saponified ethylene-vinyl ester-based copolymer. The saponified ethylene-vinyl ester-based copolymer itself has excellent strength and dimensional stability, while its hydroxyl groups contribute to excellent affinity with polyamides and cellulose, allowing it to impart high fracture strain (excellent toughness) to resin compositions comprising polyamides and cellulose. The saponified ethylene-vinyl ester-based copolymer is also advantageous in that it does not interfere with the advantages provided by cellulose, i.e. a low specific gravity, and lowering of the coefficient of linear thermal expansion and physical property anisotropy of the resin composition. Therefore, the resin composition of the third embodiment can provide a unique advantage of high levels of both of the conflicting properties of high toughness and low thermal expansion.

The saponified ethylene-vinyl ester-based copolymer is a compound obtained by addition of an alkaline salt to a copolymer obtained by copolymerization of ethylene and a vinyl ester, and saponification of the copolymer, and it comprises an ethylene unit and a vinyl alcohol unit. The saponified ethylene-vinyl ester-based copolymer may include a vinyl ester unit as a non-saponified portion, but according to a typical aspect it includes essentially no vinyl ester units.

From the viewpoint of satisfactorily obtaining an effect of improving the fracture strain of the resin composition, the proportion of vinyl alcohol units (specifically structural units produced by saponification of vinyl ester units) in 100 mol% of the total monomer units composing the saponified ethylene-vinyl ester-based copolymer is preferably 60 mol% or greater, 65 mol% or greater, 70 mol% or greater, 74 mol% or greater or 76 mol% or greater, and from the viewpoint of adding a suitable number of ethylene units in the saponified ethylene-vinyl ester-based copolymer, it is preferably 95 mol% or lower, 90 mol% or lower or 80 mol% or lower.

From the viewpoint of processability and water absorption during production of the resin composition, the proportion of ethylene units in 100 mol% of the total monomer units composing the saponified ethylene-vinyl ester-based copolymer is preferably 5 mol% or greater, 10 mol% or greater or 20 mol% or greater, and from the viewpoint of satisfactorily obtaining an effect of improving the fracture strain of the resin composition, it is preferably 40 mol% or

lower, 35 mol% or lower, 30 mol% or lower, 26 mol% or lower or 24 mol% or lower.

The proportion of vinyl ester units (specifically, units that have not been saponified during saponification after copolymerization of the ethylene and vinyl ester) in 100 mol% of total monomer units in the saponified ethylene-vinyl ester-based copolymer is preferably 20 mol% or lower, 10 mol% or lower, 5 mol% or lower or 1 mol% or lower, from the viewpoint of satisfactorily obtaining the advantages of the saponified ethylene-vinyl ester-based copolymer. The proportion is ideally 0 mol%, but it may be 0.01 mol% or greater, 0.1 mol% or greater or 0.5 mol% or greater, for example, from the viewpoint of facilitating production of the saponified ethylene-vinyl ester-based copolymer.

The saponification degree of the saponified ethylene-vinyl ester-based copolymer is preferably 90 mol% or greater, 95 mol% or greater or 99 mol% or greater, from the viewpoint of satisfactory fracture strain of the resin composition. The saponification degree may also be 99.99 mol% or lower, 99.9 mol% or lower or 99.5 mol% or lower, for example, from the viewpoint of facilitating production of the saponified ethylene-vinyl ester-based copolymer. The saponification degree is determined as the value of the number of vinyl alcohol units in the saponified ethylene-vinyl ester-based copolymer divided by the total number of vinyl alcohol units and vinyl ester units.

The amount of each of the structural units in the saponified ethylene-vinyl ester-based copolymer can be confirmed by nuclear magnetic resonance (NMR).

The saponified ethylene-vinyl ester-based copolymer may also comprise additional structural units in addition to the ethylene unit, vinyl alcohol unit and vinyl ester unit, in ranges that do not impair the effect of the invention. Additional structural units include olefins such as propylene, 1-butene and isobutene; hydroxyl group-containing $\alpha$-olefins such as 2-propene-1-ol, 3-buten-1-ol, 4-penten-1-ol, 5-hexen-1-ol, 3,4-dihydroxy-1-butene and 5-hexene-1,2-diol; and their acylated or esterified forms. Ester compounds include 3,4-diacyloxy-1-butene, and especially 3,4-diacetoxy-1-butene. Further examples include hydroxyalkylvinylidenes such as 2-methylenepropane-1,3-diol and 3-methylenepentane-1,5-diol; hydroxyalkylvinylidene diacetates such as 1,3-diacetoxy-2-methylenepropane, 1,3-dipropionyloxy-2-methylenepropane and 1,3-dibutionyloxy-2-methylenepropane; unsaturated acids such as acrylic acid, methacrylic acid, crotonic acid, phthalic acid/anhydride, maleic acid/anhydride and itaconic acid/anhydride, or their salts or mono or dialkyl esters of 1 to 18 carbon atoms; acrylamides such as acrylamide, N-alkyl acrylamides of 1 to 18 carbon atoms, N,N-dimethyl acrylamide, 2-acrylamidepropanesulfonic acid or its salt, and acrylamidepropyldimethylamine or its acid salts or quaternary salts; methacrylamides such as N-alkyl methacrylamides of 1 to 18 carbon atoms, N,N-dimethyl methacrylamide, 2-methacrylamidepropanesulfonic acid or its salt, and methacrylamidepropyldimethylamine or its salts or quaternary salts; N-vinyl amides such as N-vinylpyrrolidone, N-vinylformamide and N-vinylacetamide; vinyl cyanides such as acrylonitrile and methacrylonitrile; vinyl ethers such as alkylvinyl ethers, hydroxyalkylvinyl ethers and alkoxyalkylvinyl ethers of 1 to 18 carbon atoms; vinyl halides such as vinyl chloride, vinylidene chloride, vinyl fluoride, vinylidene fluoride and vinyl bromide; vinylsilanes such as trimethoxyvinylsilane; and allyl acetate, allyl chloride, trimethyl-(3-acrylamide-3-dimethylpropyl)-ammonium chloride, acrylamide-2-methylpropanesulfonic acid, vinylethylene carbonate and glycerin monoallyl ether. The molar ratio of additional structural units in 100 mol% of the total monomer units composing the saponified ethylene-vinyl ester-based copolymer is preferably 20 mol% or lower, 15 mol% or lower or 10 mol% or lower. The molar ratio may be 1 mol% or greater, 3 mol% or greater or 5 mol% or greater, for example.

The method for producing the saponified ethylene-vinyl ester-based copolymer is not restricted, and the ethylene monomer and vinyl ester monomer may be subjected to radical polymerization by a common polymerization method (such as solution polymerization) followed by saponification by a known saponification method.

Examples of vinyl ester monomers include aliphatic vinyl esters and aromatic vinyl esters. Specific preferred examples of vinyl esters include vinyl acetate, vinyl formate, vinyl propionate, vinyl valerate, vinyl butyrate, vinyl isobutyrate, vinyl pivalate, vinyl caprate, vinyl laurate, vinyl stearate, vinyl versatate and vinyl benzoate.

One or more alkaline salts selected from sodium hydroxide and potassium hydroxide, for example, may be used for saponification.

The saponified ethylene-vinyl ester-based copolymer may also be a commercial product. Commercial products include SOARNOL V2504 (ethylene ratio: 25 mol%), SOARNOL DT2904 (ethylene ratio: 29 mol%) and SOARNOL DC3212 (ethylene ratio: 32 mol%) (all available from Mitsubishi Chemical Holdings Corp.), EVAL M100B (ethylene ratio: 24 mol%), EVAL L104B (ethylene ratio: 27 mol%) and EVAL C109B (ethylene ratio: 35 mol%) (all available from Kuraray Co., Ltd.).

From the viewpoint of satisfactorily obtaining an effect of improved fracture strain, the amount of saponified ethylene-vinyl ester-based copolymer with respect to 100 parts by mass of the polyamide in the resin composition is preferably 1 parts by mass or greater, 5 parts by mass or greater, 10 parts by mass or greater, 20 parts by mass or greater or 30 parts by mass or greater, and from the viewpoint of toughness it is preferably 100 parts by mass or lower, 80 parts by mass or lower, 60 parts by mass or lower, 50 parts by mass or lower or 40 parts by mass or lower.

The phase morphology of the resin composition may be a morphology in which the polyamide forms a continuous phase and the saponified ethylene-vinyl ester-based copolymer form a dispersed phase, a morphology in which the polyamide forms a dispersed phase and the saponified ethylene-vinyl ester-based copolymer forms a continuous phase, or a morphology in which both the polyamide and the saponified ethylene-vinyl ester-based copolymer form a continuous

phase (that is, a co-continuous phase structure), but a morphology in which the polyamide forms a continuous phase and the saponified ethylene-vinyl ester-based copolymer forms a dispersed phase is preferred from the viewpoint of satisfactorily exhibiting heat resistance as a composition, and obtaining high toughness.

From the viewpoint of satisfactorily obtaining an effect of improved fracture strain, the amount of saponified ethylene-vinyl ester-based copolymer with respect to 100 parts by mass of cellulose in the resin composition is preferably 50 parts by mass or greater, 100 parts by mass or greater, 200 parts by mass or greater or 300 parts by mass or greater, and from the viewpoint of molding workability and cost it is preferably 5000 parts by mass or lower, 1000 parts by mass or lower, 700 parts by mass or lower or 500 parts by mass or lower.

<Elastomer of third embodiment>

The resin composition of the third embodiment may further comprise an elastomer. When the resin composition comprises an elastomer, the phase morphology of the resin composition of the second embodiment may be a form in which the polyamide forms a continuous phase and the elastomer forms a dispersed phase, a form in which the polyamide forms a dispersed phase and the elastomer forms a continuous phase, or a form in which both the polyamide and elastomer form a continuous phase (i.e. a co-continuous phase structure), but a form in which the polyamide forms a continuous phase and the elastomer forms a dispersed phase is preferred from the standpoint of exhibiting satisfactory heat resistance as a composition, and obtaining both high rigidity and low linear expansion.

From the viewpoint of simultaneously and satisfactorily obtaining the conflicting properties of low thermal expansion, low anisotropy and high toughness, the lower limit for the proportion of the cellulose that is in the phase other than the elastomer phase is preferably greater than 50 mass%, 60 mass% or greater, 70 mass% or greater, 75 mass% or greater, 80 mass% or greater or 100 mass% (i.e. essentially all of the cellulose is present in the polyamide phase). The proportion may also be 99 mass% or lower or 98 mass% or lower, for example, from the viewpoint of facilitating production of the resin composition.

As an example of a method for confirming that greater than 50 mass% of the cellulose is present in a phase other than the elastomer phase, if the abundance ratios of cellulose in the phase other than the elastomer phase and in the elastomer phase differ significantly, then confirmation can be easily made without quantification, simply by photographing the resin composition with a transmission electron microscope and confirming the amount of cellulose present in the phase other than the elastomer phase and the amount of cellulose present in the elastomer phase. When quantification is necessary, the resin composition may be sliced to a thickness of about 0.1 to 2 μm to obtain a film-like sample. The sample is immersed in a solvent that dissolves the elastomer component but does not dissolve the components other than the elastomer phase (for example, a solvent such as chloroform or toluene), to elute out the elastomer phase, the eluate is concentrated and then subjected to ultracentrifugation, and the cellulose is separated from the elastomer phase and subsequently rinsed with the solvent repeatedly at least 3 times and dried, after which the amount of cellulose in the elastomer phase is measured.

The method for observing the phase morphology of the resin composition may be a method of cutting the resin composition which is in a form such as a molded body or pellets into ultrathin sections and dyeing the polyamide phase using phosphotungstic acid or the like, and then observing it with a transmission electron microscope, or a method of uniformly exposing the surface of the resin composition in a form such as a molded body or pellets and then dipping it in a solvent that selectively dissolves only the elastomer, extracting the elastomer, and observing it with a scanning electron microscope. The size of the dispersed phase (for example, the dispersed particles described below) can be determined by binarizing the obtained image with an image analyzer, converting the diameters of at least 500 randomly selected particles to circle equivalent diameters, and counting each of the particle diameters.

The elastomer contributes to further improved toughness of the resin composition. Preferred examples for the molecular structure, properties (such as molecular weight) and usage (such as addition amount) of the elastomer are the same as mentioned for the elastomer of the first and second embodiments, and the preferred aromatic compound-conjugated diene copolymers or their hydrogenated forms, polyolefins and elastomers with a core-shell structure are those mentioned as examples for the first embodiment. An aromatic compound-conjugated diene copolymer or its hydrogenated form is more preferably an aromatic compound-conjugated diene block copolymer or its hydrogenated form that was mentioned as an example for the first embodiment, and the polyolefin is more preferably a copolymer of ethylene and an α-olefin.

The elastomer preferably has an acidic functional group in at least a portion thereof. Specific examples of elastomers with an acidic functional group include those mentioned as examples for the first and second embodiments. From the viewpoint of compatibility with the polyamide, the amount of acidic functional groups added to the elastomer may be the same as mentioned for the first and second embodiments.

For example, the amount of the elastomer with respect to 100 parts by mass of the polyamide in the resin composition is preferably 1 parts by mass or greater, 2 parts by mass or greater, 3 parts by mass or greater, 4 parts by mass or greater or 5 parts by mass or greater, from the viewpoint of obtaining satisfactory toughness and physical

property stability for the resin composition, and is preferably 50 parts by mass or lower, 40 parts by mass or lower, 35 parts by mass or lower, 30 parts by mass or lower or 25 parts by mass or lower, from the viewpoint of obtaining satisfactory rigidity and heat resistance of the resin composition.

The elastomer may also form a particulate dispersed phase (dispersed particles) in the resin composition. In this case the dispersed particle size may be the same as for the elastomer of the first and second embodiments, from the viewpoint of satisfactorily obtaining an effect of improving the toughness and physical property stability of the resin composition due to the elastomer, and from the viewpoint of facilitating production of the resin composition.

High uniformity of the dispersed particle size of the elastomer is preferred from the standpoint of satisfactorily obtaining an effect of improving the properties of the resin composition. The preferred volume ratio of dispersed particles with particle diameters of 1 μm or larger among all of the dispersed particles of the elastomer, and the method of adjusting it, may be the same as for the elastomer of the second embodiment.

It is believed that with aromatic vinyl compound-conjugated diene compound block copolymers and their hydrogenated forms, the potential for crosslinking between the molecules by double bonds in the molecules lowers the molecular mobility. In a resin composition that includes a combination of a polyamide and an elastomer, the elastomer contributes to increased toughness by forming domains, while the greater tendency for thermal expansion compared to polyamides increases the thermal expansion of the resin composition. However, aromatic vinyl compound-conjugated diene compound block copolymers and their hydrogenated forms can potentially lower the thermal expansion of the resin composition due to crosslinking of the elastomer molecules. Such elastomers are advantageous for both high toughness and low linear thermal expansion.

When the elastomer includes an acid-modified form, such crosslinking between molecules also helps to inhibit reaction between cellulose and the acidic functional groups. This also provides an advantage of helping to prevent increase in the coefficient of linear thermal expansion of the resin composition by adhesion of the elastomer to cellulose (that is, reduction in the effect of lowering the coefficient of thermal expansion by preventing cellulose from being present mainly in the polyamide phase).

<Cellulose>

[Cellulose of first embodiment]

According to the first embodiment the resin composition comprises cellulose. According to one aspect the cellulose includes fibrous cellulose, and according to another aspect it is fibrous cellulose. According to one aspect the cellulose includes cellulose nanofibers, and according to another aspect it consists entirely of cellulose nanofibers. The starting material for the cellulose may be natural cellulose or regenerated cellulose. Natural cellulose that is used may be either wood pulp obtained from a wood species (broadleaf tree or conifer) or nonwood pulp obtained from a nonwood species (bamboo, hemp fiber, bagasse, kenaf or linter), or refined pulp from the same (such as refined linter). Nonwood pulp may be cotton pulp containing cotton linter pulp, hemp pulp, bagasse pulp, kenaf pulp, bamboo pulp or straw pulp. It may be cellulose obtained from a starting material which is cotton pulp, hemp pulp, bagasse pulp, kenaf pulp, bamboo pulp and straw pulp or the refined pulp obtained from the respective starting materials of cotton lint, cotton linter, hemp abaca (from Ecuador or the Philippines, for example), sisal, bagasse, kenaf, bamboo and straw, by refining steps such as delignification by digestion treatment, and bleaching steps.

Cellulose nanofibers can be obtained by treatment of the pulp with hot water at 100°C or higher, hydrolysis of the hemicellulose portion to weaken it, and then defibrating by a pulverizing method using a high-pressure homogenizer, microfluidizer, ball mill or disk mill. According to one aspect, the size of the cellulose nanofibers is 2 to 1000 nm, preferably 4 nm or larger, 5 nm or larger, 10 nm or larger, 15 nm or larger, 20 nm or larger, 50 nm or larger or 100 nm or larger, and preferably 500 nm or smaller, 450 nm or smaller, 400 nm or smaller, 350 nm or smaller, 300 nm or smaller, 250 nm or smaller or 200 nm or smaller.

According to the first embodiment, the lengths, diameters and L/D ratio of the cellulose can be determined by diluting an aqueous dispersion of the cellulose with a water-soluble solvent (such as water, ethanol or *tert*-butanol) to 0.01 to 0.1 mass%, dispersing under processing conditions of 25,000 rpm × 5 minutes using a high-shear homogenizer (such as a "ULTRA-TURRAX T18" by IKA Corp.), casting onto mica and air-drying as a measuring sample, and performing measurement using a high-resolution scanning microscope (SEM) or atomic force microscope (AFM). Specifically, with the observation field adjusted to a magnification allowing observation of at least 100 fibers, the lengths (L) and diameters (D) of 100 randomly selected fibers are measured and the ratio (L/D) is calculated. The number-average value for the length (L), the number-average value for the diameter (D) and the number-average value for the ratio (L/D) is calculated for the cellulose.

The length, diameter and L/D ratio of the cellulose in the resin composition can be confirmed by measurement according to the measuring method described above, using the solid resin composition as the measuring sample. Alternatively, the length, diameter and L/D ratio of the cellulose in the resin composition can be determined by dissolving

the resin components of the resin composition in an organic or inorganic solvent that is able to dissolve the resin components of the resin composition, separating the cellulose, adequately rinsing it with the solvent, replacing the solvent with a water-soluble solvent (such as water, ethanol or *tert*-butanol), adjusting to a 0.01 to 0.1 mass% dispersion, and re-dispersing with a high-shear homogenizer (for example, a "ULTRA-TURRAX T18" by IKA Corp.). The re-dispersion may be cast onto mica and air-dried as a measuring sample, and confirmation made by measurement using the measuring methods described above. The cellulose is measured using 100 or more randomly selected fibers.

The degree of crystallinity of the cellulose is preferably 55% or greater. If the degree of crystallinity is within this range, the mechanical properties (strength and dimensional stability) of the cellulose itself will be high, so that when the cellulose is dispersed in a resin, the strength and dimensional stability of the resin composition will also tend to be high. A more preferred lower limit for the degree of crystallinity is 60%, preferably 70% and most preferably 80%. The upper limit for the degree of crystallinity of the cellulose is also not particularly restricted, a higher degree being preferred, but from the viewpoint of productivity the preferred upper limit is 99%.

The alkali-soluble polysaccharides such as hemicellulose and acid-insoluble components such as lignin are present between plant-derived cellulose microfibrils and between microfibril bundles. Hemicellulose is a polysaccharide composed of sugars such as mannan and xylan, and it plays a role in hydrogen bonding with cellulose and binding together microfibrils. Lignin is a compound with an aromatic ring that is known to participate in covalent bonding with hemicellulose in plant cell walls. A large residue of impurities such as lignin in cellulose may result in discoloration by heating during working, and therefore the degree of crystallinity of the cellulose is preferably within the ranges specified above from the viewpoint of minimizing discoloration of the resin composition during extrusion or during shaping.

When the cellulose is type I cellulose crystals (derived from natural cellulose), the degree of crystallinity referred to here is that determined by the following formula, from the diffraction pattern (2θ/deg. = 10 to 30) obtained by measurement of the sample by wide-angle X-ray diffraction, based on the Segal method.

$$\text{Degree of crystallinity (\%)} = ([\text{Diffraction intensity from (200) plane with } 2\theta/\text{deg.} = 22.5] - [\text{diffraction intensity from amorphous matter with } 2\theta/\text{deg.} = 18])/[\text{diffraction intensity from (200) plane with } 2\theta/\text{deg.} = 22.5] \times 100$$

When the cellulose is type II cellulose crystals (derived from regenerated cellulose), the degree of crystallinity is determined by the following formula, from the absolute peak intensity h0 at 2θ = 12.6° attributed to the (110) plane peak of the type II cellulose crystal, and the peak intensity h1 from the baseline for the plane spacing, in wide-angle X-ray diffraction.

$$\text{Degree of crystallinity (\%)} = h1/h0 \times 100$$

The known crystalline forms of cellulose include type I, type II, type III and type IV, among which type I and type II are most commonly used, whereas type III and type IV are not commonly used on an industrial scale but have been obtained on a laboratory scale. The cellulose of the present disclosure is preferably cellulose containing type I cellulose crystals and type II cellulose crystals, for relatively high mobility in terms of structure and to obtain a resin composition with a lower coefficient of linear expansion and more excellent strength and elongation when subjected to stretching or bending deformation, by dispersion of the cellulose in the resin, and more preferably the cellulose contains type I cellulose crystals and has a degree of crystallinity of 55% or higher.

The degree of polymerization of the cellulose is preferably 100 or greater, more preferably 150 or greater, even more preferably 200 or greater, yet more preferably 300 or greater and most preferably 400 or greater, and preferably 3500 or lower, more preferably 3300 or lower, even more preferably 3200 or lower, yet more preferably 3100 or lower and most preferably 3000 or lower.

The degree of polymerization of the cellulose is preferably within this range from the viewpoint of workability and mechanical properties. The degree of polymerization is preferably not too high from the viewpoint of workability, and it is preferably not too low from the viewpoint of exhibiting mechanical properties.

The degree of polymerization of the cellulose is the mean polymerization degree measured by a reduced relative viscosity method using a copper-ethylenediamine solution, as described in Verification Test (3) of "Japanese Pharmacopeia, 15th Edition Reference Manual (Hirokawa Shoten)".

According to one aspect, the weight-average molecular weight (Mw) of the cellulose is 100,000 or greater and preferably 200,000 or greater. The ratio (Mw/Mn) of the weight-average molecular weight and number-average molecular weight (Mn) is 6 or lower and preferably 5.4 or lower. A higher weight-average molecular weight means a lower number of terminal groups of the cellulose molecules. Since the ratio (Mw/Mn) of the weight-average molecular weight and

number-average molecular weight represents the width of the molecular weight distribution, a smaller Mw/Mn means a lower number of ends of cellulose molecules. Since the ends of the cellulose molecules are origins for thermal decomposition, a high weight-average molecular weight of the cellulose molecules alone is not sufficient, but when combined with a more narrow width of the molecular weight distribution, it is possible to obtain cellulose with especially high heat resistance, and a resin composition comprising the cellulose and resin. The weight-average molecular weight (Mw) of the cellulose may be 600,000 or lower, or 500,000 or lower, for example, from the viewpoint of greater availability of the cellulose starting material. The ratio (Mw/Mn) of the weight-average molecular weight and number-average molecular weight (Mn) may be 1.5 or greater or 2 or greater, for example from the viewpoint of easier production of the cellulose. The Mw can be controlled to within this range by selecting a cellulose starting material having the corresponding Mw, or by carrying out appropriate physical treatment and/or chemical treatment of the cellulose starting material. The Mw/Mn ratio can also be controlled to within this range by selecting a cellulose starting material having the corresponding Mw/Mn ratio, or by carrying out appropriate physical treatment and/or chemical treatment of the cellulose starting material. Examples of physical treatment for control of both the Mw and Mw/Mn include physical treatment by application of mechanical force, such as dry grinding or wet grinding with a microfluidizer, ball mill or disk mill, for example, or impacting, shearing, sliding or abrasion with a crusher, homomixer, high-pressure homogenizer or ultrasonic device, for example, while examples of chemical treatment include digestion, bleaching, acid treatment and regenerated cellulose treatment.

The weight-average molecular weight and number-average molecular weight of the cellulose referred to here are the values determined after dissolving the cellulose in lithium chloride-added N,N-dimethylacetamide, and then performing gel permeation chromatography with N,N-dimethylacetamide as the solvent.

The method of controlling the degree of polymerization (i.e. mean polymerization degree) or molecular weight of the cellulose may be hydrolysis. Hydrolysis promotes depolymerization of amorphous cellulose inside the cellulose and lowers the mean polymerization degree. Simultaneously, hydrolysis also results in removal of impurities such as hemicellulose and lignin in addition to the aforementioned amorphous cellulose, so that the interior of the fiber material becomes porous. Thus, in steps in which mechanical shear force is applied to the cellulose, such as during the kneading step and other steps described below, the cellulose is more easily subjected to mechanical processing and the cellulose is more easily micronized.

The method of hydrolysis is not particularly restricted and may be acid hydrolysis, alkali hydrolysis, hot water decomposition, steam explosion, microwave decomposition or the like. Such methods may be used alone or in combinations of two or more. In a method of acid hydrolysis, for example, the cellulose starting material is $\alpha$-cellulose obtained as pulp from a fibrous plant, which is dispersed in an aqueous medium, and then a suitable amount of a proton acid, carboxylic acid, Lewis acid, heteropolyacid or the like is added to the dispersion, and the mixture is heated while stirring, thereby allowing easy control of the mean polymerization degree. The reaction conditions such as temperature, pressure and time will differ depending on the type of cellulose, the cellulose concentration, the acid type and the acid concentration, and they are appropriately adjusted so as to obtain the desired mean polymerization degree. For example, a water-soluble mineral acid solution at up to 2 mass% may be used for treatment of cellulose for 10 minutes or longer under conditions of 100°C or higher under pressure. Under such conditions, the catalyst component, such as an acid, penetrates to the cellulose interior and hydrolysis is promoted, allowing a lower amount of catalyst component usage and easier subsequent refining. During hydrolysis, the dispersion of the cellulose material may contain, in addition to water, also a small amount of an organic solvent in a range that does not interfere with the effect of the invention.

Alkali-soluble polysaccharides in the cellulose include $\beta$-cellulose and $\gamma$-cellulose, in addition to hemicellulose. Alkali-soluble polysaccharides are understood by those skilled in the art to consist of the components that are obtained as the alkali-soluble portion of holocellulose (that is, the components other than $\alpha$-cellulose in the holocellulose), upon solvent extraction and chlorine treatment of a plant (such as wood). Since alkali-soluble polysaccharides consist of hydroxyl group-containing polysaccharides with poor heat resistance, which can lead to inconveniences such as decomposition when subjected to heat, yellowing due to heat aging and reduced strength of the cellulose, it is preferred to have a lower alkali-soluble polysaccharide content in the cellulose.

According to one aspect, the average content of alkali-soluble polysaccharides in the cellulose is preferably 20 mass% or lower, 18 mass% or lower, 15 mass% or lower, 12 mass% or lower, 11 mass% or lower or 8 mass% or lower with respect to 100 mass% of the cellulose, from the viewpoint of obtaining satisfactory dispersibility for the cellulose. The content may also be 1 mass% or greater, 2 mass% or greater, 3 mass% or greater or 6 mass% or greater from the viewpoint of facilitating production of the cellulose. According to one aspect, the average content of alkali-soluble polysaccharides in the cellulose starting material may be 13 mass% or lower, 12 mass% or lower, 11 mass% or lower or 8 mass% or lower, and it is most preferably 0 mass% but may be 3 mass% or greater or 6 mass% or greater, for example, from the viewpoint of availability of the cellulose starting material.

The average content of alkali-soluble polysaccharides can be determined by a method described in non-patent literature (Mokushitsu Kagaku Jikken Manual, ed. The Japan Wood Research Society, pp.92-97, 2000), subtracting the $\alpha$-cellulose content from the holocellulose content (Wise method). In the technical field this method is considered to be a method of measuring hemicellulose content. The alkali-soluble polysaccharide content is calculated 3 times for each

sample, and the number average for the calculated alkali-soluble polysaccharide contents is recorded as the average alkali-soluble polysaccharide content.

According to one aspect, the average content of acid-insoluble components in the cellulose is preferably 10 mass% or lower, 5 mass% or lower or 3 mass% or lower with respect to 100 mass% of the cellulose, from the viewpoint of avoiding reduction in heat resistance and resulting discoloration of the cellulose. The content may also be 0.1 mass% or greater, 0.2 mass% or greater or 0.3 mass% or greater from the viewpoint of facilitating production of the cellulose.

The average content of the acid-insoluble component is quantified using the Klason method, described in non-patent literature (Mokushitsu Kagaku Jikken Manual, ed. The Japan Wood Research Society, pp.92-97, 2000). In the technical field this method is considered to be a method of measuring lignin content. The sample is stirred in the sulfuric acid solution to dissolve the cellulose and hemicellulose, and then filtered with glass fiber filter paper, and the obtained residue is used as the acid-insoluble component. The acid-insoluble component content is calculated from the weight of the acid-insoluble component, and the average of the acid-insoluble component content calculated for three samples is recorded as the average content of the acid-insoluble component.

The cellulose may also be subjected to chemical treatment (such as oxidation or chemical modification using a modifying agent). As an example, Cellulose (1998)5, 153-164 describes using micronized cellulose fibers obtained by oxidizing cellulose fibers with a 2,2,6,6-tetramethylpiperidin-1-oxyl radical and then subjecting them to washing and mechanical defibration.

For the first embodiment, the proportion of cellulose (particularly the proportion of cellulose nanofibers) with respect to 100 mass% of the resin composition is preferably 0.1 mass% or greater, 0.5 mass% or greater, 1 mass% or greater or 3 mass% or greater, from the viewpoint of satisfactorily obtaining the advantages of low coefficient of linear expansion and high rigidity by the cellulose, and preferably 30 mass% or lower, 25 mass% or lower, 20 mass% or lower or 15 mass% or lower, from the viewpoint of satisfactorily obtaining the advantages of the other components in the resin composition.

For the first embodiment, the proportion of cellulose (particularly the proportion of cellulose nanofibers) with respect to 100 parts by mass of the polyamide is preferably 1 part by mass or greater, 5 parts by mass or greater, 10 parts by mass or greater or 15 parts by mass or greater, from the viewpoint of satisfactorily obtaining the advantages of low coefficient of linear expansion and high rigidity by the cellulose, and preferably 50 parts by mass or lower, 40 parts by mass or lower, 30 parts by mass or lower or 20 parts by mass or lower, from the viewpoint of satisfactorily dispersing the cellulose in the polyamide phase.

<Cellulose of second and third embodiments>

The resin composition of the second and third embodiments comprises cellulose. The cellulose may include fibrous cellulose. The cellulose may be cellulose nanofibers (CNF) with diameters of 50 to 1000 nm and a length (L)/diameter (D) ratio of 30 or greater, cellulose nanocrystals (CNC) with diameters of 100 nm or smaller and a length (L)/diameter (D) ratio of less than 30, or cellulose microfibers (CMF) with diameters of greater than 1 μm and up to 50 μm, or a mixture of these, with CNF, CNC or CMF, or their mixtures, being preferred. Such celluloses include the examples of natural cellulose and regenerated cellulose mentioned above.

Cellulose nanofibers (CNF) can be obtained by the procedure explained for the first embodiment. According to one aspect, the diameter of CNF is 50 to 1000 nm. The CNF diameters are preferably 50 nm or larger and more preferably 100 nm or larger, and preferably 400 nm or smaller and more preferably 200 nm or smaller. According to one aspect, the CNF L/D is 30 or greater, preferably 50 or greater, more preferably 80 or greater and even more preferably 100 or greater, and preferably 5000 or lower, more preferably 4000 or lower and even more preferably 3000 or lower.

Fig. 1 is a microscope image showing an example of cellulose nanofibers. The cellulose forms all have a fibrous structure, the diameters being 50 to 1000 nm and the L/D being 30 or greater.

Cellulose nanocrystals (CNC) are a form of crystalline cellulose remaining after using pulp as starting material, cutting it and then dissolving the amorphous portion of the cellulose in an acid such as hydrochloric acid or sulfuric acid. According to one aspect, the CNC diameter is 100 nm or smaller, preferably 80 nm or smaller and more preferably 70 nm or smaller, and preferably 3 nm or larger, more preferably 5 nm or larger and even more preferably 10 nm or larger. According to one aspect, the CNC length/diameter ratio (L/D ratio) is lower than 30, preferably 20 or lower, more preferably 15 or lower and even more preferably 10 or lower. According to one aspect, the L/D ratio is 1 or higher, preferably 2 or higher, more preferably 4 or higher and even more preferably 5 or higher.

Fig. 2 is a pair of microscope images showing an example of cellulose nanocrystals (also known as cellulose nanowhiskers or particulate cellulose needles), with Fig. 2(B) being a partial magnified view of Fig. 2(A). Both of the cellulose forms have a needle-crystalline particulate structure, with diameters of 100 nm or smaller and an L/D of less than 30.

Cellulose microfibers (CMF) are relatively large-sized fibrous cellulose obtained by shortening the defibrating step during the process of CNF production. According to one aspect, the CMF diameters are greater than 1 μm and up

to 50 μm. The CMF diameters are preferably 2 μm or larger, more preferably 5 μm or larger and even more preferably 10 μm or larger, and preferably 45 μm or smaller, more preferably 40 μm or smaller and even more preferably 35 μm or smaller. The CMF L/D is preferably 30 or greater, more preferably 50 or greater and even more preferably 70 or greater, and preferably 2000 or lower, more preferably 1000 or lower and even more preferably 500 or lower. CMF is usually obtained with about half of the energy used to produce CNF.

Fig. 3 is a photomicrograph showing an example of cellulose microfibers. All of the cellulose is seen to have diameters of greater than 1 μm and up to 50 μm and an L/D of 30 or greater.

The amount of cellulose is preferably 0.1 to 30 mass% with respect to 100 mass% as the total resin composition. The preferred upper limit for the amount of cellulose is 25 mass%, 20 mass% or 15 mass%. The preferred lower limit for the amount of cellulose is 0.5 mass%, 1 mass% or 3 mass%. These ranges are preferred from the viewpoint of lowering the coefficient of thermal expansion and obtaining satisfactory physical property stability.

As preferred aspects of the cellulose of the second and third embodiments, from the viewpoint of maintaining physical property stability, CNF may be used alone, CMF may be used alone, CNF and CNC may be used together, CNF and CMF may be used together, CMF and CNC may be used together or CMF, CNF and CNC may be used together. As more preferred aspects, CMF may be used alone, CNF and CNC may be used together, CNF and CMF may be used together, CMF and CNC may be used together, or CMF, CNF and CNC may be used together.

When CNF and CMF are used together, the preferred proportion of CMF is 50 to 99 mass% with respect to 100 mass% as the total amount of cellulose. The upper limit for the proportion is preferably 97 mass%, more preferably 95 mass%, even more preferably 93 mass% and most preferably 90 mass%. The lower limit for the proportion is preferably 55 mass%, more preferably 60 mass% and most preferably 70 mass%.

When CNF and CNC are used together, or when CMF and CNC are used together, the preferred proportion of CNC is 50 to 99 mass% with respect to 100 mass% as the total amount of cellulose. The upper limit for the proportion is preferably 97 mass%, more preferably 95 mass%, even more preferably 93 mass% and most preferably 90 mass%. The lower limit for the proportion is preferably 55 mass%, more preferably 60 mass% and most preferably 70 mass%.

When all three of CMF, CNF and CNC are used together, the preferred proportion of CNC is 50 to 99 mass% with respect to 100 mass% as the total amount of cellulose. The upper limit for the proportion is preferably 97 mass%, more preferably 95 mass%, even more preferably 93 mass% and most preferably 90 mass%. The lower limit for the proportion is preferably 55 mass%, more preferably 60 mass% and most preferably 65 mass%. The preferred proportion of CMF is 50 to 99 mass%, where 100 mass% is the total amount of cellulose other than CNC. The upper limit for the proportion is preferably 97 mass%, more preferably 95 mass%, even more preferably 93 mass% and most preferably 90 mass%. The lower limit for the proportion is preferably 55 mass%, more preferably 60 mass% and most preferably 70 mass%.

The amount of CNF is preferably 0.1 to 20 mass% with respect to 100 mass% of the resin composition. If the amount of CNF is within this range it will be possible to improve the properties such as thermal expansion. The lower limit for the amount is preferably 1 mass%, more preferably 2 mass%, even more preferably 3 mass% and most preferably 5 mass%. The upper limit is preferably 18 mass%, more preferably 16 mass%, even more preferably 14 mass% and most preferably 12 mass%.

The amount of CMF is also preferably 0.1 to 20 mass% with respect to 100 mass% of the resin composition. If the amount of CMF is within this range it will be possible to improve the properties such as tensile elongation and vibration fatigue. The lower limit for the amount is preferably 1 mass%, more preferably 2 mass%, even more preferably 3 mass% and most preferably 5 mass%. The upper limit is preferably 18 mass%, more preferably 16 mass%, even more preferably 14 mass% and most preferably 12 mass%.

For the second and third embodiments, the length, diameter and L/D ratio of the CNC and CNF are determined by preparing aqueous dispersions of both the CNC and CNF, each aqueous dispersion being dispersed using a high-shear homogenizer (for example, an "Excel ED-7 Autohomogenizer", trade name of Nippon Seiki Co., Ltd.), under processing conditions of rotational speed: 15,000 rpm × 5 minutes, diluting the aqueous dispersion with purified water to 0.1 to 0.5 mass%, casting this onto mica, and using the air-dried product as a measuring sample for measurement with a high-resolution scanning microscope (SEM) or atomic force microscope (AFM). Specifically, with the observation field adjusted to a magnification allowing observation of at least 100 cellulose aggregates, the lengths (L) and diameters (D) of 100 randomly selected cellulose aggregates are measured and the ratio (L/D) is calculated. A ratio (L/D) of less than 30 is classified as CNC, and 30 or greater is classified as CNF. For CNC and CNF, the number-average value of the length (L), the number-average value of the diameter (D) and the number-average value of the ratio (L/D) are calculated and recorded as the length, diameter and L/D ratio of CNC and CNF, respectively. The length and diameter of the cellulose are the number-average values for the 100 cellulose fibers.

Since CMF has a different size scale from CNC and CNF and an electron microscope is not suited for measuring its length, diameter and L/D ratio, the size of CMF is observed by a different method. A low-concentration aqueous dispersion with CMF adjusted to about 0.1 mass% is subjected to adequate vibration with an ultrasonic cleaner, or to 20 minutes of dispersion treatment using a disperser (such as a DESPAMILL Asada Iron Works Co., Ltd.) to loosen

entanglement between the CMF, after which the aqueous dispersion is directly observed with an optical microscope. The method of measurement and calculation used is the same as for CNF and CNC.

Alternatively, the length, diameter and L/D ratio of the CMF, CNC and CNF in the resin composition can be measured by dissolving the polymer components of the composition in an organic or inorganic solvent capable of dissolving the polymer components of the composition, separating the cellulose, thoroughly rinsing it with the solvent, and then replacing the solvent with purified water to form an aqueous dispersion, diluting the cellulose concentration to 0.1 to 0.5 mass% with purified water, casting the dispersion onto mica, and performing measurement by the measuring method described above using the air-dried product as the measuring sample.

The mean diameter obtained by volume-average particle size measurement of the CNC is preferably 10 nm or greater, more preferably 15 nm or greater, even more preferably 20 nm or greater, yet more preferably 40 nm or greater and most preferably 50 nm or greater, and preferably 1000 nm or lower, more preferably 700 nm or lower, even more preferably 500 nm or lower and most preferably 300 nm or lower.

The mean diameter obtained by volume-average particle size measurement of the CNF is preferably 20 nm or greater, more preferably 40 nm or greater and even more preferably 50 nm or greater, and preferably 1000 nm or lower, more preferably 700 nm or lower and even more preferably 500 nm or lower.

The volume-average particle size is the value determined to be the equivalent spherical diameter (volume-average particle size) of the particles at a cumulative volume of 50% using a particle size distribution meter based on laser diffraction/scattering. Specifically, the sample at a solid content of 40 mass% is kneaded for 30 minutes in a planetary mixer (for example, a 5DM-03-R by Shinagawa Machinery Works Co., Ltd., hook-type stirring blade) at 126 rpm, room temperature, ordinary pressure, and then a purified water suspension is prepared to 0.5 mass%, a high-shear homogenizer (for example, an "Excel ED-7 Autohomogenizer", trade name of Nippon Seiki Co., Ltd., processing conditions) is used for dispersion under treatment conditions of rotational speed: 15,000 rpm × 5 minutes, a centrifugal separator (for example, a "Model 6800 Centrifugal Separator", trade name of Kubota Corp., Rotor type Model RA-400) is used for centrifugation under treatment conditions of centrifugal force: 39,200 $m^2/s$, 10 minutes, the resulting supernatant is obtained, the supernatant is centrifuged at 116,000 $m^2/s$ for 45 minutes, and the centrifugation supernatant is obtained. The supernatant liquid is used to measure the 50% cumulative particle diameter, as the volume-average particle size (specifically, the equivalent spherical diameter of particles at a cumulative volume of 50% with respect to the total volume of the particles), in the volume frequency particle size distribution obtained using a particle size distribution meter based on laser diffraction/scattering (for example, an "LA-910" or "LA-950", trade names of Horiba, Ltd., with ultrasonic treatment for 1 minute, refractive index: 1.20).

For the second and third embodiments, the degree of crystallinity, crystalline form, polymerization degree, weight-average molecular weight (Mw), weight-average molecular weight/number-average molecular weight (Mn) ratio (Mw/Mn) of the cellulose, the average content of alkali-soluble polysaccharides, the average content of acid-insoluble components and the methods of measurement and preparation used, may be the same as explained for the first embodiment.

<Hydrophobizing of cellulose>

The cellulose of the first to third embodiments may be cellulose that has been hydrophobized with a hydrophobic agent (also referred to herein as chemically modified cellulose). Hydrophobizing has an effect of weakening the hydrogen bonds between the cellulose and contributing to microdispersion, while increasing the heat resistance of the cellulose and helping to inhibit deterioration caused by kneading with the resin, so that the cellulose is less likely to form origins for physical property defects. The hydrophobic agent (also referred to herein as "modifying agent") used may be a compound that reacts with the hydroxyl groups of cellulose, and it may be an esterifying agent, an etherifying agent or a silylating agent. An esterifying agent is especially preferred. According to a preferred aspect, the hydrophobizing is acylation using an esterifying agent. Preferred esterifying agents are acid halides, acid anhydrides and vinyl carboxylate esters. According to an especially preferred aspect, the hydrophobizing is acetylation.

An acid halide may be one or more selected from the group consisting of compounds represented by the following formula (1).

$$R^1\text{-C(=O)-X} \qquad (1)$$

(In the formula, R1 represents an alkyl group of 1 to 24 carbon atoms, an alkenyl group of 2 to 24 carbon atoms, a cycloalkyl group of 3 to 24 carbon atoms or an aryl group of 6 to 24 carbon atoms, and X is Cl, Br or I.)

Specific examples of acid halides include acetyl chloride, acetyl bromide, acetyl iodide, propionyl chloride, propionyl bromide, propionyl iodide, butyryl chloride, butyryl bromide, butyryl iodide, benzoyl chloride, benzoyl bromide and benzoyl iodide, with no limitation to these. Acid chlorides are preferably used among these from the viewpoint of reactivity and handleability. For reaction of an acid halide, one or more alkaline compounds may also be added to

neutralize the acidic by-products while simultaneously exhibiting catalytic action. Specific examples of alkaline compounds include: tertiary amine compounds such as triethylamine and trimethylamine; and nitrogen-containing aromatic compounds such as pyridine and dimethylaminopyridine; with no limitation to these.

Any suitable acid anhydride may be used as an acid anhydride. Examples include:

saturated aliphatic monocarboxylic anhydrides of acetic acid, propionic acid, (iso)butyric acid and valeric acid;
unsaturated aliphatic monocarboxylic anhydrides of (meth)acrylic acid and oleic acid;
alicyclic monocarboxylic anhydrides of cyclohexanecarboxylic acid and tetrahydrobenzoic acid;
aromatic monocarboxylic anhydrides of benzoic acid and 4-methylbenzoic acid;
dibasic carboxylic anhydrides, for example: saturated aliphatic dicarboxylic acid anhydrides such as succinic anhydride and adipic anhydride, unsaturated aliphatic dicarboxylic anhydrides such as maleic anhydride and itaconic anhydride, alicyclic dicarboxylic acid anhydrides such as 1-cyclohexene-1,2-dicarboxylic anhydride, hexahydrophthalic anhydride and methyltetrahydrophthalic anhydride, and aromatic dicarboxylic anhydrides such as phthalic anhydride and naphthalic anhydride; and
tribasic or greater polybasic carboxylic anhydrides, for example: polycarboxylic acid (anhydrides) such as trimellitic anhydride and pyromellitic anhydride.

The catalyst for reaction of an acid anhydride may be one or more types of an acidic compound such as sulfuric acid, hydrochloric acid or phosphoric acid, or a Lewis acid (such as a Lewis acid compound represented by MYn where M represents a metalloid element such as B, As or Ge, a base metal element such as Al, Bi or In, a transition metal element such as Ti, Zn or Cu, or a lanthanoid element, n represents an integer corresponding to the valence of M and is 2 or 3, and Y represents a halogen atom, OAc, $OCOCF_3$, $ClO_4$, $SbF_6$, $PF_6$ or $OSO_2CF_3$(OTf)), or an alkaline compound such as triethylamine or pyridine.

Preferred vinyl carboxylate esters are vinyl carboxylate esters represented by the following formula (1):

$R\text{-}COO\text{-}CH{=}CH_2$: formula (1)

{where R is an alkyl group of 1 to 24 carbon atoms, an alkenyl group of 2 to 24 carbon atoms, a cycloalkyl group of 3 to 16 carbon atoms or an aryl group of 6 to 24 carbon atoms}. Vinyl carboxylate esters are more preferably one or more selected from the group consisting of vinyl acetate, vinyl propionate, vinyl butyrate, vinyl caproate, vinyl cyclohexanecarboxylate, vinyl caprylate, vinyl caprate, vinyl laurate, vinyl myristate, vinyl palmitate, vinyl stearate, vinyl pivalate, vinyl octylate, divinyl adipate, vinyl methacrylate, vinyl crotonate, vinyl pivalate, vinyl octylate, vinyl benzoate and vinyl cinnamate. For esterification reaction with a vinyl carboxylate ester, one or more catalysts selected from the group consisting of alkali metal hydroxides, alkaline earth metal hydroxides, alkali metal carbonates, alkaline earth metal carbonates, alkali metal hydrogencarbonate salts, primary to tertiary amines, quaternary ammonium salts, imidazoles and their derivatives, pyridines and their derivatives, and alkoxides, may be added.

Alkali metal hydroxides and alkaline earth metal hydroxides include sodium hydroxide, potassium hydroxide, lithium hydroxide, calcium hydroxide and barium hydroxide. Alkali metal carbonates, alkaline earth metal carbonates and alkali metal hydrogencarbonate salts include lithium carbonate, sodium carbonate, potassium carbonate, cesium carbonate, magnesium carbonate, calcium carbonate, barium carbonate, lithium hydrogencarbonate, sodium hydrogencarbonate and potassium hydrogencarbonate cesium hydrogencarbonate.

Primary to tertiary amines are primary amines, secondary amines and tertiary amines, specific examples of which include ethylenediamine, diethylamine, proline, N,N,N',N'-tetramethylethylenediamine, N,N,N',N'-tetramethyl-1,3-propanediamine, N,N,N',N'-tetramethyl-1,6-hexanediamine, tris(3-dimethylaminopropyl)amine, N,N-dimethylcyclohexylamine and triethylamine.

Imidazole and its derivatives include 1-methylimidazole, 3-aminopropylimidazole and carbonyldiimidazole.

Pyridine and its derivatives include N,N-dimethyl-4-aminopyridine and picoline.

Alkoxides include sodium methoxide, sodium ethoxide and potassium-*t*-butoxide.

Carboxylic acids include one or more selected from the group consisting of compounds represented by the following formula (1).

R-COOH: (1)

(In the formula, R represents an alkyl group of 1 to 16 carbon atoms, an alkenyl group of 2 to 16 carbon atoms, a cycloalkyl group of 3 to 16 carbon atoms or an aryl group of 6 to 16 carbon atoms.)

Specific examples of carboxylic acids include one or more selected from the group consisting of acetic acid, propionic acid, butyric acid, caproic acid, cyclohexanecarboxylic acid, caprylic acid, capric acid, lauric acid, myristic acid, palmitic acid, stearic acid, pivalic acid, methacrylic acid, crotonic acid, pivalic acid, octylic acid, benzoic acid and cinnamic

acid.

Preferred among these carboxylic acids are one or more selected from the group consisting of acetic acid, propionic acid and butyric acid, and especially acetic acid, from the viewpoint of reaction efficiency.

The catalyst for reaction of a carboxylic acid may be one or more types of an acidic compound such as sulfuric acid, hydrochloric acid or phosphoric acid, or a Lewis acid (such as a Lewis acid compound represented by MYn where M represents a metalloid element such as B, As or Ge, a base metal element such as Al, Bi or In, a transition metal element such as Ti, Zn or Cu, or a lanthanoid element, n represents an integer corresponding to the valence of M and is 2 or 3, and Y represents a halogen atom, OAc, $OCOCF_3$, $ClO_4$, $SbF_6$, $PF_6$ or $OSO_2CF_3$(OTf)), or an alkaline compound such as triethylamine or pyridine.

Particularly preferred among these esterification reactants are one or more selected from the group consisting of acetic anhydride, propionic anhydride, butyric anhydride, vinyl acetate, vinyl propionate, vinyl butyrate and acetic acid, among which acetic anhydride and vinyl acetate are especially preferred from the viewpoint of reaction efficiency.

For obtaining hydrophobized cellulose nanofibers, the method for micronizing the natural cellulose starting material to reduce the fiber diameters is not particularly restricted, but it is preferred for the defibrating treatment conditions (creation of the shear field or the size of the shear field) to be as efficient as possible. In particular, when a defibrating solution containing an aprotic solvent is impregnated with a cellulose starting material having a cellulose purity of 85 mass% or greater, swelling of the cellulose is rapidly induced and only a small degree of stirring and shear energy is applied during micronization of the cellulose. A cellulose modifying agent may also be added immediately after defibrating, to obtain hydrophobized cellulose nanofibers. This method is preferred from the viewpoint of production efficiency and refining efficiency (i.e. higher cellulose purity of the hydrophobized cellulose nanofibers), as well as the physical properties of the resin composition.

The aprotic solvent may be an alkyl sulfoxide, an alkylamide or pyrrolidone, for example. Any of these solvents may be used alone or in combinations of two or more.

Examples of alkyl sulfoxides include di-C1-4 alkyl sulfoxides such as dimethyl sulfoxide (DMSO), methylethyl sulfoxide and diethyl sulfoxide.

Examples of alkylamides include N,N-di-C1-4 alkylformamides such as N,N-dimethylformamide (DMF) and N,N-diethylformamide; and N,N-di-C1-4 alkylacetamides such as N,N-dimethylacetamide (DMAc) and N,N-diethylacetamide.

Examples of pyrrolidones include pyrrolidones such as 2-pyrrolidone and 3-pyrrolidone; and N-C1-4 alkylpyrrolidones such as N-methyl-2-pyrrolidone (NMP).

Any of these aprotic solvents may be used alone or in combinations of two or more. Among these aprotic solvents, using DMSO (29.8), DMF (26.6), DMAc (27.8) and NMP (27.3) (the numerals in parentheses indicate the donor numbers), and especially DMSO, will allow hydrophobized cellulose nanofibers with a high thermal decomposition initiation temperature to be more efficiently produced. While the action mechanism is not completely understood, it is theorized to be due to homogeneous microswelling of the fiber starting material in the aprotic solvent.

When the cellulose starting material for the cellulose nanofibers swells in the aprotic solvent, the aprotic solvent rapidly permeates the fibrils composing the starting material and swells them, such that the microfibrils are converted to a fine defibrated state. After this state has been created, chemical modification is carried out to promote hydrophobizing in a homogeneous manner throughout all of the microfilaments, by which, presumably, high heat resistance is obtained. In addition, the microfibrillated chemically modified nanofibers maintain a high degree of crystallinity, and allow high mechanical properties and excellent dimensional stability (especially a very low coefficient of linear thermal expansion) to be obtained when composited with resins.

When hydrophobized cellulose nanofibers are to be obtained, the micronized (defibrated) and hydrophobically-treated cellulose nanofibers are not limited to these and may be obtained using an apparatus that applies impact shearing, such as a planetary ball mill or bead mill, an apparatus that applies a rotating shear field that induces fibrillation of cellulose, such as a disc refiner or grinder, or an apparatus that can carry out functions of kneading, agitation and dispersion in a highly efficient manner, such as any of various types of kneaders or planetary mixers.

The degree of hydrophobicity (degree of modification) of the cellulose is represented as the average degree of substitution of hydroxyl groups (the average number of hydroxyl groups replaced per glucose molecule, as the basic structural unit of cellulose, or "DS"). According to one aspect, the DS of the chemically modified cellulose is preferably 0.01 to 2.0. If DS is 0.01 or greater it will be possible to obtain a resin composition containing chemically modified cellulose with a high thermal decomposition initiation temperature. If it is 2.0 or lower, on the other hand, the unmodified cellulose backbone will remain in the chemically modified cellulose, making it possible to obtain a resin composition containing chemically modified cellulose which exhibits both the high tensile strength and dimensional stability of the cellulose and the high thermal decomposition initiation temperature due to chemical modification. DS is more preferably 0.05 or greater, more preferably 0.1 or greater, even more preferably 0.2 or greater and most preferably 0.3 or greater, and preferably 1.8 or lower, more preferably 1.5 or lower, even more preferably 1.2 or lower and most preferably 1.0 or lower.

In the reflective infrared absorption spectrum of the hydrophobized cellulose, the peak locations of the absorption bands vary depending on the type of hydrophobized modifying groups. Based on variation in the peak locations it is possible to determine from which absorption bands the peaks are based, allowing identification of modifying groups. It is also possible to calculate the modification rate from the peak intensity ratio of peaks attributable to the modifying groups and peaks attributable to the cellulose backbone.

When the modifying group is an acyl group, the degree of acyl substitution (DS) can be calculated based on the peak intensity ratio between the acyl group-derived peak and the cellulose backbone-derived peak, in the reflective infrared absorption spectrum of the esterified cellulose. The peak of the absorption band for C=O based on acyl groups appears at 1730 $cm^{-1}$, while the peak of the absorption band for C-O based on the cellulose backbone chain appears at 1030 $cm^{-1}$ (see Figs. 4 and 5). The DS of esterified cellulose can be calculated using the calibration curve:

$$\text{Degree of substitution DS} = 4.13 \times \text{IR index (1030)},$$

derived from a correlation graph drawn between DS obtained from solid NMR measurement of the esterified cellulose described below, and the modification rate (IR index 1030), defined by the ratio of the peak intensity of the absorption band for C=O based on acyl groups with respect to the peak intensity of the absorption band for C-O of the cellulose backbone chain.

Solid NMR is used when it is difficult to perform proper measurement by the reflective infrared absorption spectrum. The method of determining DS of the esterified cellulose by solid NMR may be performing $^{13}C$ solid NMR measurement of the freeze-shattered esterified cellulose, and calculating the value by the following formula using the area intensity (Inf) of the signal attributed to one carbon atom of the modifying group, with respect to the total area intensity (Inp) of the signals attributed to C1-C6 carbons of the pyranose rings of cellulose, appearing in the range of 50 ppm to 110 ppm.

$$DS = (Inf) \times 6/(Inp)$$

For example, when the modifying group is acetyl, the signal at 23 ppm attributed to $-CH_3$ may be used.

The conditions in the $^{13}C$ solid NMR measurement may be as follows, for example.

Apparatus: Bruker Biospin Avance 500WB
Frequency: 125.77 MHz
Measuring method: DD/MAS
Latency time: 75 sec
NMR sample tube: 4 mmcp
Number of scans: 640 (-14 hr)
MAS: 14,500 Hz
Chemical shift reference: glycine (external reference: 176.03 ppm)

<Antioxidant>

The resin composition of the first to third embodiments may further comprise an antioxidant. An antioxidant is advantageous from the viewpoint of inhibiting heat degradation of each of the components (such as the polyphenylene ether, elastomer and/or saponified ethylene-vinyl ester-based copolymer) during melt kneading of the resin composition at a high temperature above the melting point of the polyamide. The antioxidant may be one or more selected from the group consisting of hindered phenol-based antioxidants, hindered amine-based antioxidants, phosphorus-based antioxidants, sulfur-based antioxidants, benzotriazole-based antioxidants, benzophenone-based antioxidants, triazine-based antioxidants, salicylic acid esteric antioxidants and p-phenylenediamine-based antioxidants. For example, according to the third embodiment a hindered phenol-based antioxidant or phosphorus-based antioxidant is especially preferred.

Hindered phenol-based antioxidants include 2,4-bis[(laurylthio)methyl]-*o*-cresol, 1,3,5-tris(3,5-di-*t*-butyl-4-hydroxybenzyl), 1,3,5-tris(4-*t*-butyl-3-hydroxy-2,6-dimethylbenzyl), 2,4-bis-(*n*-octylthio)-6-(4-hydroxy-3,5-di-*t*-butylanilino)-1,3,5-triazine, pentaerythritoltetrakis[3-(3,5-di-*tert*-butyl-4-hydroxyphenyl)propionate, 2,6-di-*t*-butyl-4-nonylphenol, 2,2'-isobutylidene-bis-(4,6-dimethyl-phenol), 4,4'-butylidene-bis-(2-*t*-butyl-5-methylphenol), 2,2'-thio-bis-(6-t-butyl-4-methylphenol), 2,5-di-*t*-amyl-hydroquinone, 2,2'-thiodiethylbis-(3,5-di-t-butyl-4-hydroxyphenyl)-propionate, 1,1,3-tris-(2'-methyl-4'-hydroxy-5'-*t*-butylphenyl)-butane, 2,2'-methylene-bis-(6-(1-methyl-cyclohexyl)-*p*-cresol), 2,4-dimethyl-6-(1-methyl-cyclohexyl)-phenol and N,N-hexamethylenebis(3,5-di-*t*-butyl-4-hydroxy-hydrocinnamide). Other oligomer-type and

polymer-type compounds with hindered phenol structures may also be used.

Specific examples include ADEKASTAB AO-20, AO-30, AO-40, AO50, AO60, AO80 and AO320 by Adeka Corp., KEMINOX101, 179 ,76 and 9425 by Chemipro Co., Ltd., IRGANOX 1010, 1035, 1076, 1098, 1135, 1330, 1726, 1425WL, 1520L, 245, 259, 3114, 5057 and 565 by BASF Corp., and CYANOX CY-1790 and CY-2777 by SunChemical Co., Ltd.

Hindered amine-based antioxidants include bis(2,2,6,6-tetramethyl-4-piperidyl)sebacate, bis(N-methyl-2,2,6,6-tetramethyl-4-piperidyl)sebacate, N, N'-bis(2,2,6,6-tetramethyl-4-piperidyl)-1,6-hexamethylenediamine, 2-methyl-2-(2,2,6,6-tetramethyl-4-piperidyl)amino-N-(2,2,6,6-tetramethyl-4-piperidyl)propionamide, tetrakis(2,2,6,6-tetramethyl-4-piperidyl) (1,2,3,4-butanetetracarboxylate, poly[{6-(1,1,3,3-tetramethylbutyl)imino-1,3,5-triazine-2,4-diyl}{(2,2,6,6-tetramethyl-4-piperidyl)imino}hexamethyl{(2,2,6,6-tetramethyl-4-piperidyl)imino }], poly[(6-morpholino-1,3,5-triazine-2,4-diyl){(2,2,6,6-tetramethyl-4-piperidyl)imino}hexamethine{(2,2,6,6-tetramethyl-4-piperidyl)imino}], polycondensates of dimethyl succinate and 1-(2-hydroxyethyl)-4-hydroxy-2,2,6,6-tetramethylpiperidine, and N,N'-4,7-tetrakis[4,6-bis{N-butyl-N-(1,2,2,6,6-pentamethyl-4-piperidyl)amino}-1,3,5-triazin-2-yl]-4,7-diazadecane-1,10-diamine. Other oligomer-type and polymer-type compounds with hindered amine structures may also be used.

Specific examples include ADEKASTAB LA-52, LA-57, LA-63P, LA-68, LA-72, LA-77Y, LA-77G, LA-81, LA-82, LA-87, LA-402F and LA-502XP by Adeka Corp., KAMISTAB 29, 62, 77, 29 and 94 by Chemipro Co., Ltd., Tinuvin 249, TINUVIN 111FDL, 123, 144, 292 and 5100 by BASF Corp. and CYASORB UV-3346, UV-3529 and UV-3853 by SunChemical Co., Ltd.

Phosphorus-based antioxidants include tris(isodecyl)phosphite, tris(tridecyl)phosphite, phenylisooctyl phosphite, phenylisodecyl phosphite, phenyldi(tridecyl)phosphite, diphenylisooctyl phosphite, diphenylisodecyl phosphite, diphenyltridecyl phosphite, triphenyl phosphite, tris(nonylphenyl)phosphite, 4,4'isopropylidenediphenolalkyl phosphite, trisnonylphenyl phosphite, trisdinonylphenyl phosphite, tris(2,4-di-*t*-butylphenyl)phosphite, tris(biphenyl)phosphite, distearylpentaerythritol diphosphite, di(2,4-di-*t*-butylphenyl)pentaerythritol diphosphite, di(nonylphenyl)pentaerythritol diphosphite, phenylbisphenol A pentaerythritol diphosphite, tetratridecyl 4,4'-butylidcncbis(3-methyl-6-*t*-butylphenol) diphosphite, hexatridecyl 1,1,3-tris(2-methyl-4-hydroxy-5-*t*-butylphenyl)butane triphosphite, 3,5-di-*t*-butyl-4-hydroxybenzyl phosphite diethyl ester, sodium bis(4-*t*-butylphenyl)phosphite, sodium-2,2-methylene-bis(4,6-di-t-butylphenyl)-phosphite, 1,3-bis(diphenoxyphosphonyloxy)-benzene and ethyl bis(2,4-di-*tert*-butyl-6-methylphenyl) phosphite. Other oligomer-type and polymer-type compounds with phosphite structures may also be used.

Specific examples include ADEKASTAB PEP-36, PEP-8 and HP-10 and ADEKASTAB 2112, 1178, 1500, C, 3013 and TPP by Adeka Corp., IRGAFOS 168 by BASF Corp., and Hostanox P-EPQ by Clariant Chemicals Co.

Sulfur-based antioxidants include 2,2-thio-diethylene bis[3-(3,5-di-*t*-butyl-4-hydroxyphenyl)propionate], 2,4-bis[(octylthio)methyl]-o-cresol, 2,4-bis[(laurylthio)methyl]-o-cresol, 2,2-bis {[3 -(dodecylthio)-1-oxopropoxy] methyl }propane-1,3 -diylbis [3 - (dodecylthio)propionate] and 2,2-thio-diethylene bis[3-(3,5-di-*t*-butyl-4-hydroxyphenyl)propionate]. Other oligomer-type and polymer-type compounds with thioether structures may also be used.

Specific examples include ADEKASTAB AO-412S and AO-503 by Adeka Corp. and KEMINOX PLS by Chemipro Co., Ltd.

Other oligomer-type and polymer-type compounds with benzotriazole structures may be used as benzotriazole-based antioxidants.

Specific examples include ADEKASTAB LA-29, LA-31RG, LA- 32, LA-36 and -412S by Adeka Corp., KEMISORB 71, 73, 74, 79 and 279 by Chemipro Co., Ltd. and TINUVIN PS, 99-2, 384-2, 900, 928 and 1130 by BASF Corp.

Benzophenone-based antioxidants include 2-hydroxy-4-methoxybenzophenone, 2,4-dihydroxybenzophenone, 2-hydroxy-4-n-octoxybenzophenone, 4-dodecyloxy-2-hydroxybenzophenone, 2-hydroxy-4-octadecyloxybenzophenone, 2,2'-dihydroxy-4-methoxybenzophenone, 2,2'-dihydroxy-4,4'-dimethoxybenzophenone, 2,2', 4,4'-tetrahydroxybenzophenone, 2-hydroxy-4-methoxy-5-sulfobenzophenone and 2-hydroxy-4-methoxy-2'-carboxybenzophenone. Other oligomer-type and polymer-type compounds with benzophenone structures may also be used.

Specific examples include ADEKASTAB 1413 by Adeka Corp., KEMISORB 10, 11, 11S, 12 and 111 by Chemipro Co., Ltd. and UV-12 and UV-329 by SunChemical Co., Ltd.

Triazine-based antioxidants include 2,4-bis(allyl)-6-(2-hydroxyphenyl)1,3,5-triazine. Other oligomer-type and polymer-type compounds with triazine structures may also be used.

Specific examples include ADEKASTAB LA-46 and F70 by Adeka Corp., KEMISORB 102 by Chemipro Co., Ltd., TINUVIN 400, 405, 460, 477 and 479 by BASF Corp. and CYASORB UV-1164 by SunChemical Co., Ltd.

Salicylic acid ester-based antioxidants include phenyl salicylate, *p*-octylphenyl salicylate and *p-tert*-butylphenyl salicylate. Other oligomer-type and polymer-type compounds with salicylic acid ester structures may also be used.

These antioxidants may be used alone, or if necessary they may be used in mixtures of two or more in any desired proportion.

From the viewpoint of inhibiting heat degradation of the resin composition, the antioxidant content is preferably 0.001 mass% or greater, more preferably 0.01 mass% or greater, even more preferably 0.05 mass% or greater and most preferably 0.1 mass% or greater, in 100 mass% of the resin composition. From the viewpoint of inhibiting reduction

in the balance of physical properties of the resin composition, the content is preferably 10 mass% or lower, more preferably 5 mass% or lower and even more preferably 2 mass% or lower.

<Conductive carbon-based filler>

According to the first to third embodiments, the resin composition may further comprise a conductive carbon-based filler. This will allow a conductive resin composition to be obtained. Preferred conductive carbon-based fillers include carbon black, carbon fibers, graphite, graphene and carbon nanotubes. These also function as coloring agents in some cases. The form of these conductive carbon-based fillers may be particulate, flaky or fibrous. Specific examples of preferred conductive carbon-based fillers to be used include conductive carbon black, carbon nanotubes (CNT), carbon fibers and graphite, among which conductive carbon black and CNT are most preferred.

According to the first and second embodiments, the dibutyl phthalate (DBP) absorption of the conductive carbon black is preferably 250 ml/100 g or greater, more preferably 300 ml/100 g or greater and even more preferably 350 ml/100 g or greater. The DBP absorption referred to herein is the value measured by the method established by ASTM D2414. The upper limit for the DBP absorption is not particularly restricted and may be 400 ml/100 g or lower, for example, from the viewpoint of availability. The conductive carbon black has a BET surface area of preferably 200 $m^2/g$ or greater and more preferably 400 $m^2/g$ or greater. The upper limit for the BET surface area is not particularly restricted and may be 2000 $m^2/g$ or lower, for example, from the viewpoint of availability. Conductive carbon black having a DBP absorption of 250 ml/100 g or greater and/or a BET surface area of 200 $m^2/g$ or greater differs from ordinary carbon black for coloring (which usually has a DBP absorption of less than 250 ml/ 100 g and a BET surface area of less than 200 $m^2/g$), and can exhibit satisfactory conductivity with addition in small amounts.

According to the third embodiment, the dibutyl phthalate (DBP) absorption of the conductive carbon black is preferably 20 ml/100 g or greater, more preferably 30 ml/100 g or greater and even more preferably 50 ml/100 g or greater. The upper limit for the DBP absorption is not particularly restricted and may be 400 ml/100 g or lower, for example, from the viewpoint of availability. The conductive carbon black has a BET surface area of preferably 20 $m^2/g$ or greater and more preferably 40 $m^2/g$ or greater. The upper limit for the BET surface area is not particularly restricted and may be 2000 $m^2/g$ or lower, for example, from the viewpoint of availability.

Conductive carbon blacks that are available as commercial products for the first to third embodiments include Ketchen black EC-600 JD.

Carbon nanotubes (CNT) are carbon-based fibers having a hollow structure with fiber diameters of 100 nm or lower. CNT includes monolayer carbon nanotubes formed of monolayer carbon tube walls, and multilayer nanotubes formed of multilayer carbon.

The conductive carbon-based filler may be one with enhanced adhesiveness with resins and/or handleability by treatment with various known coupling agents and/or convergence agents.

The preferred amount of conductive carbon-based filler is 0.1 to 10 mass%, where 100 mass% is the total resin composition. The upper limit is preferably 8 mass%, more preferably 6 mass% and most preferably 3 mass%. The lower limit is preferably 0.3 mass%, more preferably 0.5 mass% and most preferably 0.8 mass%. These ranges are preferred in order to maintain stable balance between conductivity and fluidity of the resin composition.

<Aggregation inhibitor>

According to the first to third embodiments, the resin composition may further comprise an aggregation inhibitor. Because cellulose has a property of aggregating during drying steps, making it difficult to re-disperse, it is preferred to use an aggregation inhibitor to increase the redispersibility of cellulose when it has been melt kneaded with a resin. Increasing the redispersibility can improve the mechanical properties of the resulting resin composition, as well as its stability. The aggregation inhibitor is preferably added to the aqueous dispersion of cellulose and the mixture is then dried while applying shear to obtain a cellulose powder.

The preferred amount of aggregation inhibitor is 2 to 100 parts by mass with respect to 100 parts by mass of cellulose in the resin composition. The lower limit is more preferably 4 parts by mass, even more preferably 5 parts by mass and most preferably 6 parts by mass. The upper limit is more preferably 80 parts by mass, even more preferably 60 parts by mass and most preferably 40 parts by mass. These ranges are preferred in order to increase the dispersibility of the cellulose in the resin and increase the physical property stability.

The aggregation inhibitor may be at least one type selected from the group consisting of surfactants, organic compounds with a boiling point of 100°C or higher, and resins having a chemical structure capable of highly dispersing cellulose.

The surfactant may be one having a chemical structure in which a site with a hydrophilic substituent and a site with a hydrophobic substituent are covalently bonded, and any ones utilized for a variety of purposes including consumption and industrial use may be used. Examples include the following, either alone or in combinations of two or more.

The surfactant used may be any anionic surfactant, nonionic surfactant, zwitterionic surfactant or cationic surfactant, but from the viewpoint of affinity with cellulose, an anionic surfactant or nonionic surfactant is preferred, and a nonionic surfactant is more preferred.

Among the above, from the viewpoint of affinity with cellulose, surfactants having polyoxyethylene chains, carboxyl groups or hydroxyl groups as hydrophilic groups are preferred, polyoxyethylene-based surfactants with polyoxyethylene chains as hydrophilic groups (polyoxyethylene derivatives) are more preferred, and nonionic polyoxyethylene derivatives are even more preferred. The polyoxyethylene chain length of a polyoxyethylene derivative is preferably 3 or greater, more preferably 5 or greater, even more preferably 10 or greater and most preferably 15 or greater. A longer chain length will increase the affinity with cellulose, but for balance with the coating property, it is preferably no greater than 60, as the upper limit, more preferably no greater than 50, even more preferably no greater than 40, especially preferably no greater than 30 and most preferably no greater than 20.

Of the aforementioned surfactants, it is especially preferred to use those with alkyl ether-type, alkylphenyl ether-type, rosin ester-type, bisphenol A-type, β-naphthyl-type, styrenated phenyl-type or hydrogenated castor oil-type hydrophobic groups, because of their high affinity with resins. The alkyl chain length (the number of carbon atoms excluding the phenyl group in the case of alkylphenyl) is a carbon chain of preferably 5 or greater, more preferably 10 or greater, even more preferably 12 or greater and most preferably 16 or greater. There is no upper limit when the resin is a polyolefin because a greater number of carbon atoms increases affinity with the resin, but the upper limit is preferably no more than 30 and more preferably no more than 25, from the viewpoint of handleability.

Preferred among these hydrophobic groups are those having a cyclic structure and those having bulk and a polyfunctional structure. Those with a cyclic structure include alkylphenyl ether-type, rosin ester-type, bisphenol A-type, β-naphthyl-type and styrenated phenyl-type groups, and those with a polyfunctional structure include hydrogenated castor oil-type groups. More particularly preferred among these are rosin ester types and hydrogenated castor oil types.

Organic compounds with boiling points of 100°C or higher are effective as non-surfactant dispersing media. Examples of such organic compounds include organic compounds with polyethylene glycol, polypropylene glycol and glycerin structures. When the resin is a polyolefin it is effective to use a high-boiling-point organic solvent such as liquid paraffin or decalin, although this will depend on the type of resin. When the resin is a polar resin such as nylon or polyacetate, it is effective to use the same solvent as the aprotic solvent that may be used for production of the cellulose, such as dimethyl sulfoxide, for example.

<Coloring agent>

The resin composition of the first to third embodiments may further comprise a coloring agent. Organic coloring agents are advantageous because they provide an effect of improving the toughness of the resin composition. Examples of organic coloring agents include azine-based compounds (such as nigrosine), aniline black, cyanine-based compounds (such as phthalocyanine and naphthalocyanine), porphyrin, perylene, quaterrylene, metal complexes, azo dyes, anthraquinone, quadratic acid derivatives and immonium dyes, with nigrosine being especially preferred. Nigrosine is known to those skilled in the art as a black azine-based condensation mixture, and it is indicated by its Colour Index, examples including C.I. SOLVENT BLACK 5 and C.I. SOLVENT BLACK 7. Specific examples of nigrosine include triphenazine-oxazine and phenazine-azine. Commercially available nigrosine products include Nubian Black PA-9801, Nubian Black PA-9800 and Nubian Black PA-0800 (all available from Orient Chemical Industries, Ltd.). Nigrosine not only functions merely as a coloring agent but also has an effect of delaying crystallization of polyamide during production of a resin composition, and especially during cooling after melt kneading, and it therefore increases the toughness of the resin composition while also inhibiting defects, thereby lowering variation in the toughness of the resin composition.

The nigrosine content in 100 mass% of the resin composition is preferably 0.001 mass% or greater, 0.01 mass% or greater or 0.03 mass% or greater, from the viewpoint of satisfactorily obtaining the aforementioned effect by using the nigrosine, and preferably 1 mass% or lower, 0.5 mass% or lower or 0.3 mass% or lower, from the viewpoint of dimensional stability.

<Other components>

According to the first to third embodiments, the resin composition may also include other components, namely additives including nanofiber filler components composed of highly heat-resistant organic polymers other than cellulose (for example, fibrillated fibers nanofibers obtained from aramid fibers); compatibilizers; plasticizers; polysaccharides such as starch and alginic acid; natural proteins such as gelatin, nikawa and casein; inorganic compounds such as zeolite, ceramics, talc, silica, metal oxides and metal powders; perfumes; pigments; flow adjusters; leveling agents; conductive agents; antistatic agents; ultraviolet absorbers; ultraviolet dispersing agents; and deodorants. The content ratios of these other components in the resin composition may be appropriately selected in ranges that do not interfere with the desired effect of the invention.

<Production of resin composition>

The method of producing the resin composition of the first to third embodiments is not particularly restricted, and the following may be mentioned as specific examples. A method of using a single-screw or twin-screw extruder for melt kneading of the first polymer (polyamide), the second polymer (polyphenylene ether), the cellulose (cellulose nanofibers), and the optional mixture of elastomers (first embodiment), mixture of a polyamide, elastomer and cellulose (second embodiment), or mixture of a polyamide, saponified ethylene-vinyl ester-based copolymer and cellulose, and optionally an elastomer (third embodiment), extrusion into a strand, and cooling solidification in a water bath, to obtain molded pellets, a method of using a single-screw or twin-screw extruder for melt kneading in the same manner, extruding into a rod or tube and cooling to obtain an extruded body, or a method of using a single-screw or twin-screw extruder for melt kneading and extruding through a T-die to obtain a molded sheet or film, may be used.

<Resin composition form>

The resin composition of the first to third embodiments can be provided in a variety of forms. Specifically, it may be in the form of resin pellets, sheets, fiber, plates or rods, with the form of resin pellets being more preferred for easier post-working and easier transport. The preferred form of pellets may be round, elliptical or cylindrical, depending on the system used for cutting during extrusion. Pellets cut by the method known as "underwater cutting" are usually round, pellets cut by the method known as "hot cutting" are usually round or elliptical, and pellets cut by the method known as "strand cutting" are usually cylindrical. The preferred size for round pellets is 1 mm to 3 mm, as the diameter of the pellets. The preferred diameter for cylindrical pellets is 1 mm to 3 mm, and the preferred length is 2 mm to 10 mm. The diameter and length are preferably above these specified lower limits from the viewpoint of operational stability during extrusion, and they are preferably lower than the specified upper limits from the viewpoint of seizing in the molding machine in post-working.

The resin composition of the first to third embodiments can be utilized for a variety of molded resins. There are no particular restrictions on the method of producing the molded resin, and any production method may be employed, such as injection molding, extrusion molding, blow molding, inflation molding or foam molding. Injection molding is most preferred among these from the viewpoint of designability and cost.

<Resin composition properties>

The coefficient of variation CV of the tensile breaking strength of the resin composition of the first to third embodiments is preferably no greater than 10%, from the viewpoint of eliminating strength defects in the obtained molded body. The coefficient of variation referred to here is the value obtained by dividing the standard deviation ($\sigma$) by the arithmetic mean ($\mu$) and multiplying by 100 to express a percentage, and it is a unitless value indicating relative variation.

$$CV = (\sigma/\mu) \times 100$$

The symbols $\mu$ and $\sigma$ are given by the following formulas.

[Mathematical Formula 1]

$$\mu = \frac{1}{n}\sum_{i=1}^{n} x_i$$

$$\sigma^2 = \frac{1}{n}\sum_{i=1}^{n} (x_i - \mu)^2$$

In the formulas, xi represents individual data for tensile breaking strength, from n number of data values: x1, x2, x3 ... xn.

The number of samples (n) for calculation of the coefficient of variation CV of the tensile breaking strength is preferably 10 or greater, in order to allow defects to be more easily found. The number is even more preferably 15 or greater.

A more preferred upper limit for the coefficient of variation is 9%, more preferably 8%, even more preferably 7%, yet more preferably 6% and most preferably 5%. The lower limit is desirably zero, but preferably 0.1% from the viewpoint of facilitating production.

Partial strength defects in a molded resin are thought to be caused by uneven dispersion of the filler and void formation. One index for evaluating the tendency to form strength defects is a method of carrying out a tensile test with multiple test pieces, and confirming the presence and number of variations in the breaking strength.

For example, if uneven filler dispersed sections or voids are present in molded bodies for structural parts such as automobile bodies, door panels or bumpers, then stress becomes concentrated when large stress is instantaneously applied to the molded body, or when the stress is small but repetitive, such as during vibration, leading to fracture of the molded body. This lowers the reliability of the product.

It has been very difficult in the prior art to predict structural defects in actual products at the testing stage, and for example, methods have been used that confirm the presence of defects in products using microscopes or the like. With microscope observation, however, since the observation is on the microscopic level, it has not been possible to comprehensively evaluate test pieces as a whole, or the product as a whole.

In the course of pursuing research in this regard, the present inventors have found a correlation between the coefficient of variation of the tensile breaking strength, and the proportion of structural defects in products.

More specifically, if the material has a homogeneous internal structure and no voids, then even when multiple samples have been subjected to tensile rupture testing, the stress that leads to rupture will be essentially the same across all of the multiple samples and the coefficient of variation will be very small. However, if the material has interior uneven sections and voids, then stress leading to rupture in a given sample will differ significantly from stress in other samples. The abundance of samples exhibiting stress differing from stress in other samples can be elucidated using the coefficient of variation as the standard.

As an example, in the case of a material without yield strength, samples having interior defects will undergo rupture at lower strength than other samples. In the case of a material with yield strength, rupture usually takes place after yielding and during necking, and therefore samples having interior defects exhibit a tendency to undergo rupture at higher strength than other samples. Nevertheless, despite such differences in behavior, using the coefficient of variation of the tensile breaking strength as the standard can predict the potential for strength defects in actual products.

The coefficient of variation of the tensile breaking strength is thought to be greatly affected by the dispersed state and dispersed location of the cellulose component in the composition. In the case of a polyamide/elastomer alloy of the second embodiment, for example, the interface layer between the elastomer phase and the elastomer and polyamide is an important site for stabilizing the physical properties. For example, localization at the interface between the dispersed phase and continuous phase of the cellulose, or in the dispersed phase, causes the sites of localization to become points of stress concentration, lowering the physical property stability. In other words, stably dispersing cellulose in the polyamide phase helps to stabilize the physical properties.

Various methods of stably dispersing cellulose in the polyamide phase may be mentioned for the first to third embodiments. For the first embodiment, for example, various approaches include a method of appropriately adjusting the compositional ratio between the polyamide and the total of the polyphenylene ether and optional elastomer, a method of optimizing the amount of acidic functional groups of the polyphenylene ether and the optional elastomer, a method of appropriately adjusting the terminal group concentration of the polyamide, a method of optimizing the order of addition during kneading of the cellulose, a method of adding a suitable surfactant or the like to weaken affinity between the polyphenylene ether and cellulose or to increase affinity with the polyamide, a method of using a master batch of the polyamide and cellulose melt mixed in advance, a method of optimizing the screw orientation during extrusion, and a method of optimizing the resin viscosity by temperature control during processing. Various approaches for the second embodiment, for example, include a method of appropriately adjusting the compositional ratio between the polyamide and the elastomer, a method of optimizing the amount of acidic functional groups of the elastomer, a method of appropriately adjusting the terminal group concentration of the polyamide, a method of optimizing the order of addition during kneading of the cellulose, a method of adding a suitable surfactant or the like to weaken affinity between the elastomer and cellulose or to increase affinity with the polyamide, a method of using a master batch of the polyamide and cellulose melt mixed in advance, a method of optimizing the screw orientation during extrusion, and a method of optimizing the resin viscosity by temperature control during processing.

Stability of the physical properties is also increased by improving the heat resistance of the cellulose and preventing formation of structural defect origins by heat degradation during kneading with the resin.

Any of these approaches may be used to stably disperse the cellulose in the polyamide phase. Limiting the coefficient of variation CV of the tensile breaking strength to no greater than 10% can significantly contribute to eliminating

strength defects in obtained molded bodies, to provide an effect of vastly improving the reliability of the molded body strength.

With the resin composition according to the first to third embodiments, the tensile yield strength tends to be drastically improved compared to a thermoplastic resin alone. The ratio of the tensile yield strength of the resin composition, where the tensile yield strength of the thermoplastic resin alone is defined as 1.0, is preferably at least 1.1 times, more preferably at least 1.15 times, even more preferably at least 1.2 times and most preferably at least 1.3 times. The upper limit for this ratio is not particularly restricted, but from the viewpoint of easier production it is preferably 5.0 times and more preferably 4.0 times, for example.

Since the resin composition of the first to third embodiments comprises cellulose it can exhibit low thermal expansion without having higher specific gravity. Specifically, the coefficient of thermal expansion of the resin composition in the temperature range of 20°C to 100°C is preferably 70 ppm/K or lower, more preferably 60 ppm/K or lower, even more preferably 50 ppm/K or lower, yet more preferably 45 ppm/K or lower, even yet more preferably 40 ppm/K or lower and most preferably 35 ppm/K or lower. The lower limit for the coefficient of thermal expansion is not particularly restricted, but from the viewpoint of easier production it is preferably 5 ppm/K and more preferably 10 ppm/K, for example.

The resin composition of the first to third embodiments can have cellulose stably microdispersed in the polyamide phase, and can exhibit the feature of low variation in the coefficient of linear expansion of large molded bodies. Specifically, it can exhibit the feature of very low variation in coefficient of linear expansion, when measured using test pieces obtained from different sections of a large molded body.

When dispersion of the cellulose in the resin composition is uneven and the difference in coefficient of linear expansion is large depending on the location, temperature changes tend to produce problems such as distortion or warping of the molded body. Moreover, such problems occur due to differences in thermal expansion, and constitute a failure mode that reversibly results from rising and falling temperature. This can result in a failure mode that entails latent risk which is impossible to discern when checked for under room temperature conditions.

The size of variation in the coefficient of linear expansion can be expressed using the coefficient of variation of the coefficients of linear expansion of measuring samples obtained from sections at different locations. The coefficient of variation referred to here is measured by the same method as explained above for the coefficient of variation of the tensile breaking strength.

The coefficient of variation in the coefficient of linear expansion of the resin composition of the first to third embodiments is preferably 15% or lower. The upper limit for the coefficient of variation is more preferably 13%, even more preferably 11%, yet more preferably 10%, even yet more preferably 9% and most preferably 8%. The lower limit is desirably zero, but preferably 0.1% from the viewpoint of facilitating production.

The number of samples (n) for calculation of the coefficient of variation of the coefficient of linear expansion is preferably at least 10 in order to reduce the effects of data error.

<Tensile fracture strain>

According to the first embodiment, the tensile fracture strain of the resin composition is preferably 10% or greater, 20% or greater, 30% or greater, 40% or greater or 50% or greater. Such a resin composition is preferred because it has excellent toughness. While a high tensile fracture strain is preferred for the resin composition, it is 500% or lower, 200% or lower or 100% or lower, for example, from the viewpoint of facilitating production of the resin composition. The tensile fracture strain is the value obtained as the strain at the point of fracture of a rectangular test strip with a length of 70 mm, a width of 10 mm and a thickness of 2 mm in a tensile test conducted using a tensile tester in an environment of 23°C, 50% relative humidity with a chuck distance of 40 mm, a pull rate of 5 mm/min.

According to the second and third embodiments, the tensile fracture strain of the resin composition is preferably 10% or greater, 20% or greater, 30% or greater, 40% or greater or 50% or greater. Such a resin composition is preferred because it has excellent toughness. While a high tensile fracture strain is preferred for the resin composition, it is 500% or lower, 200% or lower or 100% or lower, for example, from the viewpoint of facilitating production of the resin composition. The tensile fracture strain is the value obtained as the arithmetic mean of 5 data points for strain at the point of fracture of an ISO 37 type 3 test piece, in a tensile test conducted using a tensile tester in an environment of 23°C, 50% relative humidity with a pull rate of 5 mm/min.

The resin composition of the first to third embodiments has the advantage of low anisotropy of physical properties. At the center section of a multipurpose test piece of the resin composition molded according to ISO294-1, the degree of orientation of the cellulose (especially the degree of orientation of the cellulose nanofibers) determined by the small angle X-ray scattering method is preferably 0.45 or lower, 0.40 or lower, 0.35 or lower, 0.30 or lower, 0.25 or lower or 0.20 or lower, from the viewpoint of low physical property anisotropy. While a lower degree of orientation is preferred, it may be 0.01 or higher, 0.05 or higher or 0.10 or higher, for example, from the viewpoint of facilitating production of the resin composition.

EXAMPLES

The aspects of the invention will now be described concretely by Examples, with the understanding that the invention is not limited to these Examples.

- Example I (first embodiment) -

<Materials>

<Polyamide>

(1) Polyamide 6 (PA6)

The carboxy-terminal group ratio is ([COOH]/[total terminal groups]) = 0.7
The viscosity number (VN) of polyamide measured in 96 mass% sulfuric acid according to ISO307 is 95.

(2) Polyamide 66 (PA66)

The carboxy-terminal group ratio is ([COOH]/[total terminal groups]) = 0.6
The viscosity number (VN) of polyamide measured in 96 mass% sulfuric acid according to ISO307 is 118.

(3) Polyamide 610 (PA610)

The carboxy-terminal group ratio is ([COOH]/[total terminal groups]) = 0.5
The viscosity number (VN) of polyamide measured in 96 mass% sulfuric acid according to ISO307 is 115.

(4) Polyamide 12 (PA12)

The carboxy-terminal group ratio is ([COOH]/[total terminal groups]) = 0.6
The viscosity number (VN) of polyamide measured in 96 mass% sulfuric acid according to ISO307 is 98.

<Polyphenylene ether (amorphous resin)>

(1) Polyphenylene ether (PPE)

Poly(2,6-dimethyl-1,4-phenylene ether)
Limiting viscosity [η]: 0.40 dl/g, glass transition point: 210°C

(2) Maleic anhydride-modified polyphenylene ether (m-PPE) To 100 parts by mass of PPE there were added 0.1 parts by mass of a radical initiator and 1.5 parts by mass of maleic anhydride, and a twin-screw extruder was used for melt kneading at a cylinder temperature of 320°C. The m-PPE maleic anhydride addition rate was 0.5% and the glass transition point was 210°C.

<Elastomer>

(1) Maleic anhydride-modified styrene-ethylene-butylene-styrene block copolymer (m-SEBS) After adding 0.15 parts by mass of a radical initiator and 1.4 parts by mass of maleic anhydride to a styrene-ethylenebutylene-styrene block copolymer with a bonded styrene content of 20 mass% (TUFTEC H1052 (Asahi Kasei Corp.)), a twin-screw extruder was used for melt kneading at a cylinder temperature of 230°C. The m-SEBS maleic anhydride addition rate was 0.9%, the MFR (230°C, 2.16 kgf) was 8 g/10 min, and the glass transition point was -48°C.
(2) Maleic anhydride-modified ethylene-octene copolymer (m-EOR)

FUSABOND MN-493D (Dow-DuPont)
MFR (190°C, 2.16 kgf) = 1.2 g/10 min
Octene content = 28 mass%
Melting point = 55°C (DSC: temperature-elevating rate = 10°C/min)
Glass transition point = -55°C

(3) Styrene-ethylene-butylene-styrene block copolymer (SEBS)

TAIPOL 6151 (TSRC Corp.)
Styrene content = 33 mass%
Weight-average molecular weight = 270,000
Glass transition point = -48°C

(4) Styrene-butadiene-styrene block copolymer (SBS1)

ASAPRENE T-437 (Asahi Kasei Corp.)
Styrene content = 30 mass%
MFR (200°C, 5 kgf) = 2 g/10 min
Glass transition point = -75°C

(5) Styrene-butadiene-styrene block copolymer (SBS2)

TUFPRENE A (Asahi Kasei Corp.)
Styrene content = 40 mass%
MFR (200°C, 5 kgf) = 13 g/10 min
Glass transition point = -75°C

(6) Styrene-butadiene-styrene block copolymer (SBS3)

TUFPRENE T-438 (Asahi Kasei Corp.)
Styrene content = 35 mass%
MFR (200°C, 5 kgf) = 25 g/10 min
Glass transition point = -75°C

<Antioxidant>

IRGANOX 1010 (BASF Japan)

<Hydrophobized CNF>

(Defibrating step)

Linter pulp used as starting material was stirred for 1 hour at ordinary temperature, 500 rpm in a uniaxial stirrer (DKV-1 φ125 mm Dissolver by Aimex Corp.), in dimethyl sulfoxide (DMSO). The mixture was then fed to a bead mill (NVM-1.5 by Aimex Corp.) using a hose pump and circulated for 120 minutes with DMSO alone, to obtain a defibrated slurry.

(Defibrating and acetylating step)

After adding 11 parts by mass of vinyl acetate and 1.63 parts by mass of sodium hydrogencarbonate to 100 parts by mass of the defibrated slurry in a bead mill apparatus, the mixture was further circulated for 60 minutes to obtain a hydrophobized CNF slurry.

The rotational speed of the bead mill during circulation was 2500 rpm, and the circumferential speed was 12 m/s. The beads used were zirconia, φ2.0 mm, and the fill factor was 70% (with a slit gap of 0.6 mm in the bead mill). Also during the circulation, the slurry temperature was controlled to 40°C with a chiller, for absorption of the heat release by abrasion.

After adding 192 parts by mass of purified water to the obtained hydrophobized CNF slurry, with respect to 100 parts by mass of the defibrated slurry, and thoroughly stirring the mixture, it was placed in a dehydrator and concentrated.

The obtained wet cake was then re-dispersed in the same amount of purified water and stirred and concentrated, and this rinsing procedure was repeated a total of 5 times.

Upon evaluating the properties of the obtained hydrophobized CNF (in the form of a wet cake or porous sheet), the degree of substitution DS of acyl groups (degree of acetylation) was 0.9, the degree of crystallinity was 75%, the mean fiber size was 65 nm, the L/D was ≥30 (approximately 450), the Mw was 340,000, the Mw/Mn ratio was 5.4 and the alkali-soluble polysaccharide average content was 3.4 mass%.

PEG20000 was added to an aqueous dispersion of the obtained hydrophobized CNF (solid content: 10 mass%) at 5 parts by mass with respect to 100 parts by mass of hydrophobized CNF, and then a revolving/rotating stirrer (HIVIS MIX 2P-1 by Primix Corp.) was used for vacuum drying at about 40°C to obtain hydrophobized CNF powder.

<Evaluation methods>

<Polymer evaluation>

[Melting point]

The peak top temperature of the endothermic peak appearing for polymer pellets was measured using a differential scanning calorimeter (DSC8500 by Perkin Elmer), with temperature increase from 23°C at a temperature-elevating rate of 10°C/min. When two or more endothermic peaks appeared, the peak top temperature of the peak furthest at the low-temperature end was recorded as the melting point.

[Glass transition point]

This was recorded as the temperature of the top of the peak where the storage modulus was significantly reduced and the loss modulus was maximum, when the center section of a multipurpose test piece sheet obtained by molding the polymer according to ISO294-1 was measured using a dynamic viscoelasticity measuring apparatus (ARES G2 by TA Instruments) under measuring conditions with an applied frequency of 10 Hz while increasing the temperature from -100°C at a temperature-elevating rate of 2°C/min. When two or more loss modulus peaks appeared, the glass transition point was recorded as the peak top temperature of the peak that was furthest at the low-temperature end.

<Evaluation of CNF>

[Fabrication of porous sheet]

The wet cake was first added to tert-butanol, and dispersed with a mixer until aggregates were no longer seen. The mixture was then prepared to a concentration of 0.5 mass% for 0.5 g of CNF solid weight. A 100 g portion of the obtained tert-butanol dispersion was filtered on filter paper and dried at 150°C, and then the filter paper was detached to obtain a sheet. Sheets with air permeability resistance up to 100 sec/100 ml per 10 g/$m^2$ basis weight of the sheet were considered to be porous sheets, and were used as measuring samples.

After measuring the basis weight W (g/$m^2$) of each sample that had been left to stand for 1 day in an environment of 23°C, 50% RH, an Oken-type air permeability resistance tester (Model EG01 by Asahi Seiko Co., Ltd.) was used to measure the air permeability resistance R (sec/100 ml). The value per 10 g/$m^2$ basis weight was calculated by the following formula.

$$\text{Air permeability resistance (sec/100 ml) per 10 g/m}^2\text{ basis weight} = R/W \times 10$$

[Acyl group degree of substitution (DS)]

The infrared spectrum of the porous sheet was measured at 5 locations by ATR-IR, using a Fourier transform infrared spectrometer (FT/IR-6200 by Jasco Corp.). The infrared spectrum was measured under the following conditions.

Number of scans: 64 times,
Wavenumber resolution: 4 $cm^{-1}$,
Wavenumber range: 4000 to 600 $cm^{-1}$,
ATR crystal: diamond,
Incident angle: 45°

The IR index was calculated from the obtained IR spectrum using the following formula (1):

$$\text{IR index} = \text{H1730/H1030}$$

(1) In the formula, H1730 and H1030 are the absorbances at 1730 $cm^{-1}$ and 1030 $cm^{-1}$ (absorption bands for C-O stretching vibration of the cellulose backbone chain). The respective baselines used were a line connecting 1900 $cm^{-1}$ and 1500 $cm^{-1}$ and a line connecting 800 $cm^{-1}$ and 1500 $cm^{-1}$, each baseline being defined as the absorbance at absorbance = 0.

The average degree of substitution at each measured location was calculated from the IR index using the following formula (2), and the average value was recorded as DS.

$$\text{DS} = 4.13 \times \text{IR index} \quad (2)$$

[Degree of crystallinity]

The porous sheet was measured by X-ray diffraction and the degree of crystallinity was calculated by the following formula.

$$\text{Degree of crystallinity (\%)} = [I_{(200)} - I_{(amorphous)}]/I_{(200)} \times 100$$

$I_{(200)}$: Diffraction peak intensity at 200 plane (2θ = 22.5°) of type I cellulose crystal
$I_{(amorphous)}$: Amorphous halo peak intensity for type I cellulose crystal, peak intensity at angle of 4.5° lower than diffraction angle at 200 plane (2θ = 18.0°).

(X-ray diffraction measuring conditions)

Apparatus: MiniFlex (Rigaku Corp.)
Operating shaft: 2θ/θ
Source: CuKα
Measuring method: Continuous
Voltage: 40 kV
Current: 15 mA
Initial angle: 2θ = 5°
Final angle: 2θ = 30°
Sampling width: 0.020°
Scan speed: 2.0°/min
Sample: Porous sheet attached to specimen holder.

[Mean fiber diameter, L/D]

The wet cake was diluted with tert-butanol to 0.01 mass% and dispersed using a high-shear homogenizer ("ULTRA-TURRAX T18", trade name of IKA Corp.) with treatment conditions of 25,000 rpm × 5 min, cast onto mica and air-dried, and the resulting dispersion was measured with a high-resolution scanning microscope. The measurement was carried out with adjustment of the magnification so that at least 100 cellulose fibers were observable, the lengths (L) and long diameters (D) of 100 randomly selected cellulose fibers and their ratios were determined, and the addition average for the 100 cellulose fibers was calculated.

[Weight-average molecular weight (Mw), number-average molecular weight (Mn) and Mw/Mn ratio]

After weighing out 0.88 g of the porous sheet and chopping it into small pieces with scissors, the pieces were gently stirred and allowed to stand for one day after addition of 20 mL of purified water. The water and solid portion were then separated by centrifugation. After then adding 20 mL of acetone, the mixture was gently stirred and allowed to stand for 1 day. The acetone and solid portion were separated by centrifugation. After then adding 20 mL of N,N-dimethylacetamide, the mixture was gently stirred and allowed to stand for 1 day. Centrifugal separation was again carried out to separate the N,N-dimethylacetamide and solid content, and then 20 mL of N,N-dimethylacetamide was added and the mixture was gently stirred and allowed to stand for 1 day. The N,N-dimethylacetamide and solid content were separated by centrifugation, 19.2 g of a N,N-dimethylacetamide solution prepared to a lithium chloride content of 8 mass% was added to the solid portion, and the mixture was stirred with a stirrer while visually confirming dissolution. The cellulose-dissolving solution was filtered with a 0.45 μm filter, and the filtrate was supplied as a sample for gel permeation chromatography. The apparatus and measuring conditions used were as follows.

Apparatus: Tosoh Corp. HLC-8120
Column: TSKgel SuperAWM-H (6.0 mm I.D. × 15 cm) × 2
Detector: RI detector
Eluent: N,N-dimethylacetamide (lithium chloride: 0.2%)
Flow rate: 0.6 mL/min
Calibration curve: Based on pullulan

[Alkali-soluble polysaccharide average content]

The alkali-soluble polysaccharide content was determined by a method described in non-patent literature for CNF (Mokushitsu Kagaku Jikken Manual, ed. The Japan Wood Research Society, pp.92-97, 2000), subtracting the α-cellulose content from the holocellulose content (Wise method). The alkali-soluble polysaccharide content was calculated 3 times for each sample, and the number average for the calculated alkali-soluble polysaccharide contents was recorded as the average alkali-soluble polysaccharide content for the CNF.

<Fender evaluation>

[Fender molding]

The obtained pellets were used for molding of fenders, using a prescribed die, wherein the cylinder temperature of an injection molding machine having a maximum locking pressure of 4000 tons was set to 260°C and which was capable of molding a fender having the shape shown in the schematic diagrams of Figs. 6 and 7 (cavity volume: ~1400 $cm^3$, mean thickness: 2 mm, projected area: ~7000 $cm^2$, number of gates: 5 gates, hot runner: In Fig. 6, the relative position 1 of the runner (hot runner) is shown to clearly indicate the runner position of the molded body), with the die temperature set to 80°C.

[CNF polyamide phase ratio]

Referring to Fig. 7, a sample cut out from location (9) of the fender was observed with a transmission electron microscope, and the area (CNFp) representing the amount of cellulose in the polyamide phase and the area (CNFo) representing the amount of cellulose in the other phase were confirmed. The polyamide phase and the other phase were appropriately dyed with a staining agent to allow the cellulose to be clearly confirmed.

The polyamide phase ratio of the CNF was calculated by the following formula.

$$\text{CNF Polyamide phase ratio} = \text{CNFp}/(\text{CNFp} + \text{CNFo})$$

[Water absorption percentage]

Referring to Fig. 7, an approximately 10 mm-square section was cut out from location (10) of the fender, to obtain a small flat test piece with 10 mm length, 10 mm width and 2 mm thickness. The weight (Wb) of the test piece before water absorption was measured. After immersing the test piece in hot water at 80°C for 17 hours, it was exposed in a thermo-hygrostat for 100 hours under conditions of 80°C, 57 RH%, and then allowed to stand for 24 hours in a steady temperature and humidity room at 23°C, 50 RH%, after which the weight (Wa) of the test piece after water absorption was measured. The water absorption percentage was calculated by the following formula.

$$\text{Water absorption percentage} = (\text{Wa} - \text{Wb})/\text{Wb} \times 100$$

[Coefficient of linear expansion]

Referring to Fig. 7, a rectangular test strip was prepared, 10 mm in the direction of resin flow from location (1) of the fender, 5 mm in the direction perpendicular to the direction of resin flow, and with a 2 mm thickness. The expansion coefficient was measured in the direction of resin flow during molding, in the measuring temperature range of -10°C to 120°C, according to ISO11359-2, and the expansion coefficient at 20°C to 100°C was calculated. Before the measurement, it was stationed for 5 hours in an environment at 120°C for annealing.

[Linear expansion anisotropy]

For the coefficient of linear expansion, the expansion rate was measured in the direction perpendicular to the direction of resin flow during molding, in the measuring temperature range of -10°C to 120°C, according to ISO11359-2, and the expansion coefficient at 20°C to 100°C was calculated. Before the measurement, it was stationed for 5 hours in an environment at 120°C for annealing.

The linear expansion anisotropy was calculated by the following formula.

Linear expansion anisotropy = coefficient of linear expansion in direction of resin flow during molding/coefficient of linear expansion in direction perpendicular to direction of resin flow during molding

[Tensile fracture strain]

Referring to Fig. 7, a rectangular test strip was prepared, 70 mm in the direction of resin flow from location (2) of the fender, 10 mm in the direction perpendicular to the direction of resin flow, and with a 2 mm thickness. A tensile test was conducted using a tensile tester (Autograph AG-IS by Shimadzu Corp.) at 23°C, 50 RH%, with a chuck distance of 40 mm and a pull rate of 5 mm/min, and the strain at the point of fracture was recorded as the tensile fracture strain.

[Degree of orientation of cellulose]

The center section of a flat multipurpose test piece obtained by molding the resin composition according to ISO294-1 was measured by small angle X-ray scattering using X-rays incident perpendicular to the flat surface, to determine the degree of orientation of the cellulose. Specifically, after obtaining a one-dimensional scattering profile derived by the circular average in a two-dimensional scattering pattern obtained by small angle X-ray scattering measurement, and performing background correction, the declination dependence of scattering intensity in the range of $0.05 < q < 0.07\ nm^{-1}$ was obtained. The formula $q = 4\pi\sin\theta/\lambda$ ($\lambda$: X-ray wavelength, $2\theta$: scattering angle) applies in this case. The degree of orientation $<P_2>$ was calculated as follows based on the results.

Assuming three perpendicular axes, the angles formed between the cellulose fiber axis direction and the three axes are represented in the following formula as $\alpha$, $\beta$ and $\gamma$.

[Mathematical Formula 2]

$$< \cos^2\alpha > + < \cos^2\beta > + < \cos^2\gamma > = 1$$

The following formula applies where $\alpha$ is the angle between the flow direction during molding of the multipurpose test piece and the cellulose fibers axis, and the cellulose is symmetrical around the flow direction.

[Mathematical Formula 3]

$$< \cos^2\alpha > = 1 - 2 < \cos^2\beta >$$

Since scattering from the cellulose surface appears in the $\beta$ direction which is perpendicular to $\alpha$, $<\cos^2\beta>$ can be calculated by the following formula.

[Mathematical Formula 4]

$$< \cos^2 \beta > = \frac{\int I(\beta) \cos^2 \beta \sin \beta d\beta}{\int I(\beta) \sin \beta d\beta}$$

The degree of orientation $<P_2>$ of a cellulose fiber axis is therefore represented by the following formula.

[Mathematical Formula 5]

$$< P_2 > = \frac{3 < \cos^2 \alpha > - 1}{2} = 1 - 3 < \cos^2 \beta >$$

In the case of perfect orientation along the flow direction, $<P_2>$ is 1, or with non-orientation it is 0.

(Small angle X-ray scattering measuring conditions)

Apparatus: NANOPIX by Rigaku Corp.
X-ray wavelength: 0.154 nm
Optical system: Point collimation (1st: 0.55 mmφ, 2nd: Open, guard: 0.35 mmφ)
Detector: HyPix-6000 (two-dimensional semiconductor detector)
Camera length: 1312 mm
Exposure time: 15 min/sample
Sample cell environment: Air
Test piece placement: Placed with the left-right direction as the resin composition flow direction during molding of the multipurpose test piece
X-ray incidence: Direction perpendicular to multipurpose test piece surface

<Production of composite>

[Extruder design]

Using a twin-screw extruder with 13 cylinder blocks and an L/D of 52 (TEM SX Series extruder by Toshiba Machine Co., Ltd.), a side feed port was fitted into cylinder 5 to allow the starting material to be fed in, while a vent port was fitted at cylinder 12 for decompression suction to allow removal of the volatile components and copresent air.

The screw construction had cylinders 1 to 2 as transport screws, two clockwise kneading discs on cylinders 3 to 4 (right-handed kneading discs: RKD), followed by one neutral kneading disc (non-transport-type kneading disc: NKD) and followed by a counter-clockwise screw as the pre-mixing zone, and cylinder 5 as the side feed zone as a transport screw and one RKD and two NKDs on cylinders 6 to 7, and followed by one counter-clockwise screw, as the melt kneading zone. Transport screws were used up to cylinders 8 to 9, and one RKD followed by one NKD and followed by a counter-clockwise screw were set at cylinder 10, as the kneading zone. Cylinders 11 to 13 were transport screws as the volatile volatilization zone.

[Example 1-1]

A mixture of 34.3 parts by mass (pbw) m-PPE and 14.3 parts by mass hydrophobized CNF (of which 4.3 parts by mass PEG20000) was fed through cylinder 1 of an extruder having cylinder 1 water-cooled, cylinder 3 set to 300°C and the other cylinders set to 250°C, and was kneaded and extruded into a strand. The strand was cut with a strand cutter to obtain m-PPE/hydrophobized CNF master batch pellets.

A mixture of 51.4 parts by mass of PA6 and 48.6 parts by mass of m-PPE/hydrophobized CNF master batch

was fed through cylinder 1 of an extruder having cylinder 1 water-cooled and the other cylinders set to 250°C, and was kneaded and extruded into a strand. The strand was cut with a strand cutter to obtain hydrophobized CNF composite pellets. The composition of the obtained composite is shown in Table 1.

[Example 1-2]

A component of 34.3 parts by mass of m-PPE was fed through cylinder 1 of an extruder having cylinder 1 water-cooled, cylinder 3 set to 300°C and the other cylinders set to 250°C, and a mixture of 51.4 parts by mass of PA6 and 14.3 parts by mass of hydrophobized CNF was fed through the side feed port of cylinder 5 and kneaded, and hydrophobized CNF composite pellets were obtained.

[Example 1-3]

A mixture of 51.4 parts by mass of PA6 and 14.3 parts by mass of hydrophobized CNF master batch was fed through cylinder 1 of an extruder having cylinder 1 water-cooled and the other cylinders set to 250°C, and was kneaded and extruded into a strand. The strand was cut with a strand cutter to obtain PA/hydrophobized CNF master batch pellets.

A mixture of 34.3 parts by mass of m-PPE and 65.7 parts by mass of PA/hydrophobized CNF master batch was fed through cylinder 1 of an extruder having cylinder 1 water-cooled, cylinder 3 set to 300°C and the other cylinders set to 250°C, and was kneaded and extruded into a strand. The strand was cut with a strand cutter to obtain hydrophobized CNF composite pellets. The composition of the obtained composite is shown in Table 1.

[Example 1-4]

A mixture of 51.4 parts by mass of PA6, 34.3 parts by mass of m-PPE and 14.3 parts by mass of hydrophobized CNF was fed through cylinder 1 of an extruder having cylinder 1 water-cooled, cylinder 3 set to 300°C and the other cylinders set to 250°C, and was kneaded and extruded into a strand. The strand was cut with a strand cutter to obtain hydrophobized CNF composite pellets.

[Comparative Example 1-1]

Pellets were obtained in the same manner as Example 1-4, except that hydrophobized CNF was not used, and the materials were kneaded to obtain the composition shown in Table 1.

[Comparative Example 1-2]

Pellets were obtained in the same manner as Example 1-4, except that cylinder 3 was set to 250°C, m-PPE was not used, and the kneading was carried out so that the composition was as shown in Table 1.

[Reference Example 1-1]

Pellets were obtained in the same manner as Example 1-4, except that cylinder 3 was set to 250°C, and the kneading was carried out so that the composition was as shown in Table 1. The composition of the obtained composite is shown in Table 2.

[Example 1-5]

A mixture of 40 parts by mass of m-PPE and 10 parts by mass of SEBS was fed through cylinder 1 of an extruder having cylinder 1 water-cooled, cylinder 3 set to 300°C and the other cylinders set to 250°C, 50 parts by mass of PA6 was fed through the side feed port of cylinder 5, and kneading was carried out to obtain resin pellets.

A mixture of 87.5 parts by mass of resin pellets and 14.3 parts by mass of hydrophobized CNF was fed through cylinder 1 of an extruder having cylinder 1 water-cooled and the other cylinders set to 250°C, and was kneaded and extruded into a strand. The strand was cut with a strand cutter to obtain hydrophobized CNF composite pellets. The composition of the obtained composite is shown in Table 2.

[Example 1-6]

Hydrophobized CNF composite pellets were obtained in the same manner as Example 1-5, except that a mixture of 30 parts by mass of PPE, 10 parts by mass of m-PPE and 10 parts by mass of SEBS was fed through cylinder 1.

[Examples 1-7 and 1-8]

Hydrophobized CNF composite pellets were obtained in the same manner as Example 1-5, except that kneading of the materials was carried out to obtain the compositions shown in Table 2.

[Example 1-9]

Hydrophobized CNF composite pellets were obtained in the same manner as Example 1-5, except that a mixture of 40 parts by mass of m-PPE and 10 parts by mass of SEBS was fed through cylinder 1, and a mixture of 45 parts by mass of PA6 and 5 parts by mass of m-EOR was fed through the side feed port of cylinder 5, for kneading.

[Example 1-10]

A mixture of 50 parts by mass of PA6, 40 parts by mass of m-PPE, 10 parts by mass of SBS1 and 0.2 parts by mass of an antioxidant was fed through cylinder 1 of an extruder having cylinder 1 water-cooled, cylinder 3 set to 300°C and the other cylinders set to 250°C, for kneading to obtain resin pellets.

A mixture of 87.5 parts by mass of resin pellets and 14.3 parts by mass of hydrophobized CNF was fed through cylinder 1 of an extruder having cylinder 1 water-cooled and the other cylinders set to 250°C, and was kneaded and extruded into a strand. The strand was cut with a strand cutter to obtain hydrophobized CNF composite pellets.

[Examples 1-11 to 1-20]

Hydrophobized CNF composite pellets were obtained in the same manner as Example 1-10, except that kneading of the materials was carried out to obtain the compositions shown in Tables 2 and 3.

[Table 1]

Table 1: Without elastomer

| | | | Example 1-1 | Example 1-2 | Example 1-3 | Example 1-4 | Comparative Example 1-1 | Comparative Example 1-2 |
|---|---|---|---|---|---|---|---|---|
| Composition | PA6 | parts by mass | 60 | 60 | 60 | 60 | 60 | 100 |
| | m-PPE | parts by mass | 40 | 40 | 40 | 40 | 40 | |
| | Hydrophobized CNF | mass% | 10 | 10 | 10 | 10 | | 10 |
| | PEG | mass% | 4.3 | 4.3 | 4.3 | 4.3 | | 4.3 |
| Polymer forming continuous phase | | | PA6 | PA6 | PA6 | PA6 | PA6 | PA6 |
| Evaluation | Hydrophobized CNF polyamide phase ratio | % | 31 | 55 | 99 | 91 | - | 100 |
| | Water absorption percentage | % | 1.4 | 1.4 | 1.4 | 1.4 | 1.2 | 2.6 |
| | Coefficient of linear expansion | ppm/K | 56 | 51 | 41 | 41 | 68 | 49 |
| | Anisotropy of linear expansion | - | 0.71 | 0.7 | 0.62 | 0.64 | 0.97 | 0.41 |
| | CNF degree of orientation | - | 0.18 | 0.19 | 0.25 | 0.23 | - | 0.52 |

[Table 2]

Table 2: With elastomer

| | | | Reference Example 1-1 | Example 1-5 | Example 1-6 | Example 1-7 | Example 1-8 | Example 1-9 | Example 1-10 | Example 1-11 | Example 1-12 | Example 1-13 | Example 1-14 | Example 1-15 | Example 1-16 | Example 1-17 |
|---|---|---|---|---|---|---|---|---|---|---|---|---|---|---|---|---|
| Composition | PA6 | parts by mass | 80 | 50 | 50 | 50 | 40 | 45 | 50 | 50 | 40 | 50 | 50 | 50 | 50 | 50 |
| | PPE | parts by mass | | | 30 | | | | | | | | | | 40 | |
| | m-PPE | parts by mass | | 40 | 10 | 30 | 40 | 40 | 40 | 30 | 40 | 40 | 40 | 40 | | 40 |
| | m-SEBS | parts by mass | 20 | | | | | | | | | | | | 10 | 10 |
| | m-EOR | parts by mass | | | | | | 5 | | | | | | | | |
| | SEBS | parts by mass | | 10 | 10 | 20 | 20 | 10 | | | | | | | | |
| | SBS1 | parts by mass | | | | | | | 10 | 20 | 20 | | 7 | | | |
| | SBS2 | parts by mass | | | | | | | | | | 10 | 3 | 3 | | |
| | SBS3 | parts by mass | | | | | | | | | | | | 7 | | |
| | Antioxidant | parts by mass | | | | | | | 0.2 | 0.4 | 0.4 | 0.2 | 0.2 | 0.2 | | |
| | Hydrophobized CNF | mass% | 10 | 10 | 10 | 10 | 10 | 10 | 10 | 10 | 10 | 10 | 10 | 10 | 10 | 10 |
| | PEG | mass% | 4.3 | 4.3 | 4.3 | 4.3 | 4.3 | 4.3 | 4.3 | 4.3 | 4.3 | 4.3 | 4.3 | 4.3 | 4.3 | 4.3 |
| Polymer forming continuous phase | | | PA6 | PA6 | PA6 | PA6 | PA6 | PA6 | PA6 | PA6 | PA6 | PA6 | PA6 | PA6 | PA6 | PA6 |

(continued)

| | | | Reference Example 1-1 | Example 1-5 | Example 1-6 | Example 1-7 | Example 1-8 | Example 1-9 | Example 1-10 | Example 1-11 | Example 1-12 | Example 1-13 | Example 1-14 | Example 1-15 | Example 1-16 | Example 1-17 |
|---|---|---|---|---|---|---|---|---|---|---|---|---|---|---|---|---|
| Evaluation | CNF polyamide phase ratio | % | 95 | 92 | 94 | 91 | 91 | 94 | 96 | 93 | 96 | 92 | 94 | 95 | 97 | 97 |
| | Water absorption percentage | % | 2 | 1.2 | 1.2 | 1.2 | 1.2 | 1.2 | 1.2 | 1.2 | 1.2 | 1.2 | 1.2 | 1.2 | 1.2 | 1.2 |
| | Coefficient of linear expansion | ppm/K | 69 | 50 | 51 | 57 | 54 | 55 | 49 | 57 | 54 | 50 | 49 | 50 | 50 | 51 |
| | Anisotropy of linear expansion | - | 0.49 | 0.59 | 0.63 | 0.6129 | 0.64 | 0.62 | 0.66 | 0.65 | 0.63 | 0.64 | 0.67 | 0.62 | 0.63 | 0.65 |
| | CNF degree of orientation | - | 0.44 | 0.27 | 0.28 | 0.28 | 0.22 | 0.23 | 0.26 | 0.27 | 0.23 | 0.26 | 0.29 | 0.28 | 0.28 | 0.25 |
| | Tensile fracture strain | % | 15 | 13 | 12 | 14 | 13 | 16 | 13 | 13 | 13 | 12 | 15 | 12 | 15 | 13 |

[Table 3]

Table 3: With elastomer

| | | | Example 1-18 | Example 1-19 | Example 1-20 |
|---|---|---|---|---|---|
| Composition | PA66 | parts by mass | 50 | | |
| | PA610 | parts by mass | | 50 | |
| | PA12 | parts by mass | | | 50 |
| | m-PPE | parts by mass | 40 | 40 | 40 |
| | SBS1 | parts by mass | 10 | 10 | 10 |
| | Antioxidant | parts by mass | 0.2 | 0.2 | 0.2 |
| | Hydrophobized CNF | mass% | 10 | 10 | 10 |
| | PEG | mass% | 4.3 | 4.3 | 4.3 |
| Polymer forming continuous phase | | | PA66 | PA610 | PA12 |
| Evaluation | Hydrophobized CNF polyamide phase ratio | % | 92 | 88 | 83 |
| | Water absorption percentage | % | 1.1 | 0.8 | 0.9 |
| | Coefficient of linear expansion | ppm/K | 49 | 57 | 62 |
| | Anisotropy of linear expansion | - | 0.56 | 0.61 | 0.61 |
| | CNF degree of orientation | - | 0.25 | 0.27 | 0.31 |
| | Tensile fracture strain | % | 12 | 15 | 21 |

- Example II (Second embodiment) -

<Materials>

<Polyamide>

Terminal carboxy group-rich polyamide 6 (PA6)
UBE Nylon 1013B (Ube Industries, Ltd.)
Terminal amino group ratio: $([NH_2]/([NH_2] + [COOH])) = 0.4$
Viscosity number (VN) of polyamide measured in 96 mass% sulfuric acid = 95

<Elastomer>

[Elastomer with acidic functional group]

TUFPRENE T912 (Asahi Kasei Corp.) (m-SBS)
Maleic anhydride-modified styrene-butadiene-styrene block copolymer
Bonded styrene content = 40 mass%
Maleic anhydride addition = 0.2 mass%
Glass transition point = -75°C

FUSABOND MN-493D (Dow-DuPont) (m-EOR).
Maleic anhydride-modified ethylene-octene copolymer
MFR (190°C, 2.16 kgf) = 1.2 g/10 min
Octene content = 28 mass%
Melting point = 55°C (DSC: temperature-elevating rate = 10°C/min)
Glass transition point = -55°C
Maleic anhydride addition = 1.0 mass%

[Elastomer without acidic functional group]

ASAPRENE T-411 (Asahi Kasei Corp.) (SBS)
Styrene-butadiene-styrene block copolymer
Bonded styrene content = 30 mass%
Glass transition point = -75°C

<Antioxidant>

IRGANOX 1010 (BASF Japan) was used.

<Coloring agent>

Organic coloring agent: NUBIAN BLACK PA9801 (Orient Chemical Industries, Ltd.)
Inorganic coloring agent: Carbon black #52 (Mitsubishi Chemical Holdings Corp.)

<Cellulose>

The same hydrophobized CNF powder prepared in Example I (first embodiment) was used. Upon evaluating the properties of the hydrophobized CNF (wet cake), the diameter was 65 nm, the L/D was ≥30 (approximately 450), the weight-average molecular weight (Mw) was 340,000 and the acetylation degree was 0.9.

<Evaluation methods>

[Length, diameter and L/D of hydrophobized CNF]

A 1 mass% concentration purified water suspension of the wet cake was prepared and dispersed with a high-shear homogenizer (for example, an "Excel ED-7 Autohomogenizer", trade name of Nippon Seiki Co., Ltd., processing conditions: rotational speed = 15,000 rpm × 5 minutes) to produce an aqueous dispersion which was diluted with purified water to 0.1 to 0.5 mass%, and this was cast onto mica and air-dried, the ratio (L/D) was determined from the length (L) and diameter (D) of a particle image, obtained by measurement with an atomic force microscope (AFM), and the value was converted to the average value for 100 to 150 particles.

[Confirmation of continuous phase]

The obtained pellets were immersed in chloroform, and the presence or absence of morphological change was confirmed. Since no particular changes occurred in the Examples and Comparative Examples that were carried out, it was judged that the polyamide forms a continuous phase.

[Proportion of cellulose in polyamide phase]

The obtained composition was sliced to a 1 μm thickness using an ultramicrotome to obtain a sample film, and then immersed in chloroform to elute the elastomer phase, after which the eluate was concentrated and subjected to ultracentrifugation and the cellulose was separated out, rinsed with chloroform and subjected to ultracentrifugation 3

times. The final remaining cellulose was dried and used as the amount of cellulose in the elastomer phase. The obtained amount was subtracted from the added amount and divided by the amount of added cellulose, expressing the ratio in percentage form as the proportion of cellulose in the polyamide phase.

[Number-mean particle size of elastomer dispersed particles, and volume ratio of dispersed particles with particle diameters of 1 μm or larger]

The obtained composition was observed with a transmission electron microscope. The number-average value of the diameter (dispersed particle size) and the volume ratio of dispersed particles with particle diameters of 1 μm or larger were calculated for 500 dispersed particles in the elastomer dispersed phase.

[Thermal expansion (coefficient of thermal expansion)]

A sample with a length of 10 mm, a width of 4 mm and a thickness of 2 mm was cut out from the center of a test piece (ISO 37 type 3) using a precision cut saw, and the expansion rate in the direction of resin flow during molding (the MD direction, also the lengthwise direction of the sample) was measured in a measuring temperature range of -10°C to 120°C according to ISO11359-2, calculating the coefficient of thermal expansion ($CTE_{MD}$) between 20°C to 100°C. Before the measurement, it was stationed for 5 hours in an environment at 120°C for annealing.

[Toughness and tensile fracture strain]

A test piece (ISO 37 type 3) was subjected to a tensile test at a pull rate of 5 mm/min using a tensile tester (autograph AG-IS by Shimadzu Corp.) in an environment of 23°C, 50% relative humidity, and the arithmetic mean of the data for strain during tensile fracture at 5 points was recorded as an index of toughness.

<Extrusion conditions>

[Extruder design]

Using a twin-screw extruder with 13 cylinder blocks and an L/D of 52 (TEM SX Series extruder by Toshiba Machine Co., Ltd.), cylinder 1 was water-cooled, cylinders 2 to 4 were set to 150°C, and cylinders 5 up to the die were set to 250°C. A vent port for decompression suction was provided at cylinder 12 to allow removal of the volatile components and copresent air.

The screw construction had cylinders 1 to 2 as transport screws, three clockwise kneading discs on cylinder 3 (right-handed kneading discs: RKD), as the pre-mixing zone, cylinder 4 as the transport screw and one RKD and two neutral kneading discs (non-transport-type kneading discs: NKD) on cylinders 5 to 6, followed by one counter-clockwise screw, as the melt kneading zone. Transport screws were used up to cylinders 7 to 9 as the side feed zone, and two RKDs followed by three NKDs and followed by a counter-clockwise screw were set at cylinder 10, as the kneading zone. Cylinders 11 to 13 were set as transport screws for the volatile volatilization zone. A die with two 3 mm diameter holes was mounted as the die.

<Production of resin composition>

[Examples 2-1 to 2-6 and Comparative Examples 2-1 to 2-2]

An extruder with an extruder design was used for mixing in the proportions listed in Table 4, and melt kneading was carried out at a screw rotational speed of 300 rpm to obtain pellets, which were then evaluated. The results are shown in Table 4.

The "parts by mass" row set in the table is for the charged formulation, the middle row set labeled "mass%" is for the composition, and the lower row set lists the physical properties.

Based on the results shown in the table, the Examples that used elastomers which were aromatic vinyl compound-conjugated diene compound block copolymers or their derivatives exhibited high fracture strain (satisfactory toughness) and a low coefficient of thermal expansion, while Comparative Example 2-1 that used ethylene-octene copolymer as the elastomer had a poor coefficient of thermal expansion, and Comparative Example 2-2 that did not use an elastomer had poor fracture strain. When Examples 2-4, 2-5 and 2-6 which used coloring agents are compared with Example 2-1 which did not use a coloring agent, the fracture strain is seen to be higher with Examples 2-4, 2-5 and 2-6.

[Table 4]

Table 4

| | | | | Example 2-1 | Example 2-2 | Example 2-3 | Comparative Example 2-1 | Comparative Example 2-2 | Example 2-4 | Example 2-5 | Example 2-6 |
|---|---|---|---|---|---|---|---|---|---|---|---|
| Composition (parts by weight) | Polyamide | PA6 | parts by mass | 80.0 | 80.0 | 90.0 | 80.0 | 100.0 | 80.0 | 80.0 | 80.0 |
| | Elastomer | m-SBS | parts by mass | 20.0 | 10.0 | 10.0 | | | 20.0 | 20.0 | 20.0 |
| | Elastomer | SBS | parts by mass | | 10.0 | | | | | | |
| | Elastomer | m-EOR | parts by mass | | | | 20.0 | | | | |
| | Antioxidant | | parts by mass | 2.0 | 2.0 | 2.0 | 2.0 | | 2.0 | 2.0 | 2.0 |
| | Coloring agent | Organic coloring agent | parts by mass | | | | | | 0.05 | 0.5 | |
| | Coloring agent | Inorganic coloring agent | parts by mass | | | | | | | | 0.05 |
| | Hydrophobized CNF | | parts by mass | 5.5 | 5.5 | 5.5 | 5.5 | 5.4 | 5.5 | 5.5 | 5.5 |
| | PEG | | parts by mass | 2.3 | 2.3 | 2.3 | 2.3 | 2.3 | 2.3 | 2.3 | 2.3 |
| | Total | | parts by mass | 109.8 | 109.8 | 109.8 | 109.8 | 107.7 | 109.9 | 110.3 | 109.9 |

(continued)

| | | | | Example 2-1 | Example 2-2 | Example 2-3 | Comparative Example 2-1 | Comparative Example 2-2 | Example 2-4 | Example 2-5 | Example 2-6 |
|---|---|---|---|---|---|---|---|---|---|---|---|
| Composition (mass%) | Polyamide | PA6 | mass% | 72.9 | 72.9 | 82.0 | 72.9 | 92.9 | 72.8 | 72.5 | 72.8 |
| | Elastomer | m-SBS | mass% | 18.2 | 9.1 | 9.1 | | | 18.2 | 18.1 | 18.2 |
| | Elastomer | SBS | mass% | | 9.1 | | | | | | |
| | Elastomer | m-EOR | mass% | | | | 18.2 | | | | |
| | Antioxidant | | mass% | 1.8 | 1.8 | 1.8 | 1.8 | | 1.8 | 1.8 | 1.8 |
| | Coloring agent | Organic coloring agent | mass% | | | | | | 0.05 | 0.5 | |
| | Coloring agent | Inorganic coloring agent | mass% | | | | | | | | 0.05 |
| | Hydrophobized CNF | | mass% | 5.0 | 5.0 | 5.0 | 5.0 | 5.0 | 5.0 | 5.0 | 5.0 |
| | PEG | | mass% | 2.1 | 2.1 | 2.1 | 2.1 | 2.1 | 2.1 | 2.1 | 2.1 |
| | Total | | mass% | 100.0 | 100.0 | 100.0 | 100.0 | 100.0 | 100.0 | 100.0 | 100.0 |
| Polymer forming continuous phase | | | | PA6 | PA6 | PA6 | PA6 | PA6 | PA6 | PA6 | PA6 |
| . Evaluation | Hydrophobized CNF | polyamide phase ratio | % | 96 | 95 | 97 | 97 | 100 | 97 | 95 | 95 |
| | Number-mean | particle size of elastomer | μm | 0.33 | 0.94 | 0.30 | 0.25 | - | 0.34 | 0.33 | 0.35 |
| | Volume ratio of elastomer | particles with particle diameters of 1 μm or larger of | % | 9 | 28 | 2 | 0 | - | 10 | 11 | 8 |
| | Tensile fracture | strain | % | 18 | 30 | 18 | 20 | 10 | 27 | 24 | 24 |
| | Coefficient of linear | expansion | ppm/K | 58 | 59 | 74 | 71 | 54 | 58 | 58 | 56 |

- Example III (Third embodiment) -

<Materials>

<Polyamide>

PA6: UBE Nylon 1013B (Ube Industries, Ltd.)
Terminal carboxy group-rich polyamide 6

Terminal amino group ratio: ($[NH_2]/([NH_2] + [COOH])$) = 0.4
Viscosity number (VN) of polyamide measured in 96 mass% sulfuric acid = 95

<Elastomer>

[Elastomer with acidic functional group]

m-EOR: FUSABOND MN-493D (Dow-DuPont)
Maleic anhydride-modified ethylene-octene copolymer MFR
(190°C, 2.16 kgf) = 1.2 g/10 min
Octene content = 28 mass%
Melting point = 55°C (DSC: temperature-elevating rate = 10°C/min)
Glass transition point = -55°C
Maleic anhydride addition = 1.0 mass%

m-SBS: TUFPRENE T912 (Asahi Kasei Corp.)
Maleic anhydride-modified styrene-butadiene-styrene block copolymer
Bonded styrene content = 40 mass%
Maleic anhydride addition = 0.2 mass%
Glass transition point = -75°C

[Elastomer without acidic functional group]

SBS: ASAPRENE T-411 (Asahi Kasei Corp.)
Styrene-butadiene-styrene block copolymer
Bonded styrene content = 30 mass%
Glass transition point = -75°C

<Saponified ethylene-vinyl ester-based copolymers>

EVOH-1: SOARNOL V2504 (Mitsubishi Chemical Holdings Corp.)

Ethylene composition = 25 mol%, vinyl alcohol composition = 75 mol%, melting point = 195°C, glass transition point = 63°C

EVOH-2: EVAL M100B (Kuraray Co., Ltd.)

Ethylene composition = 24 mol%, vinyl alcohol composition = 76 mol%, melting point = 195°C, glass transition point = 60°C

EVOH-3: EVAL L104B (Kuraray Co., Ltd.)

Ethylene composition = 27 mol%, vinyl alcohol composition = 73 mol%, melting point = 190°C, glass transition point = 63°C

EVOH-4: SOARNOL DT2904 (Mitsubishi Chemical Holdings Corp.)

Ethylene composition = 29 mol%, vinyl alcohol composition = 71 mol%, melting point = 188°C, glass transition point = 62°C

EVOH-5: SOARNOL DC3212 (Mitsubishi Chemical Holdings Corp.)

Ethylene composition = 32 mol%, vinyl alcohol composition = 68 mol%, melting point = 183°C, glass transition point = 61°C

EVOH-6: EVAL C109B (Kuraray Co., Ltd.)

Ethylene composition = 35 mol%, vinyl alcohol composition = 65 mol%, melting point = 177°C, glass transition point = 58°C

<Other components>

Antioxidant: IRGANOX 1010 (BASF Japan) was used.

Organic coloring agent: NUBIAN BLACK PA9801 (Orient Chemical Industries, Ltd.)
Inorganic coloring agent: Carbon black #CB960 (Mitsubishi Chemical Holdings Corp.)

<Cellulose nanofibers>

[Preparation Example 1] Cellulose nanofibers (CNF)

After cutting linter pulp, an autoclave was used to heat it for 3 hours in hot water at 120°C or higher to remove the hemicellulose portion and obtained refined pulp, which was pressed and beaten into highly chopped fibers and fibrils to a solid content of 1.5 mass% in purified water, and then defibrated with a high-pressure homogenizer (10 times at an operating pressure of 85 MPa) at the same concentration to obtain defibrated cellulose. For the beating treatment, a disc refiner was used for 4 hours of treatment with a high-cutting beating blade (hereunder referred to as "cutting blade"), and then a high-defibrating beating blade (hereunder referred to as "defibrating blade") was used for another 1.5 hours of beating.
When the properties of the obtained CNF were evaluated, the diameter was 90 nm and the L/D was ≥30 (approximately 300).
PEG20000 was added to an aqueous dispersion of the obtained CNF at 5 parts by mass with respect to 100 parts by mass of CNF, and then a revolving/rotating stirrer (HIVIS MIX 2P-1 by Primix Corp.) was used for vacuum drying at about 40°C to obtain CNF powder.

[Preparation Example 2] Acetylated cellulose nanofibers (acetylated CNF)

The same hydrophobized CNF powder prepared in Examples I and II (first and second embodiments) was used. Upon evaluating the properties of the acetylated CNF (wet cake), the diameter was 65 nm, the L/D was ≥30 (approximately 450), the weight-average molecular weight (Mw) was 340,000 and the acetylation degree was 0.9.

[Preparation Example 3] Acetylated cellulose microfibers (acetylated CMF)

Defibrated slurry was obtained in the same manner as Example 1, except that the high-pressure homogenizer treatment of Preparation Example 1 was carried out twice. The obtained defibrated slurry was treated in the same manner as in the defibrating acetylating steps of Preparation Example 2.
When the properties of the acetylated CMF were evaluated, the diameter was 12 μm and the L/D was ≥30

(approximately 200).

PEG20000 was added to an aqueous dispersion of the obtained acetylated CMF (solid content: 10 mass%) at 5 parts by mass with respect to 100 parts by mass of acetylated CMF, and then a revolving/rotating stirrer (HIVIS MIX 2P-1 by Primix Corp.) was used for vacuum drying at about 40°C to obtain acetylated CMF powder.

<Evaluation methods>

[Weight-average molecular weight (Mw) and acetylation degree]

Measurement was carried out by the same procedure as Example I (first embodiment), except for using powder instead of a porous sheet.

[Length, diameter and L/D of CNF, acetylated CNF and acetylated CMF]

A 1 mass% concentration purified water suspension of the wet cake was prepared and dispersed with a high-shear homogenizer (for example, an "Excel ED-7 Autohomogenizer", trade name of Nippon Seiki Co., Ltd., processing conditions: rotational speed = 15,000 rpm × 5 minutes) to produce an aqueous dispersion which was diluted with purified water to 0.1 to 0.5 mass%, and this was cast onto mica and air-dried, the ratio (L/D) was determined for the length (L) and diameter (D) of a particle image, obtained by measurement with an atomic force microscope (AFM), and the value was converted to the average value for 100 to 150 particles.

[Confirmation of continuous phase]

This was confirmed in the same manner as Example II (second embodiment). Since no particular changes occurred in the Examples and Comparative Examples that were carried out, it was judged that the polyamide forms a continuous phase.

[Coefficient of linear thermal expansion]

This was measured in the same manner as Example II (second embodiment).

[Tensile fracture strain]

A tensile test was conducted in the same manner as Example II (second embodiment), and 5 data points were obtained for strain during tensile fracture. The number-average value for the fracture strain at the 5 points was used as an index of toughness, and the fracture strain range, as the difference between the maximum and minimum at the 5 points, was used as an index of variation in toughness.

<Extrusion conditions>

[Extruder design]

The same extruder design was used as in Example II (second embodiment).

<Production of resin compositions>

[Examples 3-1 to 3-16 and Comparative Examples 3-1 to 3-3]

An extruder having an extruder design was used for mixing in the proportions listed in Tables 5 and 6, and melt kneading was carried out at a screw rotational speed of 300 rpm to obtain pellets, which were then evaluated. The results are shown in Tables 5 and 6.

The "parts by mass" row set in the table is for the charged formulation, the middle row set labeled "mass%" is for the composition, and the lower row set lists the physical properties.

Based on the results shown in the tables, the Examples that copolymerized a polyamide, a saponified ethylene-vinyl ester-based copolymer and cellulose nanofibers exhibited high fracture strain (satisfactory toughness) and a low coefficient of linear thermal expansion, whereas the Comparative Examples that did not comprise a saponified ethylene-vinyl ester-based copolymer or polyamide had poor fracture strain. When Example 3-5 which used acetylated CNF is compared with Example 3-12 which used CNF, Example 3-5 which used acetylated CNF was seen to have lower variation

in toughness. When Examples 3-13, 3-14 and 3-15 which used coloring agents are compared with Example 3-5 which did not use a coloring agent, the variation in toughness was seen to be lower with Examples 3-13, 3-14 and 3-15.

[Table 5]

Table 5

| | | | Comparative Example 3-1 | Comparative Example 3-2 | Example 3-1 | Comparative Example 3-3 | Example 3-2 | Example 3-3 | Example 3-4 | Example 3-5 | Example 3-6 | Example 3-7 |
|---|---|---|---|---|---|---|---|---|---|---|---|---|
| Composition | PA6 | parts by mass | 100.0 | | 80.0 | 80.0 | 60.0 | 70.0 | 75.0 | 60.0 | 60.0 | 60.0 |
| | m-EOR | parts by mass | | | | 20.0 | 20.0 | 20.0 | 20.0 | 20.0 | 20.0 | 20.0 |
| | m-SBS | parts by mass | | | | | | | | | | |
| | SBS | parts by mass | | | | | | | | | | |
| | Antioxidant | parts by mass | | | | | | | | | | |
| | EVOH-1 (25%) | parts by mass | | 100.0 | 20.0 | | 20.0 | 10.0 | 5.0 | | | |
| | EVOH-2 (24%) | parts by mass | | | | | | | | 20.0 | | |
| | EVOH-3 (27%) | parts by mass | | | | | | | | | 20.0 | |
| | EVOH-4 (29%) | parts by mass | | | | | | | | | | 20.0 |
| | EVOH-5 (32%) | parts by mass | | | | | | | | | | |
| | EVOH-6 (35%) | parts by mass | | | | | | | | | | |
| | Organic coloring agent | parts by mass | | | | | | | | | | |
| | Inorganic coloring agent | parts by mass | | | | | | | | | | |
| | CNF | mass% | | | | | | | | | | |
| | Acetylated CNF | mass% | 5.0 | 5.0 | 5.0 | 5.0 | 5.0 | 5.0 | 5.0 | 5.0 | 5.0 | 5.0 |
| | Acetylated CMF | mass% | | | | | | | | | | |
| | PEG | mass% | 2.1 | 2.1 | 2.1 | 2.1 | 2.1 | 2.1 | 2.1 | 2.1 | 2.1 | 2.1 |
| Evaluation | Tensile fracture strain (number-average) | % | 9 | 4 | 14 | 18 | 34 | 25 | 15 | 52 | 33 | 32 |
| | Tensile fracture strain (range) | % | 2 | 1 | 3 | 5 | 7 | 2 | 2 | 11 | 8 | 4 |
| | Coefficient of linear expansion | ppm/K | 59 | 45 | 56 | 90 | 76 | 81 | 85 | 74 | 73 | 75 |

[Table 6]

Table 6

| | | | Example 3-8 | Example 3-9 | Example 3-10 | Example 3-11 | Example 3-12 | Example 3-13 | Example 3-14 | Example 3-15 | Example 3-16 |
|---|---|---|---|---|---|---|---|---|---|---|---|
| Composition | PA6 | parts by mass | 60.0 | 60.0 | 60.0 | 60.0 | 60.0 | 59.95 | 59.95 | 59.95 | 60.0 |
| | m-EOR | parts by mass | 20.0 | 20.0 | | | 20.0 | 20.0 | 20.0 | 20.0 | 20.0 |
| | m-SBS | parts by mass | | | 20.0 | 10.0 | | | | | |
| | SBS | parts by mass | | | | 10.0 | | | | | |
| | Antioxidant | parts by mass | | | 2.0 | 2.0 | | | | | |
| | EVOH-1 (25%) | parts by mass | | | | | | | | | 20.0 |
| | EVOH-2 (24%) | parts by mass | | | 20.0 | 20.0 | 20.0 | | | | |
| | EVOH-3 (27%) | parts by mass | | | | | | 20.0 | 20.0 | 20.0 | |
| | EVOH-4 (29%) | parts by mass | | | | | | | | | |
| | EVOH-5 (32%) | parts by mass | 20.0 | | | | | | | | |
| | EVOH-6 (35%) | parts by mass | | 20.0 | | | | | | | |
| | Organic coloring agent | parts by mass | | | | | | 0.05 | | 0.025 | |
| | Inorganic coloring agent | parts by mass | | | | | | | 0.05 | 0.025 | |
| | CNF | mass% | | | | | 5.0 | | | | |
| | Acetylated CNF | mass% | 5.0 | 5.0 | 5.0 | 5.0 | | 5.0 | 5.0 | 5.0 | 2.5 |
| | Acetylated CMF | mass% | | | | | | | | | 2.5 |
| | PEG | mass% | 2.1 | 2.1 | 2.1 | 2.1 | 2.1 | 2.1 | 2.1 | 2.1 | 2.1 |

(continued)

| | | | Example 3-8 | Example 3-9 | Example 3-10 | Example 3-11 | Example 3-12 | Example 3-13 | Example 3-14 | Example 3-15 | Example 3-16 |
|---|---|---|---|---|---|---|---|---|---|---|---|
| Evaluation | Tensile fracture strain (number-average) | % | 27 | 21 | 30 | 35 | 31 | 40 | 38 | 42 | 38 |
| | Tensile fracture strain (range) | % | 4 | 5 | 8 | 6 | 15 | 3 | 4 | 4 | 5 |
| | Coefficient of linear expansion | ppm/K | 78 | 80 | 50 | 52 | 77 | 76 | 74 | 75 | 78 |

## INDUSTRIAL APPLICABILITY

The resin composition of the embodiment can exhibit excellent properties which are particularly suitable for large-sized parts. Specifically, since the resin composition of the first embodiment can exhibit low specific gravity, high rigidity, a low coefficient of thermal expansion and low water absorption, it can be suitably used for various large-sized parts. Since the resin compositions of the second and third embodiments can exhibit high levels of both of the conflicting properties of high toughness and low thermal expansion with adequate physical property stability to withstand practical use, they can be suitably used for purposes requiring high physical properties to be exhibited throughout a wide temperature range (such as for automobile exterior materials that are typically large-sized parts).

## Claims

1. A resin composition comprising a first polymer that forms a continuous phase, a second polymer that forms a dispersed phase and cellulose, wherein:

   the first polymer is a polyamide, and
   the second polymer is at least one polymer selected from the group consisting of crystalline resins with a melting point of 60°C or higher and amorphous resins with a glass transition point of 60°C or higher.

2. A resin composition comprising a polyamide, a polyphenylene ether, and cellulose nanofibers, wherein:

   the polyamide forms a continuous phase and
   the polyphenylene ether forms a dispersed phase.

3. The resin composition according to claim 2, wherein the amount of the polyphenylene ether is 30 parts by mass to 150 parts by mass with respect to 100 parts by mass of the polyamide.

4. The resin composition according to claim 2 or 3, wherein at least a portion of the polymer in the dispersed phase has an acidic functional group.

5. The resin composition according to any one of claims 2 to 4, wherein the polyphenylene ether is present as dispersed particles having a number-mean particle size of 3 μm or smaller in the continuous phase of the polyamide.

6. The resin composition according to any one of claims 2 to 5, wherein:

   the polyphenylene ether is present as dispersed particles in the continuous phase of the polyamide, and
   the dispersed particles have a volume ratio of no greater than 30 vol% for particles with particle diameters of 1 μm or larger.

7. The resin composition according to any one of claims 2 to 6, which further comprises an elastomer.

8. The resin composition according to claim 7, wherein the polyphenylene ether forms a continuous phase and the elastomer forms a dispersed phase, inside the dispersed phase of the polyphenylene ether.

9. The resin composition according to claim 7 or 8, wherein the elastomer is one or more selected from the group consisting of ethylene-α-olefin copolymers, block copolymers of aromatic vinyl compounds and conjugated diene compounds, and hydrogenated block copolymers of aromatic vinyl compounds and conjugated diene compounds.

10. The resin composition according to any one of claims 7 to 9, wherein the elastomer is an acid anhydride-modified elastomer.

11. The resin composition according to any one of claims 7 to 10, wherein the elastomer is a mixture of an elastomer with an acidic functional group and an elastomer without an acidic functional group.

12. The resin composition according to any one of claims 2 to 11, wherein greater than 50 mass% of the cellulose nanofibers are present in the polyamide phase.

**13.** The resin composition according to any one of claims 2 to 12, wherein at the center section of a multipurpose test piece of the resin composition molded according to ISO294-1, the degree of orientation of the cellulose nanofibers as determined by the small angle X-ray scattering method is 0.45 or lower.

**14.** The resin composition according to any one of claims 2 to 13, wherein the amount of the cellulose nanofibers is 0.1 to 30 mass% with respect to 100 mass% of the resin composition.

**15.** The resin composition according to any one of claims 2 to 14, wherein the cellulose nanofibers are hydrophobized cellulose nanofibers.

**16.** The resin composition according to claim 15, wherein the hydrophobized cellulose nanofibers are acetylated cellulose nanofibers.

**17.** The resin composition according to any one of claims 2 to 16, wherein the cellulose nanofibers have a weight-average molecular weight (Mw) of 100,000 or greater, and a ratio (Mw/Mn) between the weight-average molecular weight (Mw) and number-average molecular weight (Mn) of 6 or lower.

**18.** The resin composition according to any one of claims 2 to 17, wherein the cellulose nanofibers have an alkali-soluble polysaccharide average content of 12 mass% or lower and a degree of crystallinity of 60% or greater.

**19.** The resin composition according to any one of claims 1 to 18, wherein the polyamide is at least one selected from the group consisting of polyamide 6, polyamide 10, polyamide 11, polyamide 12, polyamide 66, polyamide 610, polyamide 612, polyamide 6/61, polyamide 66/61 and polyamide 61, and their mixtures.

**20.** The resin composition according to any one of claims 1 to 19, wherein the viscosity number ($V_N$) of the polyamide is 200 or lower, as measured in 96 mass% sulfuric acid according to ISO307.

**21.** The resin composition according to any one of claims 1 to 20, which further comprises a saponified ethylene-vinyl ester-based copolymer.

**22.** The resin composition according to any one of claims 1 to 21, which further comprises an antioxidant.

**23.** The resin composition according to any one of claims 1 to 22, which further comprises a coloring agent.

**24.** The resin composition according to any one of claims 1 to 23, wherein the coefficient of thermal expansion at 20°C to 100°C is 50 ppm/K or lower.

**25.** A resin composition comprising:

a polyamide,
one or more elastomers selected from the group consisting of aromatic vinyl compound-conjugated diene compound block copolymers and their derivatives, and
cellulose,
wherein the polyamide and the elastomer are in phase separation, and
greater than 50 mass% of the cellulose is present in the polyamide phase.

**26.** A resin composition comprising:

a polyamide,
a saponified ethylene-vinyl ester-based copolymer, and
cellulose.

**27.** A molded body comprising a resin composition according to any one of claims 1 to 26.

**28.** An automobile exterior part comprising a resin composition according to any one of claims 1 to 26.

FIG. 1

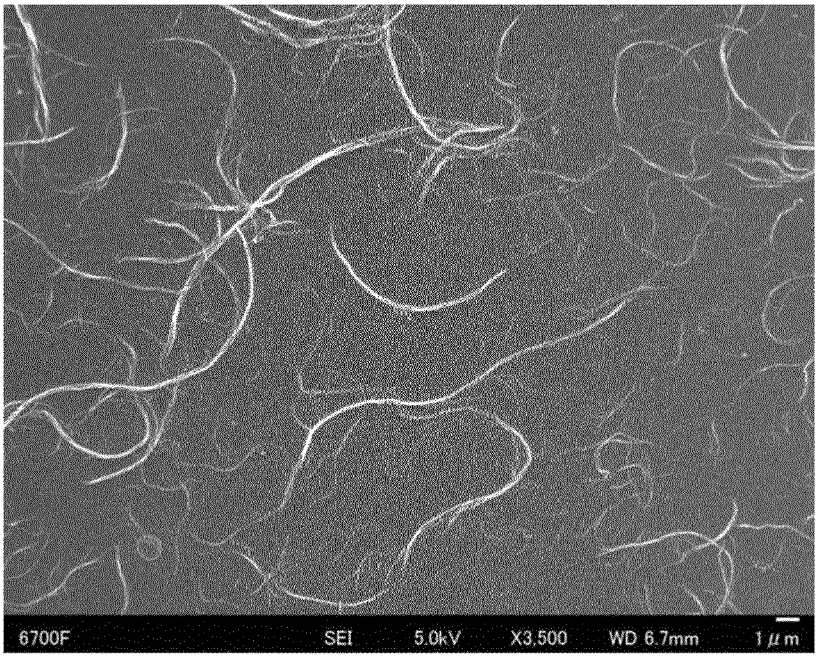
6700F
SEI
5.0kV
X3,500
WD 6.7mm
1 μm

FIG. 2

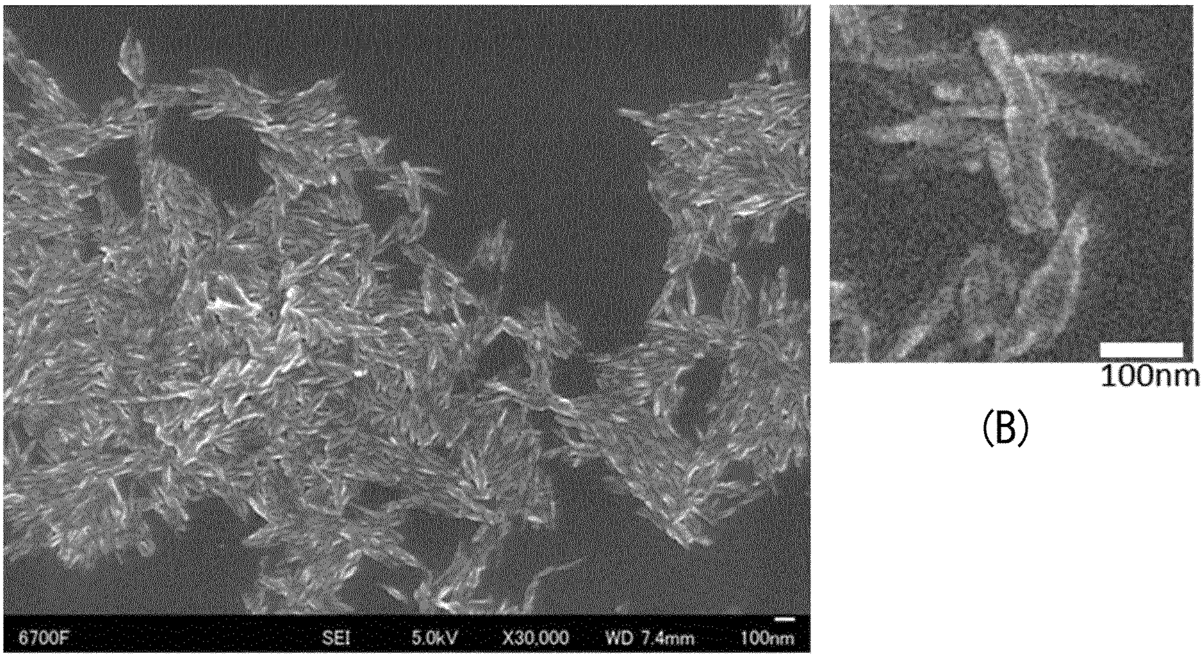
6700F
SEI
5.0kV
X30,000
WD 7.4mm
100nm
100nm

(A)

(B)

FIG. 3

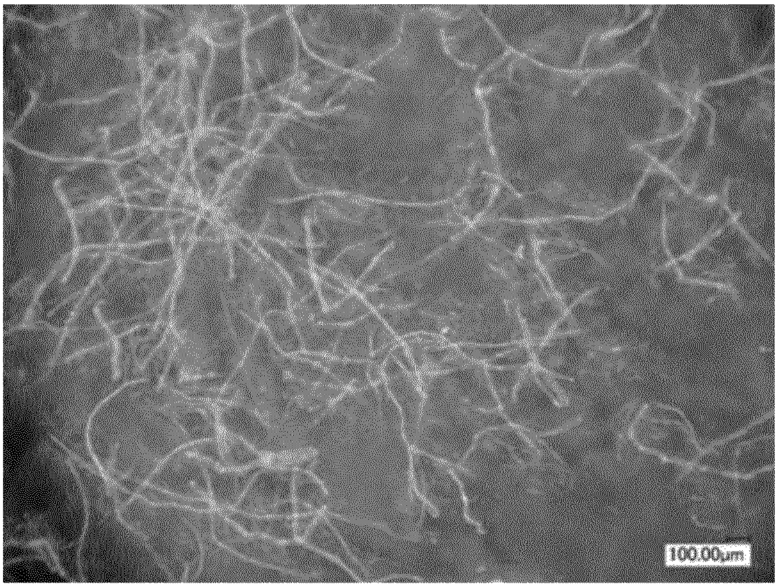
100.00μm

FIG. 4

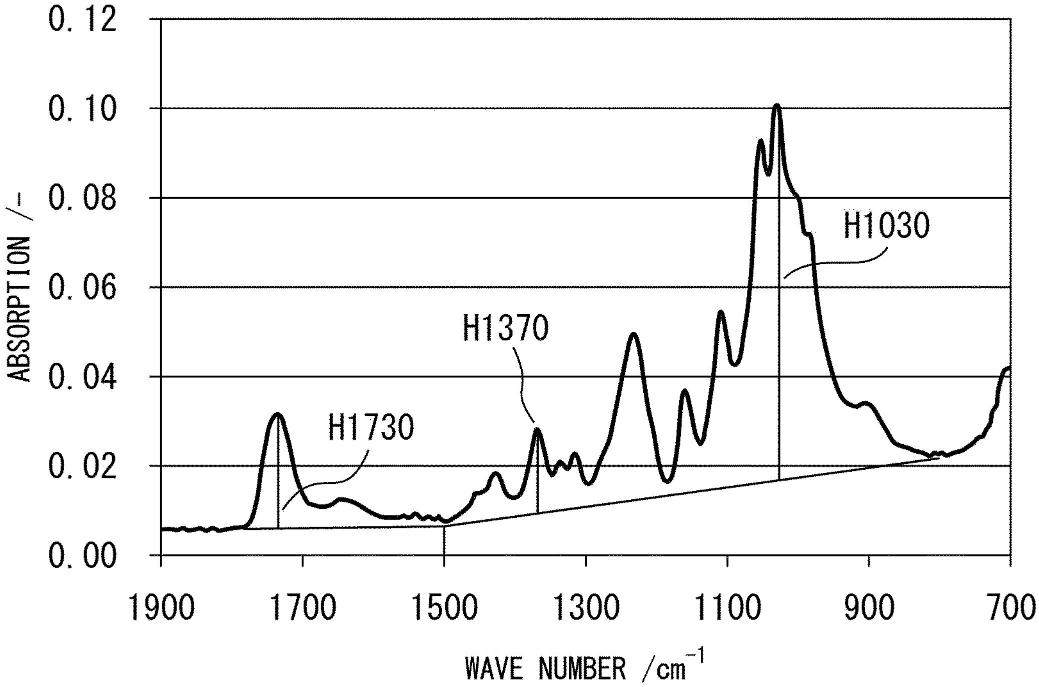
0.12
0.10
0.08
0.06
0.04
0.02
0.00
ABSORPTION /-
H1030
H1370
H1730
1900
1700
1500
1300
1100
900
700
WAVE NUMBER /cm⁻¹

FIG. 5

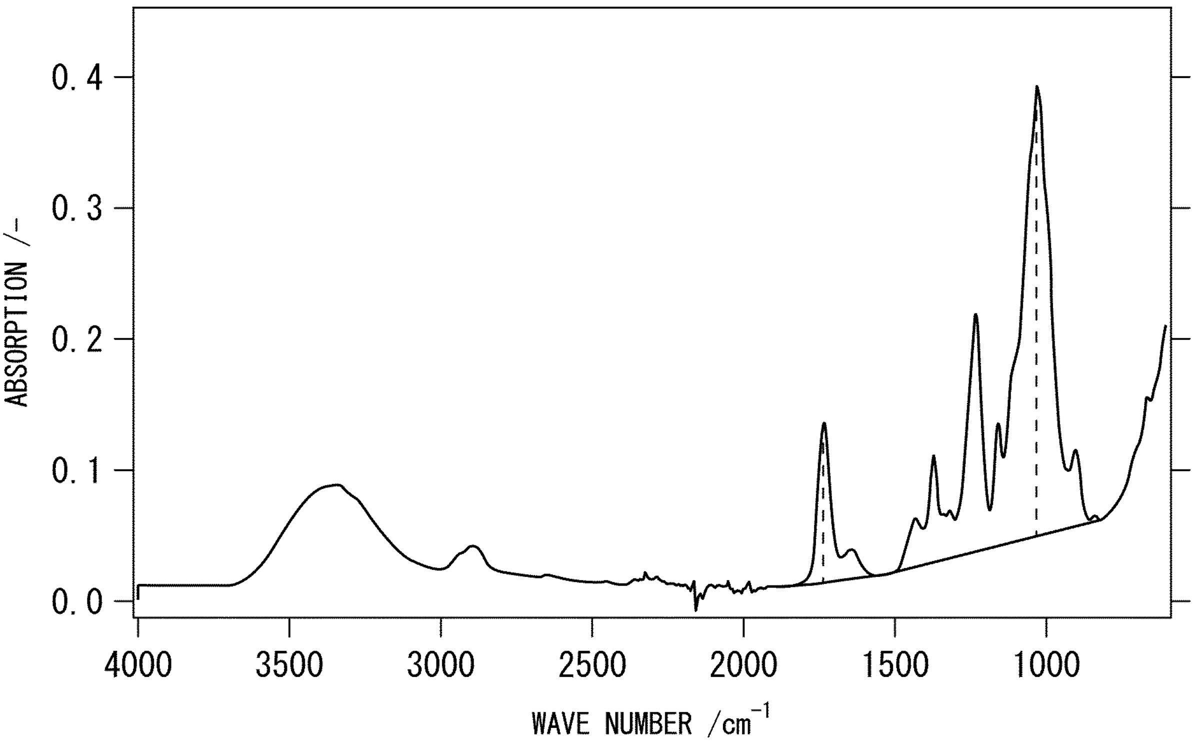
0.4
0.3
0.2
0.1
0.0
ABSORPTION /-
4000
3500
3000
2500
2000
1500
1000
WAVE NUMBER /cm$^{-1}$

FIG. 6

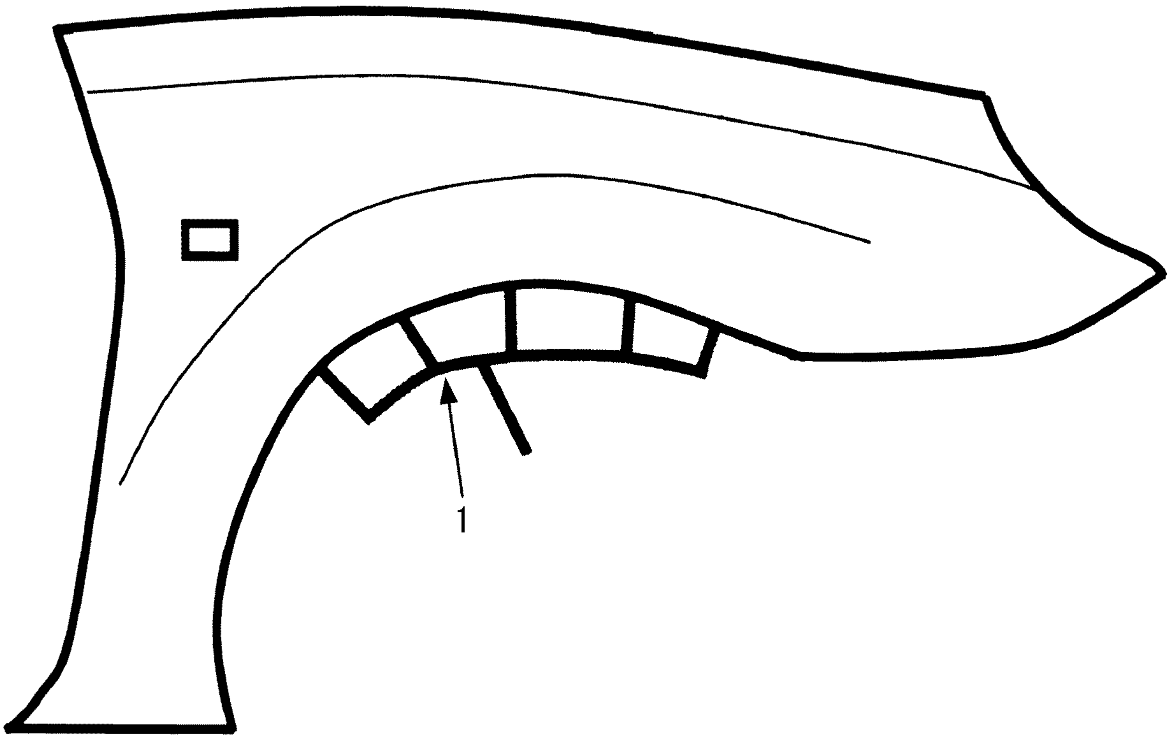
1

FIG. 7

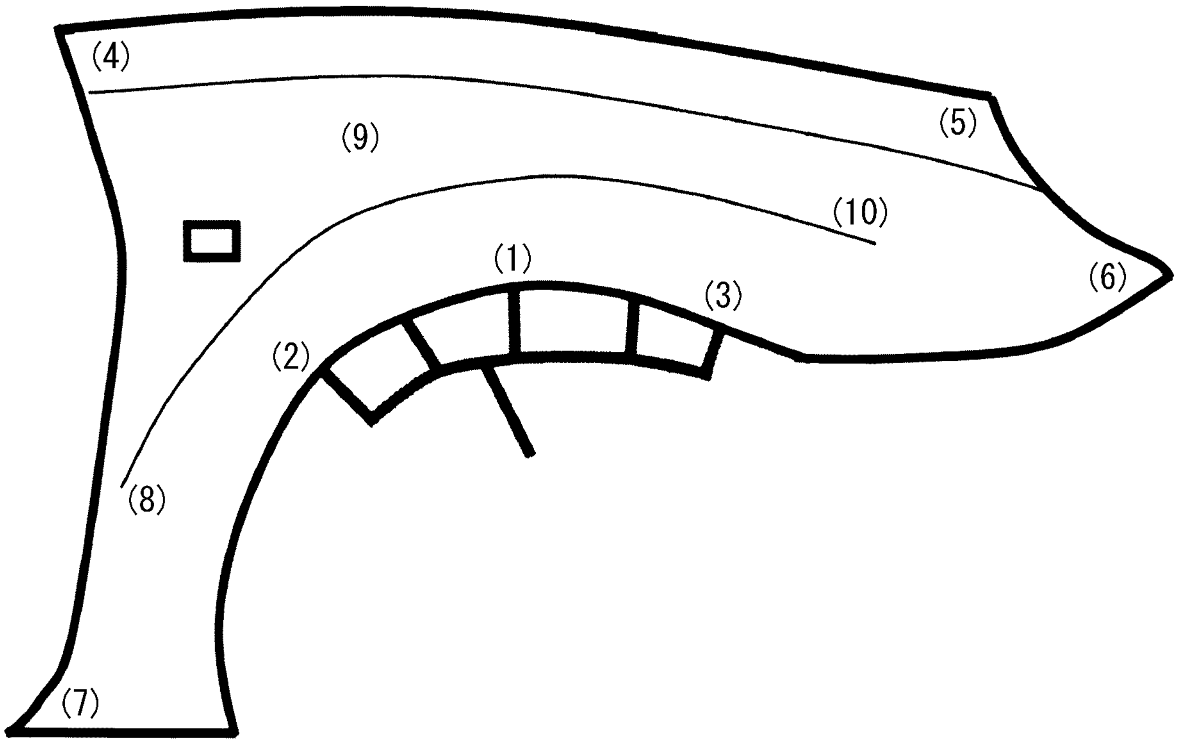

## INTERNATIONAL SEARCH REPORT

International application No.
PCT/JP2020/039985

A. CLASSIFICATION OF SUBJECT MATTER

C08L 1/00(2006.01)i; C08L 1/02(2006.01)i; C08L 1/12(2006.01)i; C08L 23/08(2006.01)i; C08L 29/04(2006.01)i; C08L 53/02(2006.01)i; C08L77/00(2006.01)i; C08L77/02(2006.01)i; C08L77/06(2006.01)i; C08L71/12(2006.01)i; C08K 3/04(2006.01)i

FI: C08L77/00; C08L71/12; C08L1/00; C08L53/02; C08L77/02; C08L1/02; C08L1/12; C08L23/08; C08L29/04 S; C08L77/06; C08K3/04

According to International Patent Classification (IPC) or to both national classification and IPC

B. FIELDS SEARCHED

Minimum documentation searched (classification system followed by classification symbols)
C08L1/00; C08L1/02; C08L1/12; C08L23/08; C08L29/04; C08L53/02; C08L77/00; C08L77/02; C08L77/06; C08L71/12; C08K3/04

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
JSTPlus/JST7580/JSTChina (JDreamIII); CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X | WO 2018/123150 A1 (ASAHI KASEI CORPORATION) 05 July 2018 (2018-07-05) claims 1, 19, paragraphs [0019], [0024], [0297], [0465], example C28 | 1, 19, 20, 22-24, 27-28 |
| Y | claims 1, 19, paragraphs [0019], [0024], [0297], [0465], example C28 | 2-28 |
| Y | JP 2015-120891 A (ASAHI KASEI CHEMICALS CORP.) 02 July 2015 (2015-07-02) paragraphs [0004], [0106], [0177]-[0187] | 2-25, 27, 28 |
| Y | JP 2006-273984 A (TORAY INDUSTRIES, INC.) 12 October 2006 (2006-10-12) claims, paragraphs [0030], [0091], example 9 | 25, 27, 28 |
| Y | JP 2007-284647 A (MITSUBISHI ENGINEERING-PLASTICS CORPORATION) 01 November 2007 (2007-11-01) claims, examples, paragraph [0024] | 26-28 |

☐ Further documents are listed in the continuation of Box C.   ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 02 December 2020 (02.12.2020) | 15 December 2020 (15.12.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/039985

| Patent Documents referred in the Report | Publication Date | Patent Family | Publication Date |
|---|---|---|---|
| WO 2018/123150 A1 | 05 Jul. 2018 | EP 3447085 A1 claims 1, 19, paragraphs [0020], [0026], [0339], [0555], example C28<br>KR 10-2018-0098576 A claims 1, 19, paragraphs [0037], [0080], [0471], [0931], example C28<br>CN 108884272 A claims 1, 19, paragraphs [0037], [0098], [0493], [0959], example C28 | |
| JP 2015-120891 A | 02 Jul. 2015 | US 2015/0183991 A1 paragraphs [0004], [0131], [0202]-[0212]<br>CN 104650580 A paragraphs [0004], [0208], [0300]-[0312] | |
| JP 2006-273984 A | 12 Oct. 2006 | (Family: none) | |
| JP 2007-284647 A | 01 Nov. 2007 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2002094936 A
- WO 2006077818 A
- JP 2006199748 A
- JP 7228775 A
- JP 2003055549 A
- JP 1163262 A
- JP 4012283 B
- JP 60035006 A
- JP 60035007 A
- JP 60035008 A
- JP 5155930 A
- JP 3163088 A
- US 5272236 A


### Non-patent literature cited in the description


- The Japan Wood Research Society. 2000, 92-97
- *Cellulose,* 1998, vol. 5, 153-164